(19) Europäisches Patentamt
European Patent Office
Office européen des brevets

(11) EP 2 895 842 B1

(12) EUROPEAN PATENT SPECIFICATION

(45) Date of publication and mention
of the grant of the patent:
**08.11.2017 Bulletin 2017/45**

(51) Int Cl.:
***G01N 21/31*** *(2006.01)* ***G01J 3/42*** *(2006.01)*
***G01J 3/427*** *(2006.01)*

(21) Application number: **13837545.6**

(22) Date of filing: **10.09.2013**

(86) International application number:
**PCT/FI2013/050870**

(87) International publication number:
**WO 2014/041240 (20.03.2014 Gazette 2014/12)**

(54) **MEASUREMENT OF GASEOUS COMPOUNDS USING SPECTROSCOPY**

MESSUNG VON GASFÖRMIGEN VERBINDUNGEN MITTELS SPEKTROSKOPIE

MESURE DE COMPOSÉS GAZEUX PAR SPECTROSCOPIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2012 FI 20125947**

(43) Date of publication of application:
**22.07.2015 Bulletin 2015/30**

(73) Proprietor: **Valmet Technologies Oy
02150 Espoo (FI)**

(72) Inventors:
• **SORVAJÄRVI, Tapio
37550 Lempäälä (FI)**
• **TOIVONEN, Juha
33500 Tampere (FI)**

(74) Representative: **Berggren Oy, Tampere
Visiokatu 1
33720 Tampere (FI)**

(56) References cited:
**WO-A1-2009/101659      JP-A- 2007 212 145
US-A1- 2010 313 572      US-B1- 6 384 903**

• **HE Y ET AL: "Diode laser detection of iodine atom hyperfine transitions during and after infrared multiphoton excitation and dissociation of CF3I with short pulse CO2 lasers", CHEMICAL PHYSICS LETTERS, ELSEVIER BV, NL, vol. 215, no. 1-3, 26 November 1993 (1993-11-26), pages 228-236, XP026491897, ISSN: 0009-2614, DOI: 10.1016/0009-2614(93)89293-Q [retrieved on 1993-11-26]**
• **PENELOPE MONKHOUSE: "On-line spectroscopic and spectrometric methods for the determination of metal species in industrial processes", PROGRESS IN ENERGY AND COMBUSTION SCIENCE, ELSEVIER SCIENCE PUBLISHERS, AMSTERDAM, NL, vol. 37, no. 2, 10 May 2010 (2010-05-10), pages 125-171, XP028136036, ISSN: 0360-1285, DOI: 10.1016/J.PECS.2010.05.002 [retrieved on 2010-05-18]**
• **HE Y ET AL.: 'Diode laser detection of iodine atom hyperfine transitions during and after infrared multiphoton excitation and dissociation of CF3I with short pulse C02 lasers' CHEMICAL PHYSICS LETTERS vol. 215, no. 1-3, 1993, pages 228 - 236, XP026491897**
• **MILSTEIN ET AL.: 'Collisional dissociation and chemical relaxation of alkali halide molecules: 2000-4000 K' JOURNAL OF CHEMICAL PHYSICS 0021-9606 vol. 80, no. 12, 1984, pages 6025 - 6037, XP008176798**

EP 2 895 842 B1

- PENELOPE MONKHOUSE: 'On-line spectroscopic and spectrometric methods for the determination of metal species in industrial processes' PROGRESS IN ENERGY AND COMBUSTION SCIENCE vol. 37, 2011, pages 125 - 171, XP028136036
- EDELSTEIN ET AL.: 'Cross Sections for the Alkali-Metal-Halogen Molecule Reactions: Na, K, Rb, and Cs with 12*' JOURNAL OF CHEMICAL PHYSICS 0021-9606 vol. 55, no. 11, 1971, pages 5164 - 5170, XP008176803
- EHRLICH ET AL.: 'Metal-Atom Resonance-Line Lasers' IEEE JOURNAL OF QUANTUM ELECTRONICS vol. QE-16, no. 3, 1980, pages 257 - 268, XP000705025

**Description**

Field of the Invention

The invention relates to a method for measuring the content of a gaseous compound from a gas mixture using optical spectroscopy. The invention relates to a method, wherein in the gas mixture and the gaseous compound are results of a thermal process. The thermal process may be e.g. one of combustion, pyrolysis, torrefaction, and gasifying. The invention further relates to a method for measuring the profile of the content of the gaseous compound from a gas mixture using optical spectroscopy. The invention further relates to a device arranged to measure the content of the gaseous compound from the gas mixture using optical spectroscopy. The invention further relates to a device arranged to measure the profile of the content of the gaseous compound from the gas mixture using optical spectroscopy.

Background of the Invention

Environmental aspects and the increasing price of fossil fuels have increased the interest in renewable fuels in power production. One alternative, as a largely $CO_2$ neutral renewable fuel, is biomass. Biomass may be e.g. harvested as residues from forest industry. In addition, the biomass may comprise at least one of agricultural waste, peat, stubs, stumps, branches, and waste wood such as bark, wooden construction debris, and wood product residuals. Biomass may be used in a thermal process. E.g. biomass may be burned to produce energy. Alternatively, biomass may be gasified to produces synthesis gases, which may be further processed to biofuel. Still further, biomass may be treated in a pyrolysis process to produce pyrolysis gas, which may be condensed to pyrolysis oil. Still further, biomass may be treated in a torrefaction process to produce biocoke, which may be utilized elsewhere in combustion and/or gasification processes. These thermal processes produce a mixture of various gases, e.g. flue gas, synthesis gas, pyrolysis gas, or torrefaction gas. The content of a specific gaseous compound in the gases is often of interest because of various reasons. E.g. flue gases, as the results of combustion of biomass, cause corrosion and slagging problems in combustion boilers. Known causes of the problems include alkali halide vapors and alkali hydroxide vapors, which are formed during combustion. In order to quantify the corrosion problem, the halide and/or hydroxide content of the flue gases needs to be measured. In addition to these compounds, metal chlorides such as $PbCl_2$, metal carbonates such as $K_2CO_3$, and metal sulfates such as $K_2SO_4$ may cause similar problems.

In general, optical spectroscopy may be utilized to measure the content of harmful gases from the gases. Methods include absorption spectroscopy, wherein the attenuation of light is measured. As different gaseous compounds absorb light differently, the attenuation spectrum may be used to deduce the content of different gaseous compounds. The sensitivity of the method is relatively low, being in the ppm (parts per million, $10^{-6}$) range. This is partly due to low absorption of the gases and partly due to fluctuations in the flue gas.

Optical methods include also those based on Excimer Laser Induced Fluorescence. In these methods, the alkali chloride molecules are dissociated, and the released alkali atom is excited using an excimer laser. As the alkali atom relaxes from the excited state, a photon is emitted. The wavelength of the photon corresponds to the alkali species and the alkali content is measured from the emission spectrum. In principle, the sensitivity of the method is in the ppb (parts per billion, $10^{-9}$) range. However, in a combustion environment, scattering of light e.g. from soot particles, dilutes the sensitivity of the methods.

The document US 6,384,903 discloses two-photon absorption measurements made at various points remote from monitoring apparatus. The lasers are tuned such that the sum of the energies of the photons in laser beams equals that associated with one single predetermined transition.

Y. He *et al.* have measured hyperfine transitions of iodine atom during and after infrared multiphoton excitation and dissociation of $CF_3I$, as published in in Chem. Phys. Lett. (vol. 215, n. 1, 2, 3, p. 228).

Summary of the Invention

A method for measuring the spatial profile of the content of a gas compound in a gas mixture is presented and defined in claim 1. The method is especially useful in cases, where the gas mixture is a product gas of a thermal process. By the method, a sensitivity in the ppb ($10^{-9}$) range can be achieved.

In addition, a method for measuring the content of a gas compound in a gas mixture, and the oxygen content of the gas mixture is presented. The method is especially useful in cases, where the gas mixture is a product gas of a thermal process.

An embodiment of the method for measuring the profile of the content of a gas compound in a gas mixture comprises

- generating a light beam (170), wherein the light beam (170) comprises photons having a beam wavelength ($\lambda_b$), and

- guiding at least part of the light beam (170) to a first optical path (160) such that at least part of the photons of the light beam (170) travel the first optical path (160) in a first direction, wherein
- the first optical path (160) runs through a space (110) containing the gas mixture comprising the gas compound, whereby the light beam (170) is attenuated to an attenuated light beam (175).

The embodiment further comprises

- generating at least a last light pulse (710, 710a), wherein the last light pulse (710, 710a) comprises photons (515, 515b) having a first pulse wavelength ($\lambda_{p1}$),
- transforming (i.e. dissociating, ionizing), using the last light pulse (710, 710a) or a sequence of light pulses (710, 710a, 710b, 710c), at least part of the gas compound (510) atoms, molecules, ions, or radicals, to at least a first part (520), wherein the sequence of light pulses (710, 710a, 710b, 710c) comprises at least the last light pulse (710, 710a),
- selecting the beam wavelength ($\lambda_b$) such that the beam wavelength ($\lambda_b$) corresponds to an absorption profile of the first part (520),
- guiding at least part of the last light pulse (710, 710a) or at least part of a light pulse (710, 710a, 710b, 710c) of the sequence of light pulses to the first optical path (160), such that the photons (515, 515b) of the guided part of the light pulse travel in a second direction, wherein
- the second direction is reverse to the first direction,
- detecting a first profile ($I_k(t)$) indicative of the intensity of the attenuated light beam (175) as function of time, and
- determining, using the first profile ($I_k(t)$) indicative of the intensity of the attenuated light beam (175) as function of time, the profile ($\xi_G(x)$) of content of the gas compound on the first optical path (160).

Other features of the method are summarized in the appended examples 2 to 27.

An embodiment of the method for measuring the oxygen content of gas mixture comprises the features of example 28. Other features of the method are summarized in the appended examples 29 to 32.

Furthermore, a device for measuring the profile of the content of a gas compound from a gas mixture has been presented. The device comprises

- a light beam source (310), arranged to generate a light beam (170) comprising photons having a beam wavelength ($\lambda_b$) and
- a photodetector (320), wherein
- a first optical path (160) is arranged optically between the photodetector (320) and the light beam source (310),
- a space (110), through which the first optical path (160) is arranged to run, is arranged to contain the gas mixture absorbing the light beam (170),
- the light beam (170) is arranged to be attenuated to an attenuated light beam (175) by said absorption of the light beam (170), and the device comprises
- means for guiding at least part of the light beam (170) to the first optical path (160) such that at least part of the photons of the light beam (170) travel in a first direction.

The device further comprises

- at least a first light pulse source (700, 700a), wherein
- the first light pulse source (700, 700a) is arranged to generate a last light pulse (710, 710a) comprising photons (515) having a first pulse wavelength ($\lambda_{p1}$), at least part of the photons (515) transforming at least part of (i) gas compound (510) atoms, molecules, ions, or radicals, (ii) pre-excited gas compound (510b) atoms, molecules, ions, or radicals, (iii) transformed parts (530, 534), or (iv) pre-excited transformed parts (530, 534) on the first optical path (160) to at least first part (520) atoms, molecules, ions, or radicals, whereby the light beam (170) is further attenuated to the attenuated light beam (175) by absorption to first part (520) atoms, molecules, ions, or radicals on the first optical path (160), wherein the transformed parts (530, 534) have optionally been produced from the gas compound (510) atoms, molecules, ions, or radicals by transformation (i.e. dissociation, ionization) using at least one another light pulse, wherein
- the light beam source (310) is arranged to emit a light beam (170) comprising photons having a beam wavelength ($\lambda_b$) that corresponds to an absorption profile of the first part (520), and the device further comprises
- means for guiding at least part of the last light pulse (710, 710a) or at least part of another light pulse (710b, 710c) to the first optical path (160), such that the photons (515, 515b) of the guided part of the last light pulse (710, 710a) or the photons (516, 517) of the guided part of the another light pulse (710b, 710c) travel in a second direction, wherein
- the second direction is reverse to the first direction, and

- the photodetector (320) is arranged to detect a first profile ($I_k(t)$) indicative of the of the intensity of the attenuated light beam (175) as function of time, and
- the device (990) comprises a data processing unit (910) arranged to determine, using the first profile ($I_k(t)$) indicative of the of the intensity of the attenuated light beam (175) as function of time, the profile of the gas compound content in the gas mixture on the first optical path (160).

Other features of the device are presented in the appended examples 34 to 52. The device may be integrated in a thermal device, as disclosed in the appended examples 53 to 57.

An embodiment of a device for measuring the oxygen content of a gas mixture comprises the feature of the example 58. Other features of the device are summarized in the appended examples 59 and 60.

<u>Description of the Drawings</u>

| | |
|---|---|
| Fig. 1a | shows a light beam travelling along an optical path, a first part atom, molecule, ion, or radical, to which the light beam is attenuated, and an attenuated light beam, |
| Fig. 1b | shows, in addition to the items of Fig. 1a, a gas compound atom, molecule, ion, or radical that is dissociated, in addition to the first part, to a second part, |
| Fig. 1c | shows, a light beam travelling along an optical path, whereby the light beam may be attenuated and an attenuated light beam, |
| Fig. 2a | shows the dissociation of a potassium chloride molecule to a potassium atom and a chlorine atom using one photon of an optical pulse, |
| Fig. 2b | shows the dissociation of a gas molecule to a first part and a second part using two photons of two optical pulses, |
| Fig. 2c | shows the ionization of an atom to a first pat (ion) and a second part (electron) using one photon of an optical pulse, |
| Fig. 2d | shows the excitation of an atom to an excited atom (first part) using one photon of an optical pulse, |
| Fig. 3a | shows the absorption cross section of potassium chloride as function wavelength, |
| Fig. 3b | shows the absorption cross section of potassium atom as function of wavelength, |
| Fig. 4 | shows a measurement signal obtainable from a device of any of the figs. 7a - 7b in the time scale of one second, in the time scale of ten milliseconds, and in the time scale of hundred microseconds, |
| Fig. 5a | shows the profile of the gas content and some components of a device for the measuring the profile of the gas content in a gas mixture, |
| Fig. 5b | shows a first profile $I_k(t)$ indicative of the intensity of the attenuated light beam 175 as function of time, as measured from the set-up of Fig. 5a, |
| Fig. 5c | shows the time derivative of the first profile of Fig. 5b, wherein the time derivative bears evidence of the profile of the gas content of Fig. 5a, |
| Fig 6 | shows a first profile $I_k(t)$ indicative of the intensity of the attenuated light beam 175 as function of time, |
| Fig. 7a | shows a device for measuring the profile of the gas content and the content of a gas compound in a gas mixture, |
| Fig. 7b | shows a device for measuring the content of a gas compound and the content of oxygen in a gas mixture, |
| Fig. 7c | shows a device for measuring the content of a gas compound and the profile of the gas content in a gas mixture, |
| Fig. 7d | shows a device for measuring the content of a gas compound and the profile of the gas content in a gas mixture, |
| Fig. 7e | shows a device for measuring the content of a gas compound and the profile of the gas content in a gas mixture, |
| Fig. 8a | shows the dissociation of a lead chloride molecule to a lead atom and to two chlorine atoms using two optical pulses, |
| Fig. 8b | shows the intensity of an attenuated light beam having the wavelength $\lambda_b$ and the intensities of the two light pulses having the wavelengths $\lambda_{p1}$ and $\lambda_{p2}$, |
| Fig. 9a | shows a device for measuring the content of a gas compound and the profile of the gas content in a gas mixture, wherein the device is capable of emitting two dissociative optical pulses, |
| Fig. 9b | shows a device for measuring the content of a gas compound and the profile of the gas content in a gas mixture, wherein the device is capable of emitting two dissociative optical pulses, |
| Fig. 9c | shows a device for measuring the content of a gas compound and the profile of the gas content in a |

gas mixture, wherein the device is capable of emitting two dissociative optical pulses,

Fig. 9d          shows a device for measuring the content of a gas compound and the profile of the gas content in a gas mixture, wherein the device is capable of emitting two dissociative optical pulses,

Fig. 9e          shows a device for measuring the content of a gas compound and the profile of the gas content in a gas mixture, wherein the device is capable of emitting two dissociative optical pulses,

Fig. 10          shows the dissociation of a chromium (tri) chloride molecule to a chromium atom and to three chlorine atoms using three optical pulses,

Fig. 11a          shows a device for measuring the profile of the content of a gaseous compound, arranged partly in a boiler,

Fig. 11b          shows a device for measuring the oxygen content, arranged partly in a boiler

Fig. 12          shows a boiler and possible locations for optical measurements within the boiler, and

Figs. 13a to 13f          show some optical paths between an optical inlet and an optical outlet of a gas mixture container.

Detailed Description of the Invention

A method and a device for measuring the content of a gas compound in a gas mixture and the profile of the content of the gas compound in the gas mixture is presented. The term gas mixture refers to a mixture comprising at least one gas compound. The term gas compound refers to a substance that is in its gaseous or vapor form in the measurement temperature and pressure. Typically a gas mixture comprises several gas compounds. In addition, the gas mixture may comprise solid and liquid compounds, such as particles or droplets.

The gas mixture may be e.g. a result of a thermal process. The thermal process may be e.g. one of combustion, pyrolysis, torrefaction, and gasifying. In particular, the temperature of the gas mixture may be relatively high, e.g. from 300 °C to 1300 °C. However, the method is applicable also in room temperature, and below. E.g. the gas mixture may have a temperature greater than -50 °C. The at least one gas compound of the gas mixture is in its gaseous state in the temperature and the pressure. Other compounds may be is liquid or solid state, as discussed above. The content of the gas compound of the gas mixture may be measured with the method that will be disclosed, e.g. by using a device that will be disclosed. Moreover, the profile of the content of the gas compound may be measured with the method that will be disclosed, e.g. by using a device that will be disclosed. Still further, the oxygen content the gas compound may be measured with the method that will be disclosed, e.g. by using a device that will be disclosed.

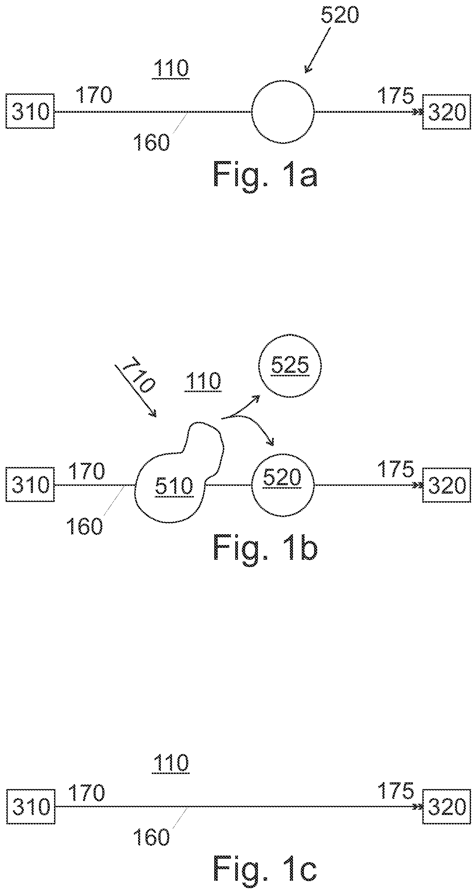

Measurement is based on absorption spectroscopy. Referring to Fig. 1a, in the method, a light beam 170 is generated, the light beam 170 is guided through the gas mixture to be measured, along an optical path 160, whereby a part of the light is absorbed and scattered by the gas mixture, whereby the light beam 170 is attenuated to an attenuated light beam 175. The first optical path is located in a space 110. The term "optical path" refers to the path of the light beam in the space 110. In case the beam 170 is guided to the space outside from the space, the optical path 160 refers to the part in the space that the light beam travels. It is evident that the space 110 contains the gas mixture and the gas compound.

The intensity of the attenuated light beam 175 is measured. In particular, the light beam 170 may be attenuated by absorption to some atom, molecule, ion, or radical 520. The atom, molecule, ion, or radical 520 is referred to as a "first part". The term "profile of the content of the gas compound" refers to the content of the gas compound as function of location on the optical path 160. The profile of the content of the gas compound is measured in a discrete sense, and the spatial resolution will be discussed below.

Referring to Fig. 1b, in the method, the first part 520 is a result of dissociation, ionization or excitation of a gas compound molecule 510, wherein the gas compound 510 atom, molecule, ion, or radical is comprised by the gas compound of which content is measured. The gas compound is comprised by the gas mixture, as discussed above. In addition to the first part 520, the gas compound molecule 510 may be dissociated to a second part 525. In addition to the first part 520, the gas compound molecule 510 may be ionized to a second part 525. If the gas compound 510 is excited, only the first part is made in the process. The dissociation, ionization, or excitation may be done using an optical pulse 710. The process of dissociation, ionization, or excitation will be referred to as transformation. As will become clear, the dissociation, ionization, or excitation, may be done in a single step, or in multiple steps by subsequently dissociating dissociation products. Moreover, dissociation may be done by directly from a ground state or by pre-exciting the gas molecule to an excited state before dissociation. The first part 520 may be produced by one of:

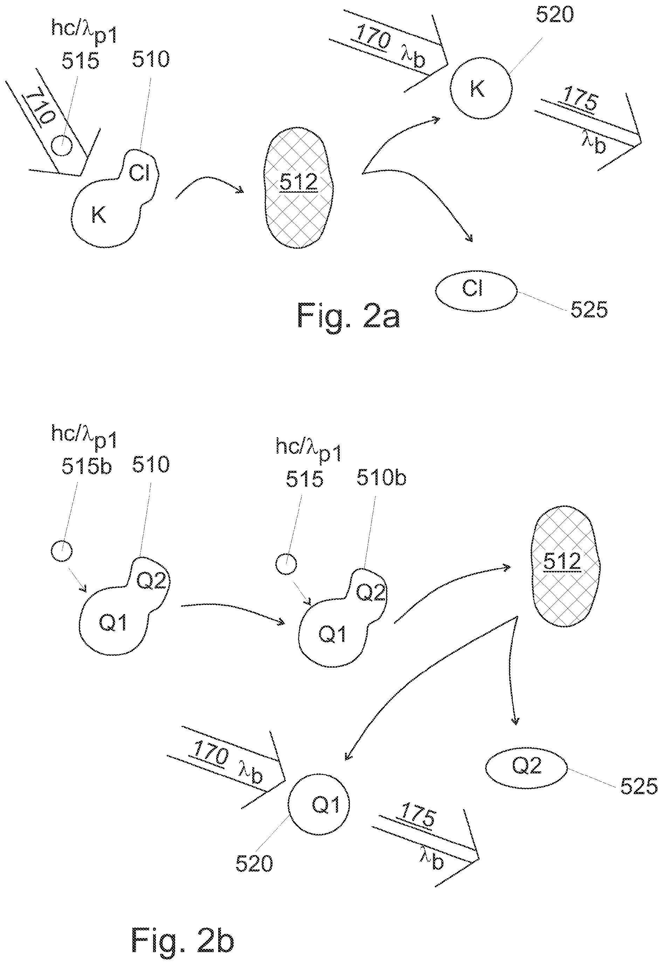

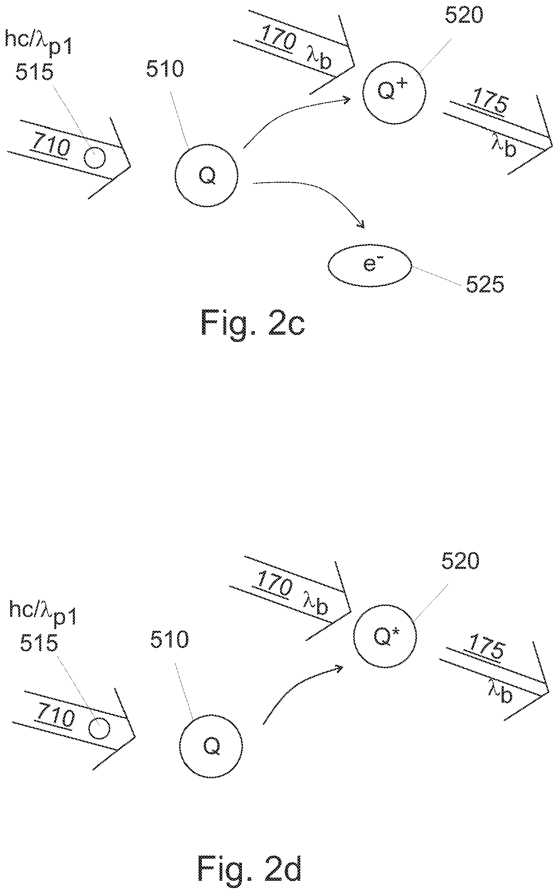

- dissociating the gas compound 510 or the pre-excited gas compound 510b to the first part 520 and the second part 525 (Figs. 2a and 2b),
- ionizing the gas compound 510 or the pre-excited gas compound 510b to the first part 520 thereby releasing at least one electron (Fig. 2c),
- exciting the gas compound 510 or the pre-excited gas compound 510b to the first part 520 (Fig. 2d).

Referring to Fig. 1c it is noted that the light beam 170 is attenuated to an attenuated light beam 175 even if a first part atom, molecule, ion, or radical 520 is not present on the optical path 160. The light beam may attenuate e.g. by scattering to impurities or absorption to other atoms, molecules, ions, or radicals.

The measurement is based on absorption spectroscopy. The method comprises:

- generating a light beam 170, wherein the light beam 170 comprises photons having a beam wavelength $\lambda_b$,
- guiding the light beam 170, or a part of the light beam 170, to a first optical path 160, wherein

    o the first optical path 160 runs through a space 110 containing the gas mixture, whereby the light beam 170 is attenuated to an attenuated light beam 175, and

- determining a first value indicative of a first intensity $I_{k0}$ of the attenuated light beam 175.

The first value indicative of a first intensity $I_{k0}$ of the attenuated light beam 175 may be determined from a first profile first profile $I_k(t)$ indicative of the intensity of the attenuated light beam 175 as function of time.

The light beam may comprise photons having multiple wavelengths. Preferably the light beam is monochromatic. As will become clear, in an embodiment the light beam consists of photons having a first wavelength and photons having a second wavelength. A light beam source arranged to generate the light beam may comprise at least one laser.

*Measurement principle, single-step dissociation, ionization, or excitation*

To overcome the problems indicated in the background, the sensitivity of the measurements is increased in two ways:

    (1) by increasing absorption of the gas mixture corresponding to the wavelength(s) of the light beam 170, and
    (2) by shortening the measurement time in order to obtain temporarily stationary measurement conditions.

The absorption at a specific wavelength may be increased in one of three ways:

    (i) By dissociating the molecules 510 of the gas compound on the first optical path 160 to two parts: the first part 520 and the second part 525. The first part 520 may be an atom, a molecule, and ion, or a radical. The term radical refers to an atom, a molecule, or an ion with unpaired electrons or an open shell configuration. These unpaired electrons may cause radicals to be highly chemically reactive. The second part 525 may be an atom, a molecule, an ion, or a radical. At least one of the first part 520 and the second part 525 may be in an excited state or in a relaxed state.
    (ii) By ionizing the gas compound 510 atom, molecule, ion, or radical to a first part 520, and to a second part, wherein the second part comprises at least one electron. The first part 520 may be an atom, a molecule, and ion, or a radical.
    (iii) By exciting the gas compound 510 atom, molecule, ion, or radical to a first part 520. After this excitation, the absorption wavelength and/or the absorption cross section of the first part is different from the gas compound 510 atom, molecule, ion, or radical.

The dissociation process is schematically shown in Fig. 2a for potassium chloride. In the embodiment, the gas molecule 510 is dissociated to two parts using a light pulse 710. In Fig. 2a, the potassium chloride molecule 510 is first excited to a molecule 512 in a dissociative state by using a light pulse 710. The light pulse 710 comprises photons 515 having a wavelength $\lambda_{p1}$. This photon 515 also has the energy $hc/\lambda_{p1}$. The energy is generally relatively high, i.e. the wavelength $\lambda_{p1}$ is short. High energy is needed to excite the gas molecule 510 to the molecule 512 in the dissociative state. The light pulse 710 need not to be monochromatic. Preferably the light pulse 710 is monochromatic or essentially monochromatic and has a first pulse wavelength $\lambda_{p1}$.

Referring to Fig. 2b, the molecule may alternatively be dissociated to at least two parts using two photon excitation or multiple photon excitation. In Fig. 2b, the gas molecule 510 is dissociated to two parts using a light pulse 710 such that the gas molecule 510 is excited to the dissociative state with at least two photons of the pulse or with at least two photons of at least two pulses. In Fig. 2b, the gas molecule 510 comprises the first part Q1 and the second part Q2. The gas molecule 510 is first pre-excited to a pre-excited state 510b, such as an energy state or a virtual state, with a photon 515b of an optical pulse, such as the optical pulse 710. Thereafter, the pre-excited gas molecule 510b is further excited to the dissociative state 512 with another photon 515 of the optical pulse 710. The dissociative state 512 dissociates to the first part 520 (Q1) and the second part 525 (Q2). This pre-excitation may be referred to as "two photon excitation". As for sake of clarity, the pulse that comprises the photons 515 that excite the pre-excited gas molecule 510b to the dissociative state 512 may be referred to as the last light pulse. Moreover, as the molecule 512 in the excited, dissociative, state dissociates, the light pulse may be referred to as a dissociative light pulse.

Even if not shown in the figures 2a and 2b, a gas compound molecule 510 comprising three atoms may be excited with at least one photon (515, 515b) to an excited state 512 such that it dissociates to three parts. For example $PbBr_2$ can be excited, e.g. with one photon, to the dissociative state 512 such that the dissociative state dissociates to Pb, Br, and Br. The content of $PbBr_2$ may thereafter be determined by measuring the attenuation of light beam 170 to the lead atoms. Thus, the dissociation of the gas compound to a first part and a second part does not exclude the possibility of dissociation to the first part, the second part, and a further part.

One advantage of the method is that the absorption cross section of the first part 520 at a wavelength may be e.g. $10^5$ to $10^6$ times greater than the absorption cross section of the gas compound molecule 510. In this way, the sensitivity of the method is significantly increased. In a preferred embodiment, a gas compound molecule is dissociated.

In the dissociative state, the molecule 512 is unstable, meaning that the molecule dissociates to the first part 520 and the second part 525. Referring to Fig. 2a, the first part 520 may refer to a potassium atom. Referring to Fig. 2a, the second part 525 may refer to chlorine atom.

Referring to Fig. 2c, the gas compound 510 atom, molecule, ion, or radical may be ionized. A positive ion may be further ionized. A negative ion may be ionized to an atom. In ionization, at least one electron $e^-$ is removed from the gas compound 510 atom, molecule, ion, or radical Q, whereby the absorption properties of the gas molecule 510 or atom are modified. In this embodiment, the gas compound 510 atom, molecule, ion, or radical is divided to at least two parts:

- a first part 520, wherein the first part 520 is the ionized atom or ionized gas molecule $Q^+$, and
- a second part 525, wherein the second part 525 comprises an electron.

In general, a gas compound 510 may be divided to the first part 520 and the second part 525. The gas compound 510 may consist of atoms, molecules, ions or radicals. The gas compound may be divided by dissociation or ionization, as discussed.

Referring to Fig. 2d the gas compound 510 atom, molecule, ion, or radical is not necessarily divided. The gas compound 510 atom, molecule, ion, or radical is excited to the first part 520, wherein the first part is the excited gas compound. This improves the selectivity of absorption spectroscopy. For example, in case the gas mixture comprises a first gas compound and a second gas compound, wherein the absorption wavelengths of the first gas compound and the second gas compound are equal, the contents of these compounds cannot be individually measured using absorption spectroscopy at a specific wavelength. However, in case at least one of these compound is first excited, the absorption properties of the excited gas compounds are most likely different. Thus the selectivity of the method is improved. However, the absorption cross section of an excited atom is not necessarily significantly more than the absorption cross section of the gas compound. Therefore, the sensitivity of the method is not necessarily significantly improved. Ionization (Fig. 2b) may have the same benefits as excitation.

For example the copper (Cu), lead (Pb), and antimony (Sb) all have an absorption peak at the wavelength of about 217 nm. In case the gas mixture comprises vapors of at least two of these metals, and one of them is to be detected, the copper (Cu), lead (Pb), and antimony (Sb) atom may be ionized or excited. The ionized or excited atoms have different absorption wavelengths, whereby the method may be selectively applied to any one of these metals, provided that the beam wavelength is selected such that the beam wavelength corresponds to an absorption peak of ionized or excited copper (Cu), lead (Pb), and antimony (Sb) atom (or ion).

The absorption spectrum, i.e. the absorption wavelength in particular, of the ionization, excitation, or dissociation induced first part 520 may be different from the absorption spectrum on the gas compound 510. Therefore, the allows for the selection of the light sources, i.e. the light beam source and the light pulse source, according to the absorption spectrum of the ion (i.e. first part 520). Therefore, the availability of the light sources may be significantly better and/or the price of the light sources may be significantly less, wherein the light sources are used in the device arranged to perform the method comprising transforming (dissociating, ionizing, or exciting) the gas compound 510 to at least the first part 520, as compared to absorption spectroscopy applied directly to the gas compound 510.

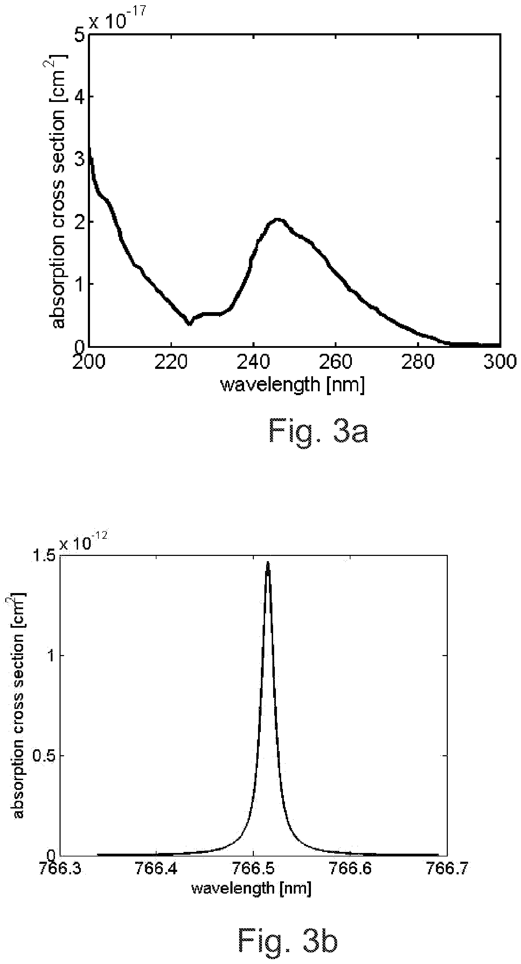

The pulse wavelength (or pulse wavelengths in case on two or multiple photon excitation with at least two pulses) is selected so as to dissociate, ionized or excite the gas compound molecule 510 to at least the first part 520. Figure 3a shows the absorption cross section for potassium chloride. Referring to Fig. 3a, for example in the case a potassium chloride molecule 510 is to be dissociated, a light pulse comprising photons having a wavelength shorter than about 320 nm may be used. Within this spectrum, the absorption cross section is positive, indicating that the molecule can be excited with the photon. In an embodiment a pulse laser having the wavelength $\lambda_{p1}$ = 266 nm was used to dissociate the potassium chloride molecules.

For other alkalihalides, the light pulse may comprise photons of which energy is sufficient for dissociating at least some alkalihalide molecules. For alkali iodides, a photon having the wavelength of 420 nm or less may dissociate the alkalihalide molecule. For alkali bromides, a photon having the wavelength of 370 nm or less may dissociate the alkalihalide molecule. For alkali chlorides, a photon having the wavelength of 320 nm or less may dissociate the alkalihalide molecule.

For the case of sodium hydroxide (NaOH), the pulse wavelength $\lambda_{p1}$ is preferably from 300 nm to 340 nm, e.g. about 310 nm. In an embodiment, a pulse laser having a wavelength of 315 nm was used as the light pulse source, to dissociate the sodium hydroxide molecules. In another embodiment, a pulse laser having a wavelength of 330 nm was used as the light pulse source.

In the method and/or the device, the wavelength(s) of the light beam is selected such that the light beam 170 comprises photons having the wavelength $\lambda_b$. Moreover, the wavelength $\lambda_b$ is selected such that it corresponds to the absorption profile of the first part 520. The wavelength $\lambda_b$ corresponds to the absorption profile provided that the absorption cross section of the first part 520 (Figs. 2a to 2d) and for the wavelength $\lambda_b$ is greater than 1/1000 (one thousandth) of the maximum absorption cross section for the first part 520. Preferably the first wavelength $\lambda_b$ corresponds to the wavelength of absorption maximum. Moreover, the light beam 170 used for measurements comprises photons having the beam wavelength, but may comprise photons having other wavelengths.

As the wavelength(s) of the light pulse and the light beam are such selected, after dissociation, ionization, or excitation, the light beam 170 is attenuated to the attenuated light beam 175, among other things, due to the absorption to the first part 520, as depicted in Figs. 1a, 1b, 2a and 2b. It is noted, however, the gas molecules 510 on the first optical path 160 do not significantly absorb the light beam 170; significantly meaning in comparison to the absorption to the first part 520 atoms molecules, ions, or radicals.

Referring to Fig. 2a, the first part may be a potassium atom. Fig. 3b shows the absorption profile for atomic potassium in air. More specifically, Fig. 3b shows the absorption cross section for atomic potassium, released from KCl, in air as a function of wavelength in the temperature of 600 °C and pressure of 1 atm. The location, shape, and height of the peak depends on the first part to be measured; Fig. 3b serves here as an example. As seen from Fig. 3b, for potassium a wavelength $\lambda_b$ may be used, wherein $\lambda_b$ may be selected from the range 766.5 nm ± 0.15 nm. Preferably the wavelength $\lambda_b$ is selected to be close to the wavelength corresponding the peak shown in Fig. 3b. For example, the a suitable range may be 766.515 nm ± 0.01 nm. Potassium is known to have also other absorption peaks, of which wavelength may also be used as the beam wavelength. These wavelengths include 766.5 nm, about 770 nm and about 404 nm. Values reported in literature may be given for potassium in vacuum, and may therefore deviate slightly from these values.

As seen from Figs. 3a and 3b, the absorption cross section of a potassium atom (e.g. at the wavelength 766.5 nm) can be about $10^5$ times greater than the absorption cross section of potassium chloride molecule (e.g. at the wavelength 250 nm). For this reason, the sensitivity of the method for gas molecules may be significantly increased by dissociation.

In case a sodium halide (e.g. NaCl) or sodium hydroxide (NaOH) is measured, the beam wavelength should correspond to the absorption peak of sodium. Even if not shown in the figures, in these cases the beam wavelength may be selected from the group of: from 588.99 nm to 589.05 nm; 589.6 nm; 330 nm; 285 nm; and 818 nm. The last of these values (818 nm) corresponds to an absorption peak of excited sodium.

The selectivity of the absorption of light beam to the first part 520 is utilized in the embodiments of the invention. Since the absorption cross section has at least one well defined peak, absorption spectroscopy at this precise wavelength produces accurate results. Without dissociation, the gas compound (e.g. KCl or NaOH) does not have such a highly wavelength specific absorption profile.

The location (i.e. wavelength) of the absorption peak depends on pressure. Moreover, the first part 520, as obtained by dissociating a molecule, has a large velocity, since part of the energy released in the dissociation is transformed to the kinetic energy of the first part. Therefore, the wavelength for the first part atom corresponding to the absorption peak may be slightly different from the values typically presented literature for the same atom, ion, molecule or radical, since the dissociation, ionization, or excitation induced first part 520 atom, ion, molecule or radical may have larger velocity than ambient similar dissociation product. Still further, depending on the energy of the dissociative light pulse 710 (or pulses), the first part 520 may be in an excited state. Therefore, the beam wavelength $\lambda_b$ may correspond to the absorption profile of the first part in the excited state. The beam wavelength $\lambda_b$ may correspond to the absorption profile of the first part 520 in the ground state. The light source used to generate the light beam is preferably tunable such that the wavelength can be accurately tuned to correspond the absorption profile, e.g. a peak in the absorption profile.

Many metals have an absorption peak at a wavelength of less than 1800 nm. Therefore, in an embodiment the beam wavelength is at most 1800 nm. However, some molecules have absorption peaks at the wavelengths of up to 20 μm. Thus, in some embodiments, the beam wavelength is at most 20 μm.

The gas compound molecules 510 are transformed (i.e. dissociated, ionized, or excited) to at least the first parts 520 using at least one light pulse 710. The light pulse 710 comprises photons of which energy is sufficient for transforming at least some gas compound atoms, molecules, ions, or radicals. The light pulse 710 may comprise photons having a wavelength of less than 430 nm. It is noted that the energy of a photon having this wavelength is 2.88 eV. Therefore, the light pulse 710 may comprise photons capable of exciting the compound molecules 510 to a dissociative state 512 having an energy of at least 2.88 eV above the ground state. However, referring to Fig. 2b, also photons having a longer wavelength are capable of exciting the compound molecules to a dissociative state having an energy on at least 2.88 eV above the ground state, provided that the gas compound molecule 510 is excited to the dissociative state 512 via an intermediate excited state 510b (energy state or virtual state) using at least two photons (515, 515b). The wavelengths of the at least one photon (515, 515b) may be selected such that the at least one photon is/are capable of exciting the gas compound molecule to a dissociative state having an energy of at least 2.88 eV above the ground state. The wavelength(s) of the photon(s) 515 or 515 and 515b are selected according to the exciting sequence. The exciting sequence may refer to the required subsequent energy quanta, by which the compound molecules 510 are excited to the dissociative state 512. The exciting sequence may alternatively refer to the required subsequent energy quanta, by which the gas compound 510 atoms are ionized or excited to the first parts 520. The exciting sequence may refer to the required subsequent energy quanta, by which the gas compound 510 atom, molecule, ion, or radical is dissociated, ionized or excited to at least the first parts 520.

The term "ground state" above may refer to a minimum energy state. The term "ground state" may refer to the state, wherein the gas compound molecules are before excitation or dissociation. The "ground state" in the measuring environment may be different from the "ground state" in another temperature. Moreover the "ground state" may refer to the state of the dissociated parts after dissociation.

The dissociation process is not sensitive to the wavelength, provided that the wavelength is short enough. However, the absorption spectrum of a gas compound molecule is indicative of a probability for a photon having a wavelength to be absorbed by the gas molecule. Thus, even if dissociation is not sensitive to the wavelength, dissociative photons having a wavelength may dissociate more molecules than the same number of dissociative photons having a different wavelength. Therefore, the light pulse 710 is not necessarily monochromatic. However, the light pulse 710 may be essentially monochromatic, whereby the light pulse may consist of photons having the same wavelength. The corresponding light pulse source may comprise a laser.

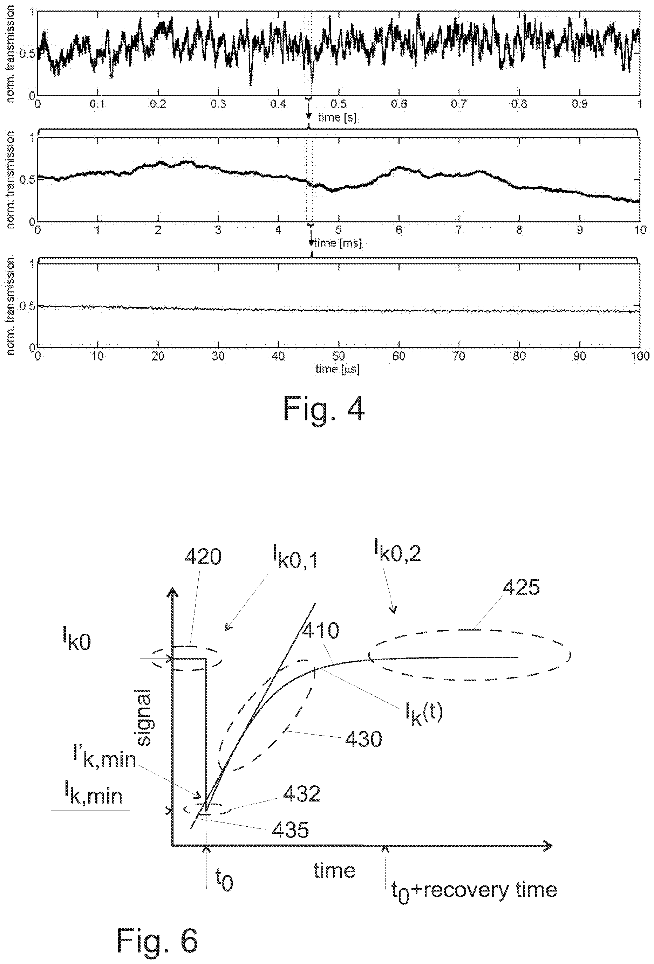

The gas mixture comprising the gas compound may be a result of a thermal process. In particular, the thermal process may be continuous, whereby the gas mixture may flow in a pipe, duct or channel. The gas mixture may comprise various amounts of different gas compounds and liquid or solid particles. Therefore, the intensity of the attenuated light beam 175 fluctuates. The fluctuations tend to affect the accuracy of measurements. E.g. with absorption spectroscopy for flue gases, the flue gases may contain various amounts of solid particles travelling across the optical path 160, thereby affecting intensity of the attenuated light beam 175. Fluctuations are clearly seen in a time scale of the order of a second (s). Figure 4 illustrates these fluctuations. In Fig. 4 the normalized intensity of the attenuated light beam 175 is shown for three time scales. First (topmost part), for a long time scale of 1 second; second (middle part), for an intermediate time scale of 10 milliseconds; and third (bottommost part), for a short time scale of 100 microseconds. In the longest time scale, the normalized signal fluctuates between about 0.2 and 1.0. In the intermediate time scale, the normalized signal fluctuates between about 0.2 and 0.7. In the short time scale, the normalized signal is practically constant (0.5). Thus it is seen that shortening the time scale for measurement decreases the fluctuations, and in this way increases the accuracy of the measurements. It is noted, that if the flow velocity of the flue gas is e.g. 10 m/s, the particles in the flue gas travel only 10 $\mu$m in a microsecond. Thus, if the size of the light beam is significantly larger than, say 10 $\mu$m, the fluctuations diminish. Therefore, a short time scale in combination with a relatively wide light beam diminishes fluctuations.

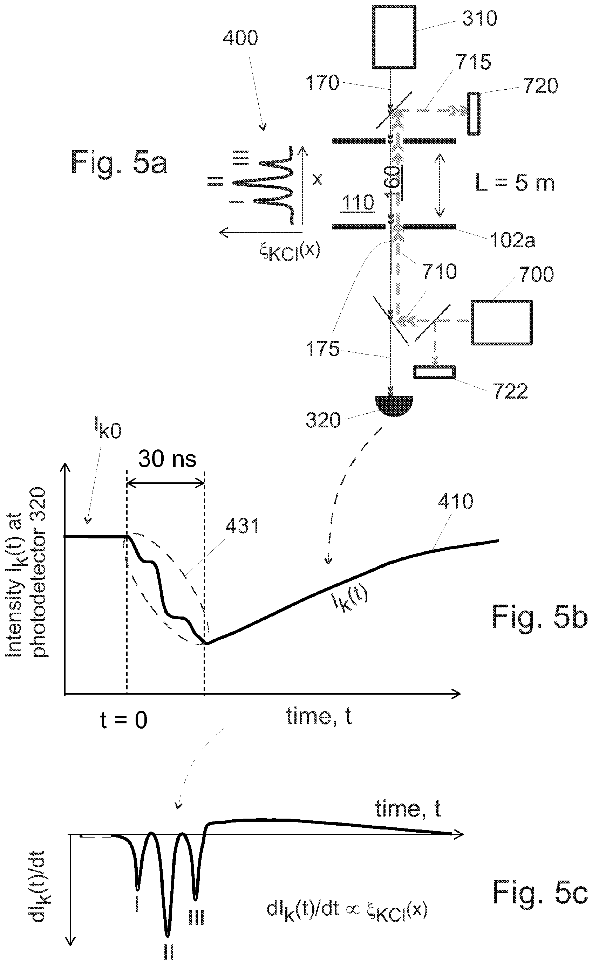

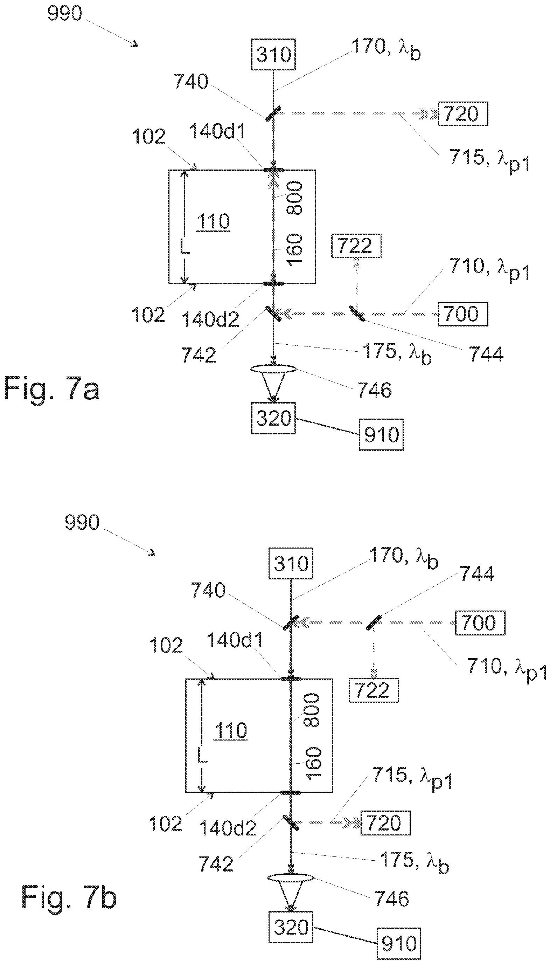

Figure 4 shows the signal at the photodetector 320 (cf. e.g. Fig. 5a or 7a for the photodetector) in measurements, where the intensity of the light beam 170 is kept constant. In the figures, the signal of the photodetector 320 is proportional to the intensity of the attenuated light beam 175. In case the photodetector 320 has a nonlinear response, the intensity level may be deduced from the signal level using calibration information for the photodetector.

Referring to Figs. 5b and 6, the light pulse may dissociate part of the gas compound molecules to the first part and the second part at the time $t_0$, which shows as a sharp drop in the curve 410. A similar drop is observable, for the cases of ionization or excitation. The signal returns to its initial level relatively rapidly. The time in which the signal returns to its original level is referred to as the recovery time. Referring to Fig. 6, the recovery time may be of the order of 2 $\mu$s. The period, in which first part atoms, molecules, ions, or radicals are located on the first optical path 160, the first part having been produced by transforming the gas compound atoms, molecules, ions, or radicals, is correspondingly referred to as the recovery period. During the recovery period, the intensity of the attenuated light beam 175 has further decreased, as compared to the situation before the recovery period, due to the first parts 520 of the gas compound 510 that are located on the first optical path 160.

The method comprises detecting a first profile 410 (Figs. 5b and 6) indicative of the intensity of the attenuated light beam 175 as function of time. The first profile is denoted by $I_k(t)$. The first profile indicative of the intensity is indicative of the intensity during the recovery period, i.e. immediately or essentially immediately after dissociating the gas molecules i.e. after dissociating at least part of the gas compound molecules 510 on the first optical path 160. The first profile indicative of the intensity may be indicative of the intensity before the recovery period, i.e. before dissociating a gas molecule 510.

The first profile may be filtered. For example, instead of the measured signal, a moving average of the signal may be used as the first profile. Alternatively or in addition, outliers can be excluded from the measurements. It is also noted that the photodetector 320 may be inverting. In that case the first profile increase even if the intensity of the attenuated light beam 175 decreases.

Three parts of the first profile $I_k(t)$ may be utilized in measurements:

- the left part (431 in Fig. 5b) of the first profile corresponding to the intensity decrease due to the dissociation process, wherein the profile 410 changes rapidly, may be used to determine the (spatial) profile of the content of the gas compound on the first optical path 160, provided that an optical pulse (the pulse 710 or another pulse as will be discussed) and the beam 170 are travelling in the opposite directions on the first optical path 160,
- the local minimum, extrapolated local minimum, or a calculated local minimum (e.g. 432 in Fig. 6) of the first profile 410 may be used to determine the content of the gas compound on the first optical path 160, regardless of how the beam 170 and pulse are mutually oriented, and
- the right part (430 in Fig. 6) of the first profile corresponding to the intensity increase due to the reaction processes after dissociation, wherein the profile 410 changes, may be used (in some cases, as will be discussed) to determine the oxygen content of the gas mixture on the first optical path 160, regardless of how the beam 170 and pulse are mutually oriented.

The oxygen content may be measured at least in cases where potassium chloride molecules are dissociated to potassium and chlorine atoms.

Figure 5a shows some components of a device for measuring the profile of the content of the gas compound. Figure 5a shows a light beam source 310, a photodetector 320 arranged to detect the intensity of the attenuated light beam, a light pulse source 700, a photodetector 722 arranged to detect the energy of the light pulse, a photodetector 720 arranged to detect the energy of the attenuated light pulse, and the first optical path 160 in the space 110. On the first optical path 160, the content of the gas compound varies. The variation, i.e. the profile of the content of the gas compound 400 is shown as the function $\xi_{KCl}(x)$, wherein $\xi_{KCl}$ is the potassium chloride content, and x is the location on the first optical path 160. In the figure $0\,m \leq x \leq 5\,m$, since, in the figure, the length of the optical path is 5 m. The symbols "I", "II", and "III" are used to denote the high gas contents on the optical path (cf. also Fig. 5c).

The light beam source 310 generates the light beam 170, which attenuates to the attenuated light beam 175. The light beam is shown with a black solid line in Fig. 5a. The arrows indicate the propagation direction of the light beam (170, 175).

The light pulse source 700 generates the light pulse 710, which attenuates to the attenuated light pulse 715. The light pulse is shown with a gray dotted line in Fig. 5a. The arrows indicate the propagation direction of the light pulse (710, 715).

As discussed above, the beam 170 wavelength $\lambda_b$ is selected to so as to correspond to the absorption profile of the first part 520 (e.g. potassium atom) in the ground state or in an excited state. Thus, the dissociation shows in intensity of the attenuated light beam 175. Namely, the intensity decreases, corresponding to the amount of dissociated gas molecules (first parts 520) on the first optical path 160. This is shown in Fig. 5b. The profile 410 shows an example of a first profile indicative of the intensity of the attenuated light beam 175 as function of time. The first profile 410 is denoted by $I_k(t)$.

Figure 5a shows a light beam 170 travelling along a first optical path 160 in a space 110 that contains the gas mixture, wherein the gas mixture comprises the gas compound 510, and the content of the gas compound is non-uniform along the optical path 160. A dissociative light pulse 710 propagates along the first optical path 160, thereby dissociating the gas molecules 510 to the first parts 520. As depicted in the figure, the direction on the light pulse 710 is reverse to the direction of the light beam 170. In Fig. 5a the light beam (170, 175) and the light pulse (710, 715) are depicted with arrows that are not co-centric. However, as will be discussed, preferably lasers are used as light sources 310, 700 and the optical paths are co-centric. For example, the beam 170 and the pulse 710 travel along the same optical path, but in opposite directions.

When the light pulse 710 has not entered the space 110, the light beam 170 is not attenuated by the first part 520 atom, molecules, ions, or radicals induced by the light pulse 710. The light beam may be attenuated by other processes, as will be discussed. At some time t the photons of the light pulse 710 have entered the space 110, and travelled a distance x within the space 110, but not propagated through the space 110 (i.e. the distance x is shorter than the length of optical path L, cf. fig. 5a). At this time, the a part of photons of the light beam 170 have travelled a distance L-x on the first optical path 160. At this time, the photons of the pulse 710 have *not* travelled the same part of the optical path as the part of the photons of the light pulse 170, i.e. the rest L-x of the optical path 160. Therefore, the part of the photons of the light beam 170 is only affected by absorption to the first parts 520 on the optical path 160 *by the length* x. As time advances, the length x increases by the speed of light, finally reaching the length L of the whole optical path 160. In this way, as the light pulse 710 propagates, the absorption length for the light beam 170 increases.

The result is depicted in Fig. 5b. In particular, if the light pulse 710 enters the space 110 at a time such that the photons of the light beam travelling from this point to the photodetector 320 arrive at the photodetector 320 at time t=0, the intensity of the attenuated light beam 175 starts to decrease at the time t=0. Note that it takes some time for the light beam to propagate from the space 110 to the photodetector 320. It is further noted that the as the pulse 710 travels in a second direction (e.g. upwards) and the beam 170 travels in a first direction (e.g. downwards), the intensity decrement at the time t is related to the gas content at the position ct/2, wherein c is the speed of light. This is because during time t the pulse 710 may first travel a distance ct/2, thereby dissociating some gas molecules, and the beam may travel the distance ct/2 back.

Since the first parts 520 decrease the intensity of the attenuated light beam 175, the profile of the content of the gas compound is related to the time derivative of the intensity profile $I_k(t)$. This is schematically shown in Fig. 5c. Fig. 5c shows the time derivative of the intensity profile $I_k(t)$. As depicted in the figure, the time derivative $dI_k(t)/dt$ has a shape that is similar to the profile of the gas content 400 (Fig. 5a). Details of this relation will be provided later (Eqns. 5 - 8). The symbols "I", "II", and "III" are shown to further illustrate the dependence on the profile 400 of the gas content (Fig. 5a).

In the above discussion, it is assumed that the lifetime of the dissociation induced first part 520 is long. Long meaning here in comparison to the temporal duration, $t_p$, of the pulse 710. The duration $t_p$ of the pulse 710 will also determine a spatial resolution, as will be discussed. Since the beam 170 and the pulse 710 travel in opposite directions, the duration of the pulse, as observed at the photodetector 320, from the decrement of the intensity, is twice the duration, i.e. $2t_p$. Since the first parts 520 may recover to the gas compounds 510 as function of time, wherein the frequency (number in time) of the recovering first parts decreases exponentially, the lifetime of the dissociation induced first part 520 should be several times this value. For the application of the method, in the lifetime of the transformation induced first part 520 may be at least $20t_p$, preferably at least $200t_p$. Conversely, and since one cannot easily affect the lifetime of the dissociation induced first part 520, the duration of the light pulse may be selected to be short in comparison to the lifetime of the transformation induced first part 520. Here the word "short" is understood to mean that the above relation applies. For example, for a pulse 710 having the duration 1 ns, the lifetime of the first part 520 should be preferably at least 200 ns.

In case the lifetime is shorter, part of the first parts 520 react, recombine or move away from the optical path 160 during the propagation of the pulse 710 and/or the beam 170, which affects the measurements. For short lifetimes, a light beam comprising light pulses may be used, as will be discussed.

Preferably the interval between the light pulses is selected such that only one dissociative light pulse exists on the first optical path 160 at a time. Therefore, only one pulse at a time dissociates the gas molecules 510, whereby the location wherein the dissociation takes place is known with the accuracy of the (spatial) length of the pulse. When only one dissociative optical light pulse exists on the first optical path 160 at a time, the time between two subsequent dissociative pulses should be at least 2L/c. For example, if the length L (cf. Fig. 7a) of the first optical path is 6 m, the time between two subsequent pulses should be at least 40 ns. This time refers to the time between the end of a first dissociative pulse and the beginning of a subsequent dissociative pulse. The time between two subsequent pulses could be significantly more. In case two or multiple photon excitation is used, at least the time between the dissociative pulses should be selected as described above. The time between a pre-exciting, but non-dissociative, light pulse and a dissociative light pulse could be significantly smaller. The length of pulse will be discussed below.

A device may measure the intensity at the photodetector 320 at some time intervals. The interval defines a sampling frequency. The interval may be e.g. from 10 ps to 10 ns. As an example, the sampling frequency may be 1 GHz, whereby the time interval is 1 ns. In this time, a light pulse can propagate a distance of about 30 cm. However, in the method the light pulse 710 proceeds in the opposite (reverse) direction to the light beam 170 (cf. Fig. 7a). Therefore, during this interval, a light pulse may travel 15 cm, transform a gas compound, whereby the light beam attenuates, and the further attenuated light beam 175 can travel another 15 cm. Therefore, a first spatial resolution is this case is about $(15\ cm)^{-1}$. The term "first spatial resolution" is here used, since the actual resolution may be decreased by other factors, as will be discussed. The term "resolution" in this case is given in terms of the inverse of the length, since in general, the denser the measurement interval, the better resolution. The first spatial resolution is therefore given as $res_1 = (2/c) \times (1/\Delta t)$, wherein $1/\Delta t$ is the sampling frequency, and $\Delta t$ is the time between two measurements. Using a time interval of 10 ps (sampling frequency 100 GHz) increases the first spatial resolution to $(1.5\ mm)^{-1}$. Using a time interval of 10 ns (sampling frequency 100 MHz) decreases the first spatial resolution to $(1.5\ m)^{-1}$. In many practical cases, the vessel from which measurements are made have the size of some meters. Therefore, decreasing the sampling frequency even more would lead to too low spatial resolution in comparison to the size of the vessel. However, theoretically there is no lower limit for the sampling frequency. Preferably the sampling frequency is selected such that at least five (5) points are available for the determination of the profile. In this case the sampling frequency is at least $(5c)/(2L)$.

The spatial resolution depends, on the other hand, on the (temporal) duration of the light pulse 170. The (temporal) duration of the pulse defines the (spatial) length of the light pulse, since the pulse travels at the speed of light. For example a 1 ns pulse has the spatial length of about 30 cm. Since the beam 170 and pulse 710 travel in the opposite direction, the resolution becomes twice as good as proposed only by the spatial length of the pulse. Therefore, a second spatial resolution is related to the length of the pulse as $res_2=(\frac{1}{2}ct_p)^{-1}$, wherein $t_p$ is the (temporal) duration of the pulse. The second spatial resolution, as defined above, is approximately equal to inverse of half of the spatial length of the pulse. Therefore, by increasing the duration of the pulse, the length of the pulse increases, and the second spatial resolution decreases. For example, for 1 ns pulse the second spatial resolution is about $(15 \text{ cm})^{-1}$. For example, for 10 ns pulse the second spatial resolution is about $(1.5 \text{ m})^{-1}$. For example, for 10 ps pulse the second spatial resolution is about $(1.5 \text{ mm})^{-1}$. Preferably the second spatial resolution is selected such that $L\times res_2\geq 5$. More preferably the second spatial resolution is selected such that $L\times res_2\geq 10$. Thereby, preferably the duration of the pulse $t_p$ is at most $(2L)/(5c)$.

The overall spatial resolution obtainable from the measurements is the smaller of the first and the second spatial resolutions. For example, a 1 GHz sampling frequency gives the first spatial resolution of $(15 \text{ cm})^{-1}$, and a 1 ns light pulse gives the second spatial resolution of $(15 \text{ cm})^{-1}$. Thus overall spatial resolution is about $(15 \text{ cm})^{-1}$. Preferably the (spatial) length of the pulse is at most one fifth (1/5) of the length L of the first optical path. Moreover, preferably the sampling frequency is selected such that only the length of the pulse limits the measurement resolution. Generally in signal processing, the sampling frequency should be twice the physical frequency. Therefore, preferably $\Delta t\leq\frac{1}{2}t_p$. Even more preferably the sampling frequency is high enough to enable some data processing (e.g. filtering and averaging), whereby even more preferably $\Delta t<t_p/10$.

Having described the principle, it is apparent that the method for measuring the profile of the content of a gas compound from a gas mixture further comprises:

- guiding at least part of the light beam 170 to a first optical path 160 such that at least part of the photons of the light beam 170 travel the first optical path 160 in a first direction,
- generating a last light pulse 710, wherein the last light pulse 710 comprises photons having a first pulse wavelength $\lambda_{p1}$,
- transforming (i.e. dissociating, ionizing) at least part of the gas compound 510 atoms, molecules, ions, or radicals or pre-excited gas compound 510b atoms, molecules, ions, or radicals (or pre-excited or relaxed atoms, molecules ions or radicals produced by transformation of the gas compound 510 or the pre-excited gas compound 510b, as will be discussed) on the first optical path 160 to at least a first part 520, using the last light pulse 710, whereby the light beam 170 is further attenuated to the attenuated light beam 175 by absorption to the first part 520 of the gas molecule 510 on the first optical path 160,
- guiding at least part of the last light pulse 710 (or at least part of another light pulse 710b, 710c) to the first optical path 160, such that the guided photons 515, 515b of the last light pulse 710, 710a (or the guided photons of the another light pulse 710b, 710c) travel in a second direction, wherein
- the second direction is reverse to the first direction,
- detecting a first profile $I_k(t)$ indicative of the intensity of the attenuated light beam 175 as function of time, and
- determining, using the first profile $I_k(t)$ indicative of the intensity of the attenuated light beam 175 as function of time, the profile of content of the gas compound on the first optical path 160.

The "another light pulse 710b, 710c" will be defined later. The dissociation of "excited or relaxed atoms, molecules ions or radicals produced by transformation of the gas compound or the pre-excited gas compound" will be discussed later.

More specifically, the method comprises detecting a first profile indicative of the intensity of the attenuated light beam 175 as function of time, wherein

- the profile $I_k(t)$ comprises at least one value indicative of the indicative of the intensity $I_{k0}$ of the attenuated light beam 175 before or after the recovery period, and
- the profile $I_k(t)$ comprises values indicative the attenuated light beam 175 during the recovery period, i.e. when the attenuated light beam 175 is further attenuated by the first part 520 atoms, molecules, ions, or radicals on the first optical path 160.

Here the first profile $I_k(t)$ indicative of the intensity of the attenuated light beam 175 as function of time refers to a time series of measurements of the intensity. In practice, the profile comprises the values $I_k(t_1)$, $I_k(t_2)$, $I_k(t_3)$, ... $I_k(t_N)$ indicative of the intensity of the attenuated light beam 175 at different instances of time ($t_i$, i=1, 2, 3, ..., N). Typically the temporal difference between the instances in constant, i.e. $t_{i+1}-t_i=\Delta t$ for all i=1, ..., N-1. Here N is the number of values indicative of the intensity of the attenuated light beam 175 of the first profile $I_k(t)$ indicative of the intensity of the attenuated light beam 175. The number N is preferably large, e.g. at least ten. N may be e.g. at least five, at least ten, at least twenty, at least fifty, or at least hundred.

It has also been noticed, that, in addition to the decreasing part 431 of the intensity profile 410 (Fig. 5b), a value $I_{k,min}$ indicative of the local minimum of the intensity profile $I_k(t)$ may be used to determine the total content of the gas compound. This observation applies, if the recovery time of the signal is long enough. As the signal recovers exponentially, the recovery time should be at least several times the time of flight of the light pulse and light beam along the first optical path. For example, the recovery time could be at least $20 \times L/c$. More preferably, the recovery time is at least $200 \times L/c$. The value indicative of the local minimum may be used for this purpose, even if the pulse 710 and the beam 170 travel in the same direction. Figure 6 shows an example of a measurement, wherein the pulse and the beam are such oriented (cf. Fig. 7b). As the pulse propagates in the same direction as the beam, the profile $I_k(t)$ drops sharply at the time $t_0$.

The value $I_{k,min}$ may be a local minimum value of the first profile 410. The value $I_{k,min}$ may be an average of several measured signals near the local minimum, as shown in the figure 6 with the reference number 432. The value $I_{k,min}$ may be calculated by fitting a function to the measured data, particularly to the increasing part of the measured data. From this fit, the value of $I_{k,min}$ may be interpolated or extrapolated, e.g. as a minimum value of the fitted function. The fitted function may be a line, an exponential function or a polynomial. E.g. In Fig. 6, a straight line 435 is fitted to the profile $I_k(t)$ 410, particularly to the increasing part 430 of the data. A extrapolated value $I'_{k,min}$ is calculated for the time $t_0$ using this line 435. Extrapolation may be needed, if the signal fluctuates a lot. In addition to the local minimum value, a value $I_{k0}$ indicative of the intensity of the attenuated light beam 175 when no transformation induced first parts 520 are present on the first optical path.

A value $I_{k0}$ indicative of a reference intensity at the photodetector 320 is also determined. The value $I_{k0}$ may refer to a value $I_{k0,1}$ indicative of the intensity before, preferably just before, the light pulse enters the space 110, as depicted with the reference number 420 in Fig. 6. Signal averaging may be used to determine $I_{k0}$. The value $I_{k0}$ may alternatively refer to a value $I_{k0,2}$ indicative of the intensity after the recovery period, as depicted with the reference number 425 in Fig. 6. Signal averaging may be used to determine $I_{k0}$. The content of the gas compound on first optical path may be calculated from $I_{k,min}$ and $I_{k0}$ as will be discussed later. The extrapolated value $I'_{k,min}$ may be used in the calculations as the minimum value $I_{k,min}$ with good accuracy. As one technical advantage of the method is the short measurement time, preferably the intensity $I_{k0}$ is measured right before the dissociative light pulse (in Fig. 6 from the part 420 of the intensity profile as denoted by $I_{k0,1}$).

The method for measuring the content of a gas compound from a gas mixture may comprise determining a first value $I_{k0}$ indicative of a first intensity of the attenuated light beam 175. The first value indicative of a first intensity $I_{k0}$ of the attenuated light beam 175 is detected by the photodetector 320. The first value indicative of a first intensity $I_{k0}$ of the attenuated light beam 175 may be determined from the first profile $I_k(t)$ indicative of the intensity of the attenuated light beam 175 as function of time.

It has further been noticed that the increasing part 430 (Fig. 6) of the first profile $I_k(t)$ 410 indicative of the intensity of the attenuated light beam 175 as function of time can be used to determine the oxygen content of the gas mixture. This was noticed in the case, wherein the gas compound 510 is potassium chloride KCl that dissociates such that the first part 520 is potassium atom, K. Similar observations may be expected for situation, wherein the gas compound 510 comprises potassium in a compound that dissociates such that the first part 520 consists of potassium K, either excited or relaxed potassium. In an embodiment, the first part 520 consists of individual potassium atoms, which are not bound to each other. As will become evident, potassium may be dissociated from some compounds using at least two subsequent light pulses.

The method may be applicable to also some other dissociable gas compounds. In particular, the method may be applicable to gas compound that comprise alkali metal, whereby the gas compound molecule comprises at least one alkali metal atom. The term alkali metal atom will be defined elsewhere.

It has been noticed that the first profile $I_k(t)$ 410 may increase exponentially as function of time. I.e. the difference $I_{k0}-I_k(t)$ may decrease in time as $I_k(t)=I_{k0}\{exp[-\alpha L \times exp(-t/\tau)]\}$, wherein $\alpha$ is an attenuation factor for the Beer-Lambert law (cf. Eq.1) and $\tau$ is a time constant for the recovery process (compare to "recovery time" as defined above). Note that here the time t is zero at the time corresponding to the intensity minimum. More specifically, the equation for $I_k(t)$ applies only for the increasing part of the intensity. Thus, in this case the time is slightly different from the time defined elsewhere (e.g. Eq. 5). The exponential dependence is expected, because the first parts 520 (potassium atom, in particular) on the first optical path 160 may react with oxygen. Thus, the greater the amount of oxygen in the gas mixture, the more rapidly the first profile changes back to its final value, which final value may be approximately equal or equal to the first value indicative of the first intensity $I_{k0}$ of the attenuated light beam 175.

More specifically, it was noticed that the time constant $\tau$ for the recovery process is proportional to $1/(N_{O2}/V)$, wherein V is a volume and $N_{O2}$ is the number of atoms in the volume. Thus, the time constant $\tau$ is inversely proportional to the absolute oxygen content, wherein the of absolute oxygen content is $N_{O2}/V$ (having the unit of e.g. molecules/m$^3$). In a given pressure, the number of gas molecules in a volume decreases as temperature increases, as proposed by the ideal gas law. From the ideal gas law, $pV=NkT$, one may write $(N/V)=(1/k) \times p/T$, wherein k is the Boltzmann constant, p is the pressure and T is the temperature. Therefore, it is seen that the absolute content $N_{O2}/V$ is directly proportional to pressure and inversely proportional to temperature. The time constant $\tau$ can be deduced from the first profile $I_k(t)$ e.g. by fitting an exponential function to the increasing part 430 of the profile. The form of the exponential function is given above.

Table 1 shows some observed time constants for some oxygen concentrations and for potassium, that is dissociated from potassium chloride. As can be seen from the table, the presence (and the content) of oxygen clearly decreases the time constant for the recovery process. By calibration measurements, the time constant for the recovery process can be correlated to various oxygen contents. It is understood that the time constant $\tau$ may depend also on the gas compound 510 and/or on the first part 520. The time constant depends on temperature, as shown in the Table 1. Moreover, the time constant $\tau$ may further depend on pressure, as discussed above. The values in the Table 1 correspond to normal pressure, i.e. 1 bar(a).

Table 1. Time constant for the recovery process for potassium dissociated from potassium chloride as function of oxygen content of the gas mixture.

| $T \downarrow$ ; $O_2 \rightarrow$ | 21 v-% | 10 v-% | 5 v-% | approx, 0v-% |
|---|---|---|---|---|
| 700°C | 62 ns | 130 ns | 261 ns | 1-100 ms |
| 750°C | 75 ns | 157 ns | 313 ns | 1-100 ms |
| 800°C | 87 ns | 183 ns | 366 ns | 1-100 ms |

It is noted that for measurements of oxygen content the light beam and the light pulse may be arranged to travel in the same direction. This is the case in Fig. 6, wherein the left part, i.e. the decreasing part, of the profile $I_k(t)$ decreases rapidly. This is because in this case photons of the light beam that are affected by the dissociated the first parts 520 are *all* affected by the first parts 520 within the *whole length* of the first optical path, since the photons of the light pulse travel together with the photons of the light beam. In contrast, when the beam and the pulse are directed in the opposite directions, a part of the photons of the light beam 170 are affected by the dissociated first parts 520 only a short distance, when the pulse 710 has *not* travelled the *whole length* of the first optical path 160. The corresponding device is shown in Fig. 7b.

Having described the principle, it is apparent that the method for measuring the oxygen content of a gas mixture further comprises:

- generating a last light pulse 710, wherein the last light pulse 710 comprises photons having a first pulse wavelength $\lambda_{p1}$,
- transforming (dissociating, ionizing) at least part of the gas compound 510 atoms, molecules, ions, or radicals or pre-excited gas compound 510b atoms, molecules, ions or radicals (or pre-excited or relaxed atoms, molecules, ions or radicals produced by transformation of the gas compound or the pre-excited gas compound) on the first optical path 160 to at least a first part 520, using the last light pulse 710, whereby the light beam 170 is further attenuated to the attenuated light beam 175 by absorption to the first part 520 of the gas molecule 510 on the first optical path 160,
- detecting a first profile $I_k(t)$ indicative of the intensity of the attenuated light beam 175 as function of time, and
- determining, using the first profile $I_k(t)$ indicative of the intensity of the attenuated light beam 175 as function of time, the profile of content of the gas compound on the first optical path 160.

In the method

- the profile $I_k(t)$ may comprise at least one value indicative of the indicative of the intensity $I_{k0}$ of the attenuated light beam 175 before or after the recovery period, and
- the profile $I_k(t)$ comprises values indicative the attenuated light beam 175 during the recovery period, i.e. when the attenuated light beam 175 is further attenuated by the first part 520 atoms, molecules, ions, or radicals on the first optical path 160. The number of values indicative the attenuated light beam 175 during the recovery period is preferably large.

The light beam 170 may also comprise light pulses. Thus, the light beam source 310 may be a pulse light source. When a pulse light source is used as the light beam source 310, the values at the photodetector 320 are detected when the attenuated light beam 175 illuminates the photodetector. Conversely, if light pulses are used as the light beam 170, the photodetector 320 detects periodically very small values corresponding to the times, when the attenuated light beam 175 is off. Relevant values for the method may be obtained when the attenuated light beam 175 illuminates the photodetector 320.

If the temporal duration of the light pulse of the beam 170 is at least of the same order as the recovery time, the measurement can be performed as discussed above, by timing the dissociative pulse such that at least the decreasing part 431 of the intensity profile 410 (Fig. 5b) becomes measured.

When the temporal duration of the light pulse of the beam 170 is short and the lifetime of the dissociated first part 510 is long, by proper timing of the pulses of the beam 170 and the dissociative pulse 710 the point, wherein these pulses collide can be controlled. The light beam will be further attenuated by attenuation to first parts 520 only from this point forward, because the long lifetime means that the first parts 520 on the first optical path from this point forward in the direction of the light beam will remain as the dissociated first part while the light beam travels. By selecting a multiple of different collision points for the pulse of the beam and the dissociative pulse, the profile can be calculated.

The attenuated intensity before the dissociative pulse 710 can measured with another light pulse of the beam 170 before dissociating molecules on the first optical path. The point, wherein the pulse 710 and the latter pulse of the beam 170 collide can be controlled by timing the latter pulse of the beam.

When the temporal duration of the light pulse of the beam is short and the lifetime of the dissociated first part 520 is short, by proper timing of the pulses of the beam 170 and the dissociative pulse 710 the point, wherein these pulses collide can be controlled. The light beam will be further attenuated by attenuation to first parts 520 only at this point, because the short lifetime means that the first parts 520 on the first optical path from this point forward in the direction of the light beam have reacted to different compounds or relaxed to another energy state. By selecting a multiple of different collision points for the pulse of the beam 170 and the pulse 710, the profile can be calculated.

The attenuated intensity before the pulse 710 can measured with another light pulse of the beam 170 before dissociating molecules on the first optical path. The point, wherein the pulse 710 and the latter pulse of the beam 170 collide can be controlled by timing the latter pulse of the beam. The time difference between the pulses of the light beam should not be large in comparison to the lifetime of the dissociated first part 520. In an embodiment, the time difference between the pulses of the light beam is less than 1 s. In a preferred embodiment, the time difference between the pulses of the light beam is less than 10 $\mu$s.

Part of the first profile $I_k(t)$ is detected during the recovery period. Moreover, during the recovery period, the intensity of the attenuated light beam 175 has been further attenuated by absorption of the light beam 170 to the transformation induced first parts 520 on the first optical path 160. As only one type of light pulses 710 are used, the light pulse 710 can be considered the last light pulse, if necessary.

It is also possible to detect the profile of the content and/or the content of two different gas compounds using a light pulse that transforms (i.e. dissociates, ionizes) atoms, molecules, ions or radicals of a first gas compound and atoms, molecules, ions or radicals of a second gas compound. Thus, the light pulse transforms the atoms, molecules, ions or radicals of the first gas compound to at least first first parts. Furthermore, the light pulse transforms the atoms, molecules, ions or radicals of the second gas compound to at least second first parts. As an example, a light pulse may dissociate both sodium hydroxide and potassium hydroxide molecules. The resulting first first part may refer to a sodium atom and the second first part may refer to a potassium atom. Both a first second part and a second second part refers in this case to the hydroxide molecule.

The wavelengths of the light beam 170 may be selected such that the light beam comprises photons corresponding to a first absorption peak of the first first part and further comprises photons corresponding to a second absorption peak of the second first part. E.g. the light beam may comprise photons corresponding to an absorption peak of sodium and further comprise photons corresponding to an absorption peak of potassium.

Thus the content and/or the profile of the content of two different gas compounds may be measured with the method. If the beam and the pulse travel in the reverse direction, the profile of the content may also be measured. This embodiment comprises

- generating a light beam 170, wherein the light beam 170 comprises photons having a first beam wavelength $\lambda_{b1}$ and photons having a second beam wavelength $\lambda_{b2}$,
- guiding the light beam 170 to a first optical path 160 such that at least part of the photons of the light beam 170 travel in a first direction, wherein
- the first optical path 160 runs through a space 110 containing the gas mixture comprising the gas compounds, whereby the light beam 170 is attenuated to an attenuated light beam 175 and
- generating a light pulse 710, wherein the light pulse 710 comprises photons 515 having a first pulse wavelength $\lambda_{p1}$,
- transforming at least part of (i) first gas compound atoms molecules, ions, or radicals or (ii) pre-excited first gas compound atoms, molecules, ion, or radicals on the first optical path 160 to first first part atoms, molecules, ions, or radicals using the light pulse 710, whereby the light beam 170 is further attenuated, at the first beam wavelength $\lambda_{b1}$, to an attenuated light beam 175 by absorption to the first first part atoms, molecules, ions, or radicals on the first optical path 160,
- selecting the first beam wavelength ($\lambda_{b1}$) such that the first beam wavelength ($\lambda_{b1}$) corresponds to the absorption peak of the first first part,
- transforming at least part of (i) second gas compound atoms molecules, ions, or radicals or (ii) pre-excited second gas compound atoms, molecules, ion, or radicals on the first optical path 160 to second first part atoms, molecules, ions, or radicals using the light pulse 710, whereby the light beam 170 is further attenuated, at the second beam

wavelength $\lambda_{b2}$, to an attenuated light beam 175 by absorption to the second first part atoms, molecules, ions, or radicals on the first optical path 160,

- selecting the second beam wavelength ($\lambda_{b2}$) such that the second beam wavelength ($\lambda_{b2}$) corresponds to the absorption peak of the second first part,
- detecting a first profile $I_k(t)$ profile indicative of the intensity of the attenuated light beam (175) at the first beam wavelength $\lambda_{b1}$ as function of time,
- detecting a second profile $I2_k(t)$ profile indicative of the intensity of the attenuated light beam (175) at the second beam wavelength $\lambda_{b2}$ as function of time,
- determining, using the first profile, the content of a first gas compound content of the gas mixture, and
- determining, using the second profile, the content of a second gas compound content of the gas mixture.

The measurements of the content of the second gas compound can be done using the second profile as has been discussed for the first gas compound using the first profile. In case the pulse and the beam travel in reverse direction, the profile of the content can also be measured. The measurements of the profile of the content of the second gas compound can be done using the second profile as has been discussed for the first gas compound using the first profile.

In case the profile of the first and/or second gas compound is to be measured, the photons of the light pulse may travel in the opposite direction of the photons of the light beam, as has been discussed.

Alternatively to one light beam, two light beams may be used: A first light beam that comprises photons corresponding to a first absorption peak of the first first part; and a second light beam that comprises photons corresponding to a second absorption peak of the second first part. The first and the second light beams may propagate along the first optical path in the same direction or in the reverse direction.

Thus the content of two different gas compounds may be measured with the method. Depending on the mutual orientation of the light pulse and light beam, the profile of the content may also be measured. This embodiment comprises

- generating a first light beam 170 such that at least part of the photons of the light beam (170) travel in a first direction, wherein the first light beam 170 comprises photons having a first beam wavelength $\lambda_{b1}$,
- generating a second light beam, wherein the second light beam comprises photons having a second beam wavelength $\lambda_{b2}$,
- guiding the light beams to a first optical path 160, wherein
- the first optical path 160 runs through a space 110 containing the gas mixture comprising the gas compounds, whereby the light beams are attenuated to attenuated light beams,
- generating a light pulse 710, wherein the light pulse 710 comprises photons 515 having a first pulse wavelength $\lambda_{p1}$,
- transforming at least part of (i) first gas compound atoms, molecules, ions, or radicals or (ii) pre-excited first gas compound atoms, molecules, ions, or radicals on the first optical path 160 to first first part atoms, molecules, ions, or radicals using the light pulse 710, whereby the first light beam is further attenuated to attenuated first light beam by absorption to the first first part atoms, molecules, ions, or radicals on the first optical path 160,
- selecting the first beam wavelength ($\lambda_{b1}$) such that the first beam wavelength ($\lambda_{b1}$) corresponds to the absorption peak of the first first part,
- transforming at least part of (i) second gas compound atoms, molecules, ions, or radicals or (ii) pre-excited second gas compound atoms, molecules, ions, or radicals on the first optical path 160 to second first part atoms, molecules, ions, or radicals using the light pulse 710, whereby the second light beam is further attenuated to attenuated second light beam by absorption to the second first part atoms, molecules, ions, or radicals on the first optical path 160,
- selecting the second beam wavelength ($\lambda_{b2}$) such that the second beam wavelength ($\lambda_{b2}$) corresponds to the absorption peak of the second first part,
- detecting a first profile $I_k(t)$ indicative of the intensity of the attenuated first light beam 175 as function of time,
- detecting a second profile $I2_k(t)$ indicative of the intensity of the attenuated second light beam as function of time,
- determining, using the profile $I_k(t)$ indicative of the intensity of the attenuated light beam 175 as function of time, the content of a first gas compound content of the gas mixture, and
- determining, using the profile $I_k(t)$ indicative of the intensity of the attenuated light beam 175 as function of time, the content of a first gas compound content of the gas mixture.

In case the profile of the first gas compound is to be measured, the photons of the light pulse may travel a second direction, wherein the second direction is reverse to the photons of the first light beam, as has been discussed. In case the profile of the second gas compound is to be measured, the photons of the light pulse may travel in a direction reverse to the photons of the second light beam.

Still further, it is possible to detect the content of two different gas compounds using two light pulses such that the first light pulse dissociates molecules of a first gas compound and the second light pulse dissociates molecules of a second gas compound. Thus, the first light pulse dissociates the molecules of the first gas compound to first first parts and to first second parts. Furthermore, the second light pulse dissociates the molecules of the second gas compound to second first parts and to second second parts. As an example, a first light pulse may dissociate magnesium oxide MgO molecules and a second light pulse may dissociate magnesium sulfate $MgSO_4$ molecules. The resulting first first part may refer to a magnesium atom and the second first part may refer also to a magnesium atom. The first second part may refer to oxygen atom and the second second part may refer to a sulfate molecule.

In this case the light beam may comprise photons corresponding to the absorption peak of magnesium. However, by timing the two light pulses slightly differently, both magnesium oxide and magnesium sulphate may be measured with the method. This embodiment comprises

- generating a light beam 170, wherein the light beam 170 comprises photons having a beam wavelength $\lambda_b$
- guiding the light beam 170 to a first optical path 160 such that at least part of the photons of the light beam 170 travel in a first direction, wherein
- the first optical path 160 runs through a space 110 containing the gas mixture comprising the gas compounds, whereby the light beam 170 is attenuated to an attenuated light beam 175,
- generating a light pulse 710, wherein the light pulse 710 comprises photons 515 having a first pulse wavelength $\lambda_{p1}$,
- transforming at least part of (i) first gas compound atoms, molecules, ions, or radicals or (ii) pre-excited first gas compound atoms, molecules, ions, or radicals on the first optical path 160 to first first part atoms, molecules, ions, or radicals using the light pulse 710, whereby the light beam 170 is further attenuated to an attenuated light beam 175 by absorption to the first first part atoms, molecules, ions, or radicals on the first optical path 160,
- detecting a first profile $I_k(t)$ indicative of the intensity of the attenuated light beam 175 as function of time, and
- determining, using the first profile $I_k(t)$ indicative of the intensity of the attenuated light beam 175 as function of time, the profile of the content of a first gas compound content of the gas mixture,
- generating another light pulse, wherein the another light pulse comprises photons 515 having another pulse wavelength $\lambda_{p1,1}$,
- transforming at least part of (i) second gas compound atoms, molecules, ions, or radical or (ii) pre-excited second gas compound atoms, molecules, ions, or radicals on the first optical path 160 to second first part atoms, molecules, ions, or radicals using the another light pulse, whereby the light beam 170 is further attenuated to an attenuated light beam 175 by absorption to the second first part atoms, molecules, ions, or radicals on the first optical path 160,
- detecting a second profile $I^2_k(t)$ indicative of the intensity of the attenuated light beam 175 as function of time,
- determining, using second profile $I^2_k(t)$ indicative of the intensity of the attenuated light beam 175 as function of time, the content of the second gas compound content of the gas mixture.

In case the profile of the content of the second gas compound is interesting, the method may further comprise

- guiding at least part of the another light pulse to the first optical path 160, such that the photons of the another light pulse travel in a second direction, wherein
- the second direction is reverse to the first direction.

Gas molecules that can be measured using only one dissociative light pulse include

- alkali halides of the form type $MH^a$, wherein M is an alkali atom (metal), excluding hydrogen, from the group IA of periodic table of elements and $H^a$ is a halogen atom from the group VIIA of the periodic table of elements, whereby the metal M can be selected from the group of Li, Na, K, Ru, Cs, and Fr, and the halogen $H^a$ atom can be selected from the group of F, Cl, Br, I, and At;
- Alkali hydroxides of the form MOH, wherein M is an alkali atom (metal), excluding hydrogen, from the group IA of periodic table of elements and OH is the hydroxide molecule;
- Metal (mono)oxides, such as PbO, NiO, MnO, and CrO;
- Thermally dissociated polyhalide metal salts, such as PbCl, HgCl.
- Polyhalide salts of metals, such as $PbCl_2$;
- Nitrogen oxide $NO_2$;
- Metal sulfides, wherein the metal sulfide has the form $M^1S$, wherein $M^1$ is a metal and S is a sulfur atom, for example PbS, ZnS, SnS, and CuS;
- Carbonates, e.g. metal carbonates such as potassium carbonate ($K_2CO_3$);
- Sulfates, e.g. metal sulfates such as potassium sulfate ($K_2SO_4$), wherein a single potassium atom may be dissociated from these compounds with a pulse; and
- Some polyhalides, e.g. $SCl_2$, $TeBr_2$, $PbBr_2$, and $PbI_2$ that may be dissociated to an atom and to two halogen atoms with a single pulse.

It is understood that these gases are only examples, and the same principle can be applied to many other gases or vapors.

As for metal polyhalides, especially $PbCl_2$, the radical PbCl has absorption band at the deep ultraviolet, which poses some limitations for the light beam source. Another possibility for the measurement of $PbCl_2$ will be discussed below. Nitrogen oxide $NO_2$ may be dissociated to nitrogen (mono)oxide NO and oxygen atom O using a pulse wavelength from 250 nm to 410 nm. Nitrogen (mono)oxide NO has relatively strong absorption peaks in the wavelength range from 203 nm to 227 nm.

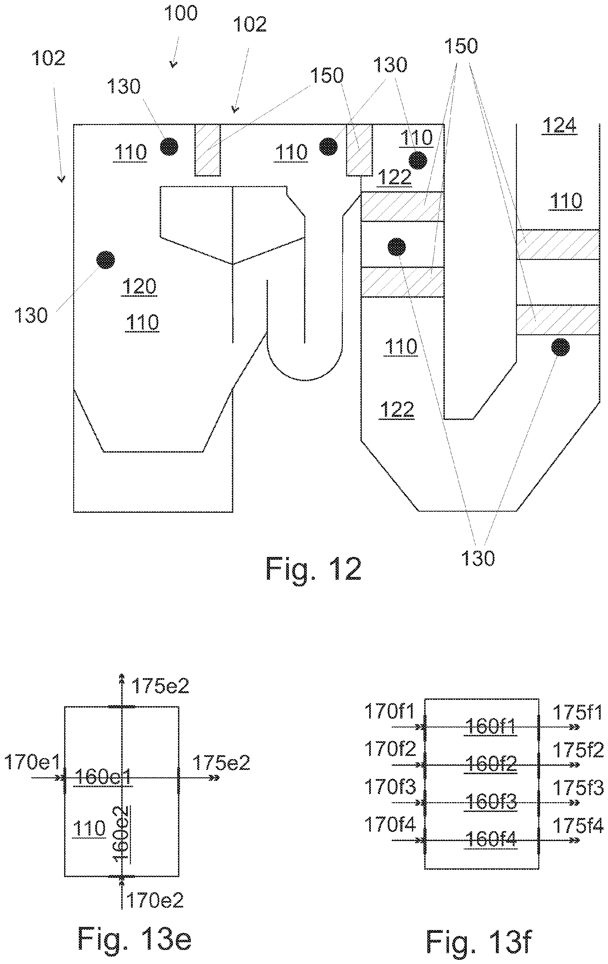

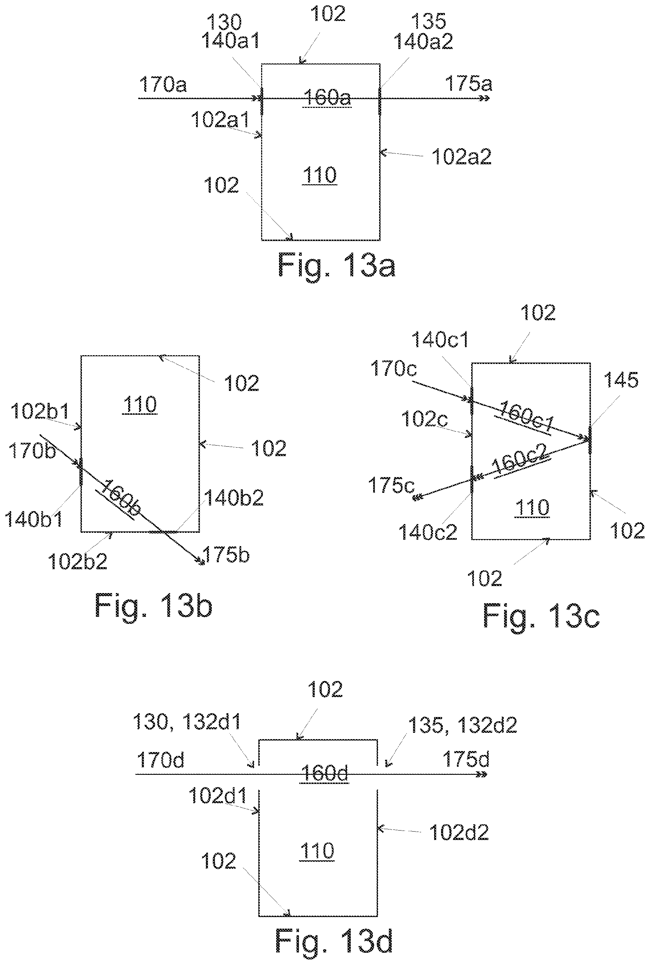

One advantage of the method is that the first optical path 160 (and possibly also the second optical path 800) may extend through a gas line (pipe, duct, channel), from one wall 102a1 to an opposite wall 102a2, as depicted in Figs. 12 and 13. Therefore, the gas content can be measured *in situ* from the first optical path 160. Thus, the problem of collecting a representative sample of the gas mixture for the measurements can be sidestepped simply by omitting sampling.

*Measuring device, single-step dissociation, ionization, or excitation*

Figure 7a shows an embodiment of a device 990 for measuring the profile of the content of a gas compound in a gas mixture using one dissociative light pulse 710. The device comprises a light beam source 310. The light beam source 310 is arranged to generate light comprising photons having the beam wavelength $\lambda_b$. The light beam source 310 may produce a monochromatic or essentially monochromatic light beam 170. The light beam source 310 may produce a coherent or essentially coherent light beam 170. It is noted, that even if a laser is used as the light source 310, whereby the light beam 170 is essentially coherent, scattering from the particles in the flue gas in the space 110 widens the light beam in the space 110. As discussed above, the light beam source 310 may be arranged to generate light pulses.

As the profile of the content the gas compound 510 is measured from the content of the first part 520 (Fig. 2a) of the gas compound 510, the beam wavelength $\lambda_b$ of the light beam 170 is selected such that content of the first part can be measured. The first part(s) 520 is generated by transformation (dissociation, ionization, or excitation) of the gas compound 510 atom(s), molecule(s), ion(s) or radical(s). As the profile of the content is measured from the absorption on the first optical path 160, the profile of the gas compound content on the first optical path 160 becomes measured. The first optical path runs through the space 110 containing the gas mixture.

In the figure 7a, the light beam 170 and the attenuated light beam 175 are depicted with a relatively thin black solid line. The arrows of these lines indicate the direction of the photons of the light beam 170. In particular, on the first optical path 160 the photons of the light beam 170 travel downwards in the Figure 7a.

The device 990 of Fig. 7a comprises a light pulse source 700. The light pulse source is arranged to emit light pulses 710 comprising high energy photons 515 (Fig. 2a) such that at least some of the photons transform the gas molecules 510 or the pre-excited gas molecules on the first optical path 160. The light pulse source 700 may be arranged to emit light pulses 710 comprising photons having a wavelength $\lambda_{p1}$, wherein $\lambda_{p1}$ is short enough for dissociating the gas molecules 510 (Fig. 2a). The light pulses transform at least part of the gas compound 510 to first part 520 and optionally to a second part 525, as discussed above. At least part of the light pulses are guided to the first optical path 160. As light pulse 710 or a part of the light pulse 710 travels across the first optical path 160, at least part of the gas molecules 510 (Fig. 2a) on the first optical path 160 are being dissociated to the first part 520 and the second part 525.

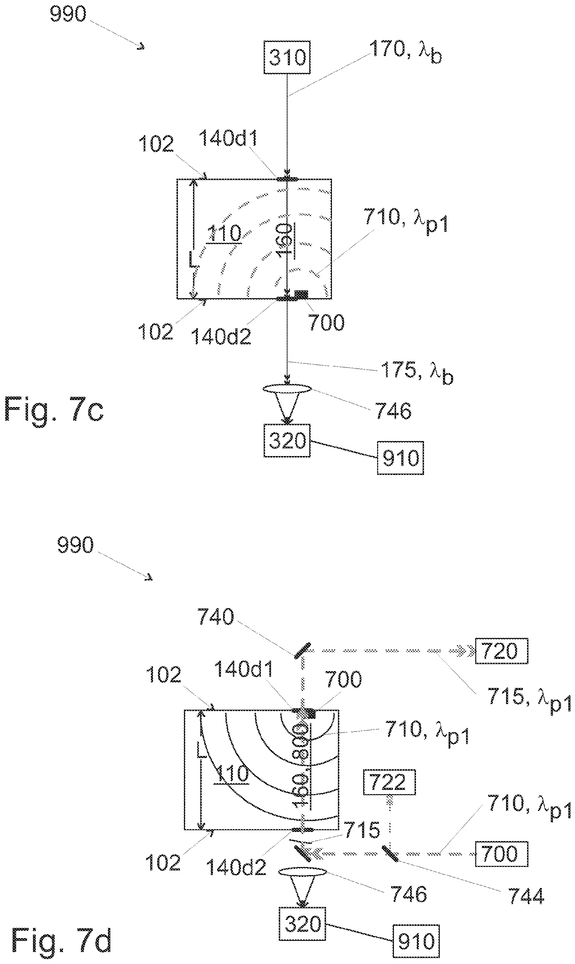

In the figure 7a, the light pulse 710 and the attenuated light pulse 715 are depicted with a relatively thick grey dotted line. The arrows of these lines indicate the direction of the photons of the light pulse. The (grey, dotted) line for the optical pulse 710 is made wider than the (black, solid) line for the light beam 170, since in a preferred embodiment, the cross sectional area of the light pulse is larger than the cross-sectional area of the light beam. In particular, on the first optical path 160 the photons of the light pulse 710 travel upwards in the Figure 7a. In Fig. 7a, the light pulse is coherent, whereby part of the photons of the pulse 710 travel along a second optical path 800, while another part of the photons of the light pulse is guided to a photodetector 722. The second optical path 800 is parallel and co-centric with the first optical path. The light pulse is not necessarily coherent (Fig. 7c).

In Fig. 7a, the device comprises means for guiding the light beam 170 to the first optical path 160 such that the photons of the light beam 170 travel in a first direction (In Fig. 7a downwards). In Fig. 7a the means is only the light beam source 310 itself, emitting light to the first optical path. However, the device may comprise also other such means such as at least one of waveguides, reflectors (e.g. a one-way mirror, or a dichroic mirror), filters (e.g. dichroic filter), and deflectors. In the embodiment, an optical element 742 is arranged to guide at least part of the light pulse 710 to the first optical path 160, such that the photons 515 of the light pulse 710 travel in a second direction, wherein the second direction is reverse (i.e. opposite) to the first direction. In Fig. 7a the second direction is upwards. The optical element 742 may be e.g. a reflector, especially a dichroic mirror/filter. A dichroic mirror/filter passes light of a small range of wavelengths while reflecting other colors.

The light beam may be coherent. Such a light beam 170 has a cross section, and the cross section has a first

dimension $l_1$ and a second dimension $l_2$, wherein the second dimension is perpendicular to the first dimension. The orientations for the dimensions are selected such that the first dimension is the smaller of the first and the second dimension, i.e. $l_1=\min(l_1,l_2)$. The dimensions may be equal, e.g. the beam may be circular. Theoretically there is no limit for the dimensions of the light beam 170. However, a narrow light beam expands more in the space 110 than a wide light beam. For example, turbulence in the space 110 affects the temperature distribution in the optical path, thereby affecting the refraction coefficient for light and further affecting the travel of the light beam. Moreover, a very wide light beam may diminish the sensitivity of the method. The first dimension of the light beam may be e.g. in the range from 1 mm to 100 mm. The first dimension $l_1$ of the light beam is preferably from 20 mm to 50 mm. In some embodiments of the invention the light beam 170 has an essentially circular cross-section. In these embodiments, the radius of the light beam 170, $r_1$, is preferably in the range from 10 mm to 25 mm. The radius of the light beam may be referred to as the beam radius.

The light pulse may be coherent having a cross section. The dimensions of the light pulse affect the sensitivity of the method. The method is more sensitive if a narrow light pulse 710 is used. Moreover, a very wide light pulse may be hard to generate. The first dimension of the light pulse may be e.g. in the range from 1 mm to 100 mm. The first dimension of the light pulse is preferably from 20 mm to 50 mm. More preferably, the cross section of the light pulse 710 is greater than the cross section of the light beam 170, such that the light pulse 710, when present, surrounds the light beam 170. The light pulse 710 may have a circular cross section, whereby the light pulse may have a pulse radius $r_2$ from 0.5 mm to 50 mm. The beam radius may also be equal or approximately equal to the pulse radius. Preferably the pulse radius, $r_2$, is 1 mm - 2 mm greater than the beam radius, $r_1$. Preferably the intensity profile of the light pulse 710 is spatially uniform. The term spatially uniform refers to an intensity profile that is uniform on the cross sectional area of the pulse. The cross sectional area refers to the area of the cross section of the pulse, as will be defined below in the context of the term at least partly overlapping optical paths. The term uniform as such refers to a distribution that has essentially only a single value. (Naturally the intensity outside of the beam is zero).

The device 990 further comprises a photodetector 320. The photodetector is arranged to detect the intensity of the attenuated light beam 175. The attenuated light beam comprises photons having the wavelength $\lambda_b$. In particular, the photodetector is arranged to detect the intensity of the attenuated light beam 175 at several instances of time, whereby the photodetector 320 is arranged to detect the first profile $I_k(t)$ indicative of the of the intensity of the attenuated light beam 175 as function of time.

In the embodiment of Fig. 7a, the light beam source 310, the light pulse source 710, and the photodetector 320 are located in the exterior of the space 110, i.e. outside of the walls 102. However, in another embodiment, at least one of the components is located in the interior of the space 110, e.g. to detect gas compounds of the ambient. Space 110 is further separated from the exterior with the windows 140d1 and 140d2.

The optical elements 740, 742, and 744 of Fig. 7a will be discussed below.

The device of Fig. 7a can also be arranged to measure the oxygen content of the gas mixture. Figure 7b shows another embodiment of a device arranged to measure the oxygen content of the gas mixture. In case oxygen content is measured, the photons of the light beam and the photon of the light pulse may travel in the same direction, as depicted in Fig. 7b. With this embodiment, in addition to oxygen content, only the total content of the gas compound on the first optical path 160 can be measured, but not the spatial variation of it, i.e. the profile of the gas content.

Figures 7a and 7b show:

- a light beam source 310, arranged to emit a monochromatic and coherent light beam 170 having the beam wavelength $\lambda_b$,
- a light pulse source 700, arranged to emit a monochromatic and coherent light pulse 710 having the pulse wavelength $\lambda_{p1}$,
- a first optical element 740, arranged to guide the light beam 170, or a part of the light beam 170, to a first optical path 160,
- a second optical element 742, arranged to pass the attenuated light beam 175, i.e. light having the wavelength $\lambda_b$, and to deflect, reflect, or absorb the attenuated light pulse 715 or the light pulse 710, i.e. light having the wavelength $\lambda_{p1}$,
- a third optical element 744, arranged to reflect a first part of light having the wavelength $\lambda_{p1}$ (i.e. a part of the light pulse) and to pass a second part of light having the wavelength $\lambda_{p1}$,
- a first photodetector 320, arranged to detect a first profile $I_k(t)$ indicative of the intensity of the attenuated light beam 175 having the wavelength $\lambda_b$ on the photodetector 320,
- a lens 746, arranged to converge the attenuated light beam 175 to the first photodetector 320,
- a second photodetector 720, arranged to detect the intensity of the light pulse 710 or the attenuated light pulse 715, the light pulse and the attenuated light pulse having the wavelength $\lambda_{p1}$,
- a third photodetector 722, arranged to detect the intensity of light having the wavelength $\lambda_{p1}$, and
- a data processing unit 910, wherein the data processing is arranged to determine, using the first profile $I_k(t)$ (being

indicative of the intensity of the attenuated light beam 175 on the photodetector 320 as function of time), the profile of the gas compound content in the gas mixture on the first optical path 160.

The first optical element 740 may be arranged to

- deflect, reflect, or absorb the attenuated light pulse 715, i.e. light having the wavelength $\lambda_{p1}$ (Fig. 7a), or
- guide at least part of the light pulse 710 to the first optical path 160 (Fig. 7b).

The second optical element 742 may be arranged to

- guide at least part of the light pulse 710 to the first optical path such that the photons 515 of the guided part of the light pulse 710 travel in a second direction, wherein the second direction is reverse to the first direction (Fig. 7a) or
- deflect, reflect, or absorb the attenuated light pulse 715, i.e. light having the wavelength $\lambda_{p1}$ (Fig. 7b).

Figs. 7a and 7b also show, even though not components of the device 990,

- walls 102 defining a space 110 in their interior, the space 110 being arranged to contain the gas mixture,
- a first window 140d1, arranged to pass the light pulse 710 and the light beam 170 to the space 110 and to retain gas mixture within the space 110, and
- a second window 140d2, arranged to pass the light pulse 710 and the light beam 170 from the space 110 and to retain the gas mixture within the space 110.

It is noted, that the intensity or the energy of the attenuated light pulse 715 is not necessarily measured, and therefore, the second photodetector 720 may be omitted. The third optical element 744 and the third photodetector 722 are arranged to measure the intensity or energy of the light pulse 710. The intensity or the energy of the light pulse 710 is not necessarily measured, and therefore, the third photodetector 722 and the third optical element 744 may be omitted.

In addition, the device 990 may comprise other optical elements such as lenses to converge the first part of the light pulse 710 to the third photodetector 722, or the attenuated light pulse 715 to the second photodetector 720. Other examples of such optical elements of optical waveguides, e.g. optical fibers, arranged to guide light and/or to affect an angle or a position of a light beam or light pulse.

Even in the case 7b, a part of the light pulse 710 may be guided to a second optical path 800. It is evident from Fig. 7a that the second optical path 800 may overlap the first optical path. However, even for the, wherein the beam 170 and the pulse 710 are not arranged to propagate in the opposite directions, the second optical path 800 may overlap the first optical path 160. Referring to Figs. 7a and 7b, the second optical path 800 overlaps the first optical path 160 for example when the optical paths are essentially parallel and co-centric. The optical paths may also be essentially parallel, but the central axes may be shifted with respect to each other. The term essentially parallel may be interpreted such that the first optical path 160 is essentially parallel to the second optical path 800 if

- the optical paths are parallel, or
- the optical paths are so aligned, that the light beam 170 and the light pulse 710 at least partially overlap on all points between

  ◦ a starting point, wherein the starting point is one of the first optical element 740 and the light beam source 310, whichever is comprised by the device and
  ◦ an ending point, wherein the ending point is one of the second optical outlet 140d2, the optical element 742, the lens 746, and the first photodetector 320, whichever is comprised by the device, wherein
  ◦ the components defining the starting and ending points are selected such that the length between the starting point and the ending point is the shortest of the different possibilities, or

- the angle between the central axis of the first optical path 160 and the central axis of the second optical path is less than 5 degrees.

The term "at least partially overlap on all points" is to be understood in the following way: the point (that is referred to) is a point of the central axis of the first optical path. Conversely, the central axis of the first optical path defines a set of points. As light travels in a straight manner, the central axis defines a plane that is perpendicular to the central axis. In this plane, the first optical path 160 defines a first cross sectional area, i.e. a first set of points. In this plane, the second optical path 800 defines a second cross sectional area, i.e. a second set of points. The optical paths partially overlap, with respect to this point and plane, when the first set of points comprise at least part of the points of the second set of points. The shortest of the possible paths is selected as discussed above, since (referring to Fig. 7b) evidently the beam and the pulse do not necessarily overlap before e.g. the optical element 740 (Fig. 7b).

The cross section of the light beam 170 is understood as follows. The intensity of the light beam typically has a maximum at the central axis of the light beam, and the intensity decreases as the distance from the central axis increases. Typically the decrement is exponential. The light beam is assumed to be located in the points, wherein the intensity is at least 1/e of the maximum intensity. 1/e is about 37 %. From this, the cross section of the light beam be determined.

The cross section of the light pulse 710 is understood as follows. The intensity of the light pulse typically has a maximum at the central axis of the light pulse, and the intensity decreases as the distance from the central axis increases. Typically the decrement is exponential. From this, the cross section of the light pulse be determined. The intensity profile may also have a different form, e.g. the intensity profile may comprise multiple peaks. Moreover, an intensity peak is not necessarily located at the central axis.

The intensity of the light pulse 710 is preferably spatially essentially uniform. The spatially uniform intensity simplifies the calculations of the gas compound content. Typically the intensity profile of the light pulse 710 spatially decreases exponentially with the distance from the central axis of the light pulse 710. In these cases the cross sectional area refers to the area of the cross section of the pulse, wherein the pulse is considered to be located in the points, wherein the intensity of the pulse is at least 1/e of the maximum intensity. Here 1/e is about 37%. For the calculations of the gas compound content, the exponentially decreasing intensity is reasonably uniform. The intensity profile may also have a different form, e.g. the intensity profile may comprise multiple peaks. Moreover, an intensity peak is not necessarily located at the central axis. In case the intensity profile differs significantly from uniform, an effective area may be used e.g. in the equation 4 (to be presented later). Thus, instead of $A_p$ in the ratio $A_p/E_{0p1}$, the effective area may be used to take into account the intensity variations.

The central axis of the first optical path 160 may be shifted with respect to the central axis of the second optical path 800 by a distance d. The distance should be smaller than the sum of the radii, i.e. $d<r_1+r_2$. Preferable the distance should be smaller than the smaller of the radii, i.e. $d<\min(r_1,r_2)$. The optical paths 160, 800 are considered essentially co-centric, if the distance between the central axes of the optical paths 160, 800 is less 25 % of the smaller of the following: smaller dimension of the light beam 170 and smaller dimension of light pulse 710. E.g. the optical paths 160, 800 are considered essentially co-centric, if the distance between the central axes of the optical paths 160, 800 is less than $0.25\times\min(2r_1,2r_2)$. The distance between the optical paths 160, 800 may be considered to be the minimum distance between the central axes of the optical paths 160, 800. Co-centric optical paths are essentially co-centric. The optical paths 160, 800 may be essentially co-centric, if they are essentially parallel.

In case the central axes of the optical paths are shifted with respect to each other, or in the case where there is an angle between the central axes of the optical paths, it may be possible to omit the second optical element 742 from the device. In this case it may be possible to locate the first photodetector 320 such that the attenuated light pulse 715 bypasses the first photodetector 320, and the attenuated light beam 175 hits the first photodetector 320.

In case the central axes of the co-centric optical paths are shifted with respect to each other, at least part of the light pulse 710 is guided to the second optical path 800. However, since the first optical path 160 (that of the light beam) and the second optical path (that of the light pulse) at least partially overlap, at least part of the photons of the light pulse is thus guided to the first optical path 160.

The light pulse source 700 may be e.g. one of

- a pulse laser,
- a Xenon flash source,
- a continuous laser with a chopper,
- a continuous laser operated in pulse mode,
- a light emitting diode (LED) operated in pulse mode,
- a continuous LED with a chopper,
- a continuous light source operated in pulse mode, and
- a continuous light source with a chopper.

Some light sources may be operated in a pulse mode using pulse mode drive current. A chopper may comprise e.g. a rotating opaque disk, the disk comprising a slit arranged to pass light through the slit. When light is directed towards the disk, a light pulse is generated when the light passes the slit of the otherwise opaque disk.

When the profile of the content of the gas compound is measured, the spatial resolution depends on the duration of the light pulse. Thus, the duration is selected according to the resolution requirements as discussed above.

Preferably the duration is at most 10 ns and even more preferably at most 1 ns. The light source may be selected according to the duration requirements. E.g. a pulse laser has typically a pulse duration from 1 fs ($10^{-15}$ s) to 100 ns ($100\times10^{-9}$ s). Lasers emitting very short pulses are typically mode locked, and may emit series of pulses instead of single light pulses. A Xenon flash may have a pulse duration of the order of 1 $\mu$s. The time between subsequent pulses, i.e. the time between the end of a pulse and the beginning of a subsequent pulse, is preferably significantly more than the recovery time of the parts of the gas, which may be of the order of 2 $\mu$s. The time between subsequent pulses may be e.g. at least 10 times the recovery time. E.g. the time could be at least 20 $\mu$s.

The time between subsequent pulses is not necessarily more than the recovery time of the parts of the gas molecules. In an embodiment, the time between subsequent pulses was 1 s. In another embodiment, the time between subsequent pulses was 100 ms. In case a pulse is emitted during the recovery period, the attenuated intensity $I_{k0}$ is slightly attenuated also due to the first part atoms, molecules, ions, or radicals on the optical path due to the previous light pulse.

The first optical element 740 in the embodiment of Fig. 7b and the second optical element 742 in the embodiment of Fig. 7a is arranged to guide the light beam 170 to a first optical path 160 and the light pulse 710 to a second optical path 800 such that the second optical path 800 overlaps the first optical path 160. The optical element (740, 742) may be e.g. a wavelength-selective reflector that operates as a mirror for the wavelength $\lambda_{p1}$ and as a transparent object for the wavelength $\lambda_b$, as shown in the Figs. 7a and 7b. In a different configuration, the optical element (740, 742) could reflect light having a long wavelength and pass light having a short wavelength. The first optical element may be selected from a variety of known optical elements. For example, a prism or a grating may also operate as a wavelength-selective reflector. A fiber coupler may also operate as the first optical element.

The second optical element 742 in the embodiment of Fig. 7b and the first optical element 740 in the embodiment of Fig. 7a is arranged to pass the attenuated light beam 175 and to deflect, reflect, or absorb the attenuated light pulse 715. The optical element (742, 740) is arranged to pass light having the wavelength $\lambda_b$ to the photodetector 320. The optical element (742, 740) is also arranged to prevent the attenuated light pulse 715 from entering the photodetector 320. The optical element (742, 740) may be any one of those that can be used as another optical element discussed above (740, 742). The optical element (742, 740) may also be a filter arranged to absorb light having the wavelength $\lambda_{p1}$. In this case the device does not comprise the second photodetector 720.

The third optical element 744 is arranged to reflect a known (small) first part of light that hits the surface of the third optical element 744, and to pass a second part of the light. Thus, by measuring the intensity (or energy) of the reflected first part of the light pulse 710 using the third photodetector 722, the intensity (or energy) of the second part of the light pulse 710 may be calculated.

Referring to Figs. 7c and 7d, the light pulse 710 and/or the light beam 170 are not necessary monochromatic and/or coherent. Figure 7c shows an embodiment of a device 990 for measuring the profile of the content of a gas compound in a gas mixture using one dissociative light pulse 710. The light pulse is emitted from the light pulse source 700. The light pulse is neither monochromatic nor coherent, and the light pulse source is a point source. Therefore, the light pulse 710 propagates as an expanding shell of a sphere. However, the light pulse source 700 is located at the opposite side of the first optical path 160 to the light beam source 310. Therefore, a part of the photons of the light pulse 710 travel along the first optical path 160 in a second direction, wherein the second direction is opposite to the direction of the photons of the light beam 170.

Figure 7d shows an embodiment of a device 990 for measuring the profile of the content of a gas compound in a gas mixture using one dissociative light pulse 710. The light pulse is emitted from the light pulse source 700. The light pulse is essentially monochromatic and essentially coherent. However, the light beam 170 is emitted from a point source 700. A part of the light beam 170 is guided to the first optical path 160 such that these photon travel in the first direction. As shown in the figure, a part of the photons of the light pulse 710 travel along the first optical path 160 in a second direction, wherein the second direction is opposite to the direction of the photons of the light beam 170. One could naturally also define a second optical path 800 such that a part of the light pulse 710 travels along the second optical path 800, and a part of the light beam 170 is guided to the second optical path 800.

If the light pulse source 700 is not arranged to emit a coherent light pulse 710, the intensity of the light pulse 710 may decrease - among other things - due to the distance as the light pulse 710 propagates along the first optical path 160. For example, if the light pulse 710 propagates as an expanding shell of a sphere, the intensity of the light pulse 710 decreases as $1/r^2$, wherein r is the distance travelled by the light pulse 710. This should be taken into account in calculations. Preferably the light pulse 710 is coherent, as disclosed e.g. in Fig. 7a.

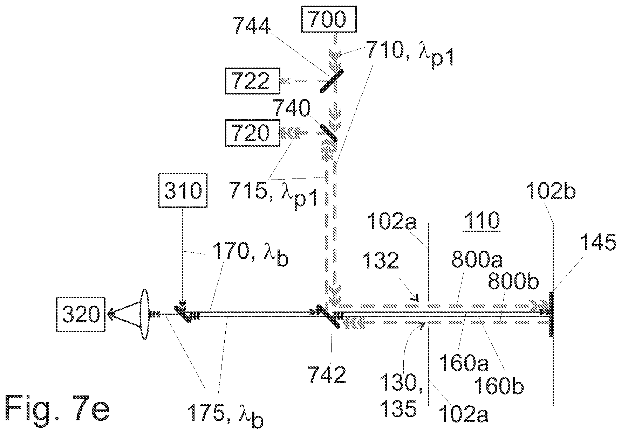

Referring to Fig. 7e, the light pulse 710 and/or the light beam 170 may be arranged to travel on the same optical path partly in the same direction. In Fig. 7e, a first part 160a of the first optical path runs from a first wall 102a to a second wall 102b. A second part 160b of the first optical path runs from the second wall 102b to the first wall 102a. The light beam 170 travels along the first optical path (160, 160b). The light beam 170 is reflected by a reflector 145. The reflector may be a part of the second wall 102b, or may be inserted in the second wall 102b. In the figure, the double arrow head indicates the direction of non-reflected light beam and light pulse, while a triple arrow head indicates the direction of reflected light beam and light pulse. The walls 102a, 102b limit the space 110.The light pulse 170 is guided to a second optical path (800a, 800b). In particular, a part of the light pulse 710 is guided, using the optical elements 744, 740, and 742, to a first part 800a of a second optical path running from the first wall 102a to the second wall 102b. A second part 800b of the second optical path runs from the second wall 102b to the first wall 102a. The parts of the first optical path 160a and 160b are essentially parallel and co-centric. The parts of the second optical path 800a and 800b are essentially parallel and co-centric. The first parts 160a and 800a of the optical paths are essentially parallel and co-centric. For clarity, the different parts are indicated with separate arrows, even if the paths are co-centric.

When the light pulse 710 enters the space 110, it starts to transform gas compound 510 atoms, molecules, ions, or radicals by dissociation, ionization or excitation. In the space 110, the light pulse first propagates along the first part 800a of the second optical path, in a second direction. At the same time, some photons of the light beam 170 travel along the second part 160b of the first optical path in a first direction, wherein the first direction is reverse to the second direction. In Fig. 7d, only a part of the photons of the light beam 170 travel in the first direction, and at least part of the photons of the light pulse 710 travel in the second direction. In contrast, in Fig. 7a all or substantially all the photons of the light beam 170 travel in a first direction, and at least part of the photons of the light pulse travel in a second direction, wherein the second direction is reverse to the first direction.

As the light pulse 710 or light beam 170 are not necessarily monochromatic, and all the components shown in Figs. 7a - 7e are not necessary to carry out the method, a device 990 for measuring the profile of the content of a gas compound in a gas mixture comprises:

- a light beam source 310, arranged to emit a light beam 170 comprising photons having a beam wavelength $\lambda_b$,
- a photodetector 320, arranged to detect the intensity of an attenuated light beam 175, and
- means for guiding at least part of the light beam 170 to a first optical path 160 such that at least part of the photons of the light beam 170 travel in a first direction, wherein

  ○ the first optical path 160 is located optically between the photodetector 320 and the light beam source 310,
  ○ the first optical path 160 runs through a space 110 arranged to contain the gas mixture, and
  ○ the light beam 170 is arranged to be attenuated to the attenuated light beam 175 within the space 110,

and the device further comprises

- a light pulse source 700, wherein the light pulse source 700 is arranged to generate a light pulse 710 comprising photons having a second wavelength $\lambda_{p1}$, at least part of the photons transforming (dissociating, ionizing) at least part of (i) the gas compound 510 atoms, molecules, ions, or radicals or (ii) the pre-excited gas compound 510b atoms, molecules, ions, or radicals (iii) transformed parts 530, 534 or (iv) pre-excited transformed parts 530, 534 on the first optical path 160 to a first part 520 and optionally to another part (525, 532, 536; Figs. 2, 2a, 2b, 2c, 8a, 10) and
- an optical element arranged to guide at least part of the last light pulse 710, 710a or another light pulse 710b, 710c to the first optical path 160, such that the photons 515, 515b of the last light pulse 710, 710a or the photons of the another light pulse 710b, 710c travel in a second direction, wherein the second direction is reverse to the first direction, and
- the photodetector 320 is arranged to detect a first profile $I_k(t)$ indicative of the of the intensity of the attenuated light beam 175 as function of time.

The term "optically between" will be discussed later. The term "another light pulse 710b, 710c" will be discussed later. The terms "transformed part", "pre-excited transformed parts", and "another part" will be discussed later.

In case a non-coherent light beam source 310 is used, the light beam 170 may comprise only a part of the light emitted by the light beam source. In case a coherent light beam source 310 is used, all or essentially all the light emitted from the light beam source may be used as the light beam 170.

In case the oxygen content is measured without measuring the profile of the gas content, the device does not necessarily comprise means for guiding the beam 170 and the pulse 710 in the opposite directions.

The profile of the gas content may be calculated in a data processing 910 unit that receives the first profile $I_k(t)$ indicative of the of the intensity of the attenuated light beam 175 on the photodetector 320 as function of time.

The oxygen content of the gas mixture may be calculated in a data processing 910 unit that receives the first profile $I_k(t)$ indicative of the of the intensity of the attenuated light beam 175 on the photodetector 320 as function of time.

The data processing unit 910 may be comprised in the device 990 for measuring the profile of the gas content. The data processing unit 910 may be comprised in the device 990 for measuring the oxygen content of the gas mixture. In case the data processing unit is located far apart from the photodetector 320, the device 990 may be relatively large is size.

Even if not shown in the figures 7a and 7b, but as discussed in connection with the method, the device may comprise a light beam source arranged to emit light comprising photons having a first beam wavelength $\lambda_{b1}$ and photons having a second beam wavelength $\lambda_{b2}$. The first beam wavelength may correspond to an absorption peak of a first gas compound. The second beam wavelength may correspond to an absorption peak of a second gas compound.

The device 990 may comprise a photodetector 320 that is arranged to measure the intensity profiles of the attenuated, or further attenuated, light beam at two different wavelengths. These wavelengths may correspond to the first beam wavelength $\lambda_{b1}$ and to the second beam wavelength $\lambda_{b2}$. The first profile $I_k(t)$ indicative of the of the intensity of the attenuated light beam 175 as function of time may be detected at the first beam wavelength $\lambda_{b1}$. A second profile $I^2_k(t)$ indicative of the of the intensity of the attenuated light beam 175 as function of time may be detected at second beam wavelength $\lambda_{b2}$. The second profile $I^2_k(t)$ may be used to determine the profile of the second gas compound content in the gas mixture on the first optical path 160 as discussed for the first gas compound and the first profile $I_k(t)$.

The device 990 may comprise two photodetectors, wherein the first of these two photodetectors is arranged to measure the intensity of the attenuated, or further attenuated, light beam at the first beam wavelength $\lambda_{b1}$, and the second of these two photodetectors is arranged to measure the intensity of the attenuated, or further attenuated, light beam at the second beam wavelength $\lambda_{b2}$. The first profile $I_k(t)$ indicative of the of the intensity of the attenuated light beam 175 as function of time may be detected at the first beam wavelength $\lambda_{b1}$ with the first photodetector. A second profile $I^2_k(t)$ indicative of the of the intensity of the attenuated light beam 175 as function of time may be detected at second beam wavelength $\lambda_{b2}$ with the second photodetector. The second profile $I^2_k(t)$ may be used to determine the profile of the second gas compound content in the gas mixture on the first optical path 160 as discussed for the first gas compound and the first profile $I_k(t)$.

Even if not shown in the figures 7a and 7b, the device may comprise another light beam source arranged to emit light comprising photons having a second beam wavelength $\lambda_{b2}$. The beam wavelength $\lambda_b$ may correspond to an absorption peak of a first gas compound. The second beam wavelength $\lambda_{b2}$ may correspond to an absorption peak of a second gas compound. These issues were also discussed in connection with the method.

The device 990 may comprise

- a photodetector 320 that is arranged to measure the intensity of the attenuated, or further attenuated, first and second light beams or
- both

  ◦ a first photodetector 320 that is arranged to detect a first profile $I_k(t)$ indicative of the of the intensity of the attenuated first light beam 175 as function of time and
  ◦ a second photodetector that is arranged to detect a second profile $I^2_k(t)$ indicative of the of the intensity of the attenuated second light beam as function of time.

Thus, the first and second intensity profiles $I_k(t)$ and $I^2_k(t)$ may be detected using one or two photodetectors, as discussed above. The first profile $I_k(t)$ may be detected at the first beam wavelength $\lambda_{b1}$. The second profile $I^2_k(t)$ may be detected at the second beam wavelength $\lambda_{b2}$.

The device 990 may further comprise another light pulse source or other means for forming another light pulse. The another light pulse source may be arranged to emit the another light pulse comprising photons having the another pulse wavelength $\lambda_{p1,1}$. The another pulse may be used to dissociate a second gas compound molecule, as discussed in the context of the method.

The another light pulse may be arranged to propagate in a direction opposite to the direction of the light beam. Thus the profile of the content of a second gas compound can also be measured.

Moreover, if two photon excitation or multiple photon excitation is used to dissociate the gas molecule (Fig. 2b), the device may comprise means for forming another light pulse, such that at least part of photons of the another light pulse are arranged to

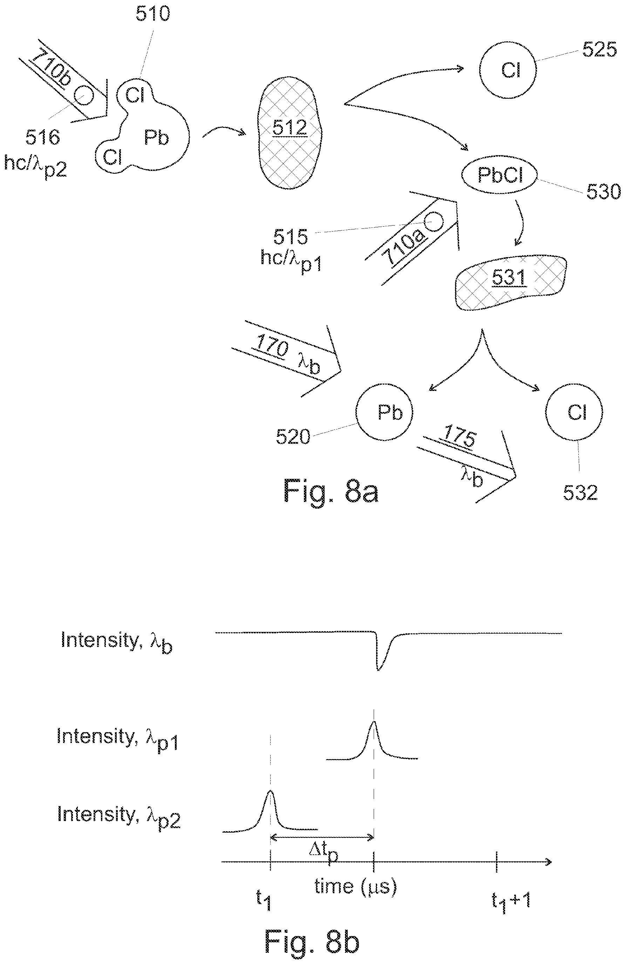

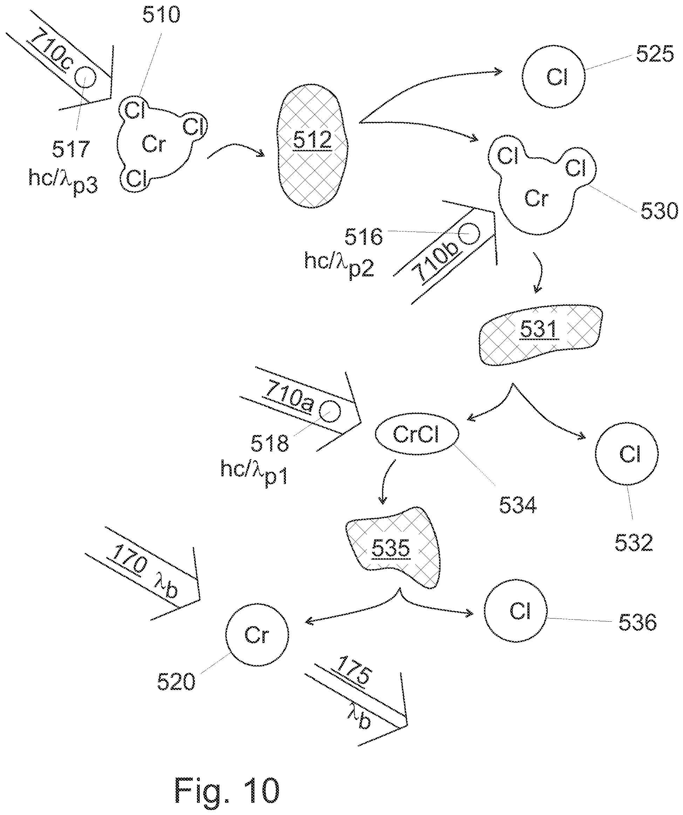

- pre-excite the gas compound 510 atom, molecule, ions, or radical to a pre-excited gas compound atom, molecule, ion, or radical or
- pre-excite a transformed part (530, 534 Figs. 8a and 10) to a pre-excited transformed part.

The means for forming another light pulse may comprise a light pulse divider and a light pulse delayer. The means for forming another light pulse may comprise a light pulse source. A light pulse source, as discussed in connection with the first light pulse source, may be used as the light pulse source for exciting the gas molecules or the excited parts.

*Gas content and profile, single-step dissociation, ionization, or excitation*

The calculation of the content of the gas compound will be discussed with reference to Fig. 6. The intensity profile $I_k(t)$ of Fig. 6 is obtainable e.g. from the device of Fig. 7b. However, the principles are applicable also for the intensity profile of Fig. 5b, obtainable from a device of Fig. 5a, 7a, or 7e. The profile calculation is shown only for the case of dissociation, wherein the gas compound is a gas molecule. By using the same principles it is evident how to calculate the gas content and the profile of the gas content for ionization or excitation.

In the following,

- the light pulse 710 is assumed to be monochromatic or essentially monochromatic,
- the gas compound 510 molecule is assumed to be excited to the dissociative state 512 with a single photon 515 (Fig. 2a),
- the light beam 170 is assumed to be monochromatic or essentially monochromatic,
- the light beam 170 and the light pulse 710 are assumed to travel along the same (first) optical path,
- the quantity $I_{k,min}$ represents a local minimum, a calculated local minimum or an extrapolated local minimum of the intensity of the further attenuated light beam 175, and
- the quantity $I_{k0}$ represents a reference intensity of the further attenuated light beam 175.

The local minimum $I_{k,min}$ may be calculated from the first profile $I_k(t)$ as discussed above or using known means. The reference intensity $I_{k0}$ may be calculated from the first profile $I_k(t)$ as discussed above or using known means. From the attenuated intensities $I_{k0}$ and $I_{k,min}$, the calculation of the content of the gas compound in the gas mixture may be done as follows:

The intensity of the light beam 170 is decreased in the space 110 by at least one of

(i) absorption due to first part atoms, molecules, ions, or radicals produced in the dissociation of gas molecules using the light pulse 710,
(ii) other processes such as scattering or absorption by other compounds or particles, and
(iii) absorption due to other first part atoms, molecules, ions, or radicals produced by other dissociation processes of the gas molecules, e.g. produced by thermal dissociation.

Therefore, for the measured intensity before dissociation of gas molecules, one may write $I_{k0} = \varphi I_0$, wherein $I_{k0}$ is the observed intensity of the attenuated light beam 175 before dissociation, $I_0$ is the intensity of the light beam 170 before entering the space 110, and $\varphi$ is an attenuation factor. The attenuation factor $\varphi$ takes into account attenuation of light beam due to the processes (ii) and (iii) above. The Beer-Lambert law may be applied to describe absorption by dissociated first part atoms or molecules, i.e. the process (i) above. Therefore, for the intensity after the dissociation, one may write:

$$(1)\ I_{k,\min} = \varphi \exp(-\xi_M \frac{N}{V} \sigma_M L) I_0 = I_{k0} \exp(-\xi_M \frac{N}{V} \sigma_M L)$$

wherein $I_{k,min}$ is the local minimum intensity of the attenuated light beam 175 after the dissociation of the gas molecules by the light pulse 710, $I_{k0}$ is the intensity before or after the dissociation, $\xi_M$ is the first part 520 content (as measured in proportion, e.g. in ppm or ppb; subscript M stands for metal, the gas molecule 510 may be e.g. a metal hydroxide), N is the total number of atoms and molecules in a volume V, and $\sigma_M$ is the absorption cross section of the first part 520 atom or molecule for the light beam having wavelength $\lambda_b$. As an example, the absorption cross section $\sigma_M$ for potassium at the wavelength 766.515 nm is $1.47 \times 10^{-12}$ cm$^2$. For sodium, at the wavelength 589 nm, the absorption cross section $\sigma_M$ is $1.95 \times 10^{-12}$ cm$^2$.

The volume V refers to the volume on the first optical path 160 where dissociation takes place, and N refers to the total number of atoms and molecules within this volume. L is the distance, wherein absorption of light having the wavelength $\lambda_b$ to first part atoms or molecules takes place. E.g. if the light beam 170 and the light pulse have the same cross section, are co-centric and are parallel, the volume V is essentially the cross-sectional area of the light or pulse multiplied by the distance L.

The first part 520 (atom, molecule, ion, or radical) is present on the first optical path 160 due to the dissociation process. Each dissociation process uses the energy of a photon quantum of the light pulse 710. The energy of a photon of the monochromatic light pulse 710 is $hc/\lambda_{p1}$. Thus, the number of dissociated metal atoms may be written as:

$$(2)\ N_M = \xi_M N = \frac{E_{0p1} - E_{p1}^-}{hc / \lambda_{p1}}$$

wherein $N_M$ is the number of metal atoms, $E_{0p1}$ is the energy of the light pulse 710 entering the space 110 (or the energy of the second part of the light pulse 710, if the third optical element 744 is used), and $E_{p1}$ is the energy of the attenuated light pulse 715 leaving the space 110. It is assumed, that the decrement of the energy pulse $E_{p01}$-$E_p$ is totally used to dissociate the gas molecules. By applying the Beer-Lambert law for the light pulse 710:

$$(3)\ E_{p1} = E_{0p1} \exp(-\xi_G \frac{N}{V} \sigma_G L)$$

wherein $\xi_G$ is the gas compound content of interest (as measured in proportion, e.g. in ppm or ppb) and $\sigma_G$ is the absorption cross section for the gas compound and the light pulse having the wavelength $\lambda_{p1}$. For example, for NaOH at the temperature 300 K the absorption cross $\sigma_G$ for the pulse wavelength 310 nm may be about $(1\text{-}10) \times 10^{-18}$ cm$^2$. As another example, the absorption cross section for potassium chloride for the pulse wavelength 266 nm is about $10^{-21}$ m$^2$ (which is equal to $10^{-17}$ cm$^2$ that is shown in Fig. 3a).

However, the temperature affects the absorption cross section, and therefore this value might not be applicable to all measurement cases. The absorption cross sections $\sigma_G$ and $\sigma_M$ are not heavily dependent on temperature, at least for a temperature below 2000 °C. On the other hand, the gas compound should be in gaseous form for the applicability of the method. The method is preferably used for gas mixture originating from a thermal process. Thus, the method may be applicable e.g. for a gas mixture having a temperature up to 2000 °C, and the method is preferably used for a gas mixture having a temperature in the range from 300 °C to 2000 °C. In a higher temperature the dependence of the parameters on temperature should be taken into account.

By using Eqns. (2) and (3) the number of dissociated gas molecules can be calculated. Eq. (3) describes how much of the energy of the light pulse is used to dissociate the gas molecules and Eq. (2) describes how this energy is related to the number of dissociated molecules. The number of dissociation induced first parts 520 may be relatively low. The number depends e.g. on the energy of the light pulse and also on the content of gas molecules. As an example 1/10000 - 1/1000 of the gas molecules 510 may be dissociated with the light pulse 710.

The ratio between the number of molecules or atoms and the volume may be written in terms of other constants using the ideal gas law: pV=NkT, wherein p is the pressure, T is the temperature and k is the Boltzmann constant.

Using these equations, one may derive an equation for the gas content:

$$(4)\ \xi_G = -\ln\left[1 + \ln\left(1 - \frac{I_{k0} - I_{k,\min}}{I_{k0}}\right) \frac{hc/\lambda_{p1}}{E_{0p1}} \frac{A_p}{\sigma_M}\right] \frac{kT}{p} \frac{1}{\sigma_G L}$$

wherein $A_p$ is the cross sectional area of the light pulse 710. As discussed above, when the intensity profile is non-uniform, an effective area $A_{p,\text{eff}}$ may be used instead of $A_p$. Thus, for a coherent light pulse, $A_p L$ is the volume V, wherein the gas molecules are dissociated. An example of the distance L, wherein absorption of light having the wavelength $\lambda_b$ to the first part components takes place, is depicted in Fig. 5a.

Equation 4 assumes e.g. that the light pulse 710 is attenuated only due to absorption to the gas compound 510. In practice, some other absorption or scattering may also take place. However, an equation taking these processes into account is derivable.

From Eq. (4) one may see that the sensitivity of the method depends e.g. on the energy of the light pulse $E_{0p1}$, the area of the light pulse $A_p$, and the distance L. Increasing the pulse energy, increasing the distance L or decreasing the pulse area increases the sensitivity. In principle there is no limit for the distance L. However, in some embodiments, the distance L may range from 1 cm to 50 m.

In the above equations (2) and (3), it was assumed that all the photons of the light pulse 710 that are absorbed in the space 110 dissociate a gas molecule. In a thermal process, scattering and absorption to other molecules may also occur. The accuracy of the method may be improved by measuring the pulse energy $E_{0p1}$ before dissociation with the third photodetector 722 and the pulse energy $E_p$ after dissociation with the second photodetector 720 (Figs. 5a, 7a, 7b, and 7e). The difference between these energies may then be compared with the theoretical estimate of Eq. (3). In case deviations from Eq. (3) are large, both energies may be used to deduce a value for the content $\xi_G$.

The pulse energy, $E_{0p1}$, may have a value from 1 nJ to 10 J, preferably from 0.5 µJ to 500 µJ, and in some embodiments, pulse energies of 0.8 µJ, 1.6 µJ, 10 µJ, and 20 µJ have been used. A higher pulse energy may be used to detect lower gas contents. In these embodiments a distance of L=60 cm was used. In other embodiments distances of L=1 m, L=5 m, and L=7 m have been used. Moreover, a coherent and monochromatic light beam 170 having a circular cross section and the diameter of 3 mm was used. It is noted, that the intensities are relatively high. E.g. a 10 µJ pulse having the duration of 10 ns means a power of 1 kW. If the pulse has a circular cross section with the radius of 1 cm, the intensity of the light pulse 710 is approximately 3 MW/m$^2$, i.e. 300 W/cm$^2$.

The calculation of the profile of content of the gas compound will be discussed with reference to Fig. 5b. The

intensity profile $I_k(t)$ of Fig. 5b is obtainable e.g. from a device of Fig. 5a, 7a, or 7e. In this case, the photons of the beam 170 and the photons of the pulse 710 travel in opposite (i.e. reverse) directions. The pulse 710 enters the space 110 from a first side (e.g. a hole in the first wall 102a). Thus these photons of the pulse are located on a first boundary of the space 110. In addition, some photons of the light beam 170 are also located at the same boundary of the space 110. For the discussion below, the time (at the photodetector 320) is set zero (t=0) when these photons of the light beam 170 enter the photodetector 320.

At the time t=0 one may write $I_k(0)= \varphi I_0$, wherein $\varphi$ is the attenuation factor as defined above (cf. Eq. 1). When time advances, the pulse 710 also advances in the space 110, whereby the intensity at the photodetector 320 starts to decrease. For the decrement one may write using the Beer-Lambert law (cf. eq. 1):

$$(5) \quad I_k(t + \Delta t) = \exp[-\xi_M (ct/2) \frac{N}{V} \sigma_M \frac{c \Delta t}{2}] I_k(t),$$
$$I_k(0) = \varphi I_0$$

wherein $I_k(t)$ is the intensity at the photodetector at time t, $\xi_M(ct/2)$ is the first part 520 (e.g. metal atom) content at the distance of ct/2 from the first boundary of the space 110. $c \Delta t/2$ is the length experienced at the photodetector 320 and travelled by the pulse 710 in the time increment $\Delta t$. The factor ½ is due to the opposite directions of the beam 170 and the pulse 710. I.e. during the time increment $\Delta t$, (first) the pulse travels a distance $c \Delta t/2$ in a second direction thereby dissociating gas molecules 510, and (second) the beam travels the same distance in a first, opposite, direction. This is also the reason why the location for the content $\xi_M$ is given as ct/2, not ct.

Note that since $I_k(t)$ represents the signal at the photodetector 320, the intensity at t=0 is intensity of the beam that has been attenuated by the processes (ii) and (iii) (cf. discussion before eq. 1), but not by (i) absorption due to first part atoms, molecules, ions, or radicals produced in the dissociation of gas molecules using the light pulse 710. Thus, the reduction of intensity of the light beam due to other processes is inherently taken into account. In this equation.

Thereby, the (numerical) time derivative for the signal may be written as

$$(6) \quad \frac{I_k(t + \Delta t) - I_k(t)}{\Delta t} = \frac{I_k(t)}{\Delta t} \{\exp[-\xi_M(ct/2) \frac{N}{V} \sigma_M \frac{c \Delta t}{2}] - 1\}$$

Using Eq. 6 and the first profile $I_k(t)$, the first part content at the distance of ct/2 from the boundary of the space 110 can be calculated for all available values of t. Thus, the profile $\xi_M(x)$ of the content of the first part 520 can be calculated.

The profile $\xi_M(x)$ of the content of the first part is related to the profile of the content of the gas compound, in principle in a similar way, as discussed in Eqns. 2 and 3. More specifically, the light pulse dissociates the gas molecules as:

$$(7) \quad N_M = \xi_M(x)N = \frac{\frac{E_{p1}(x) - E_{p1}(x + \Delta x)}{E_{p1}(x)} E_{p1}(x)}{hc / \lambda_{p1}},$$

wherein $E_{p1}(x+\Delta x)$ is the energy of the pulse having traveled a distance $x+\Delta x$, and $E_{p1}(x)$ is the energy of the pulse having traveled the distance x. In case the pulse is coherent, whereby the energy (and intensity) decreases mainly due to absorption to gas molecules, one may write (cf. Eq. 2):

$$\xi_G(x)N = \frac{E_{p1}(x) - E_{p1}(x+\Delta x)}{hc/\lambda_{p1}} = \frac{E_{p1}(x) - E_{p1}(x+\Delta x)}{E_{p1}(x)} \frac{E_{p1}(x)}{hc/\lambda_{p1}} =$$

$$[1 - \exp(-\xi_G(x)\frac{N}{V}\sigma_G\Delta x)]\frac{E_{p1}(x)}{hc/\lambda_{p1}}, wherein$$

(8)
$$E_{p1}(x+\Delta x) = E_{p1}(x)\exp(-\xi_G(x)\frac{N}{V}\sigma_G\Delta x), because$$

$$I_{p1}(x+\Delta x) = I_{p1}(x)\exp(-\xi_G(x)\frac{N}{V}\sigma_G\Delta x)$$

wherein $\xi_G(x)$ is the gas compound content of interest. The intensity of the light pulse, $I_{p1}(x)$ is proportional to the energy of the pulse, and the decrement of the intensity of the light pulse has been described using the Beer-Lambert law (cf. Eq.3). The profile $\xi_G(ct/2)$, as function of time from the instance, when the pulse 710 enters the space 110, was given above. The profile $\xi_G(x)$ is the same profile, as function of location x=ct/2.

As noticed from the Equation 8, the pulse energy $E_{p1}(x)$ as function of location x should be known. For purposes of calculation, the pulse energy as function on location on the first optical path, $E_{p1}(x)$, may be assumed to decay exponentially. Moreover, the profile may be assumed known, e.g. to decay exponentially, if the following are known or measured:

- the length L of the optical path,
- the initial energy $E_{0p1}$ of the light pulse 170, i.e. $E_{p1}(0)$, and
- the final energy of the attenuated light pulse 175, $E_{p1}(x)$, wherein $x \geq L$.

Still further, when a profile $\xi_G(x)$ for the gas content has been calculated, the non-uniformity may be taken into account for calculating the pulse energy profile $E_{p1}(x)$. In this case, the attenuation of the light pulse due to the non-uniform profile of the gas content may be used to calculate the *local* attenuation due to the gas compound. Furthermore, the total gas content may be used to calculate the attenuation due to the gas compound. Still further, from the measurements of initial pulse energy and final energy of the attenuated pulse, attenuation due to other factors may be determined. In this way, the calculation of the profile of the gas content may proceed iteratively.

In case a non-coherent pulse is used, one must take into account the decrement of intensity of the pulse, and also the fact that the decrement in the intensity is not related only to the dissociation of gas molecules 510, but also to the spreading of the pulse. A similar problem is encountered in scattering environments (e.g. boilers), when a narrow laser pulse 710 is used. In these cases scattering widens the pulse thereby reducing the intensity. For relatively low scattering even in a boiler, a pulse diameter of at least 25 mm may be used.

*Measurement principle, two-step dissociation, ionization, and/or excitation*

It has also been noticed that not all gas molecules can be dissociated with a light pulse to the first part and the second part such that the first part (or the second part) has at least one clear peak in its absorption cross section such that a light beam source for that wavelength would be available. For example, some metal dihalides of the type $M^2Ha_2$, wherein metal $M^2$ is a metal (e.g. a heavy metal or an alkaline earth metal from the group II) atom and $Ha$ is a halogen atom (as defined above) are hard to dissociate to a metal atom and to a dihalide molecule using one photon. For example, lead dichloride, $PbCl_2$ is of this type. Lead dichloride could be dissociated to a lead atom and to another compound or other compounds using a light pulse having a very short wavelength. For example, for lead chloride, the wavelength might be in the range from 150 nm to 200 nm. However, light sources emitting such high energy pulses are relatively expensive. Moreover, the light having such a short wavelength becomes absorbed to other gases, such as oxygen, and thus cannot propagate long distances. In many applications a relatively long measuring distance (i.e. long optical path) is preferable. It was noticed that $PbCl_2$ can be dissociated to a lead (mono)chloride molecule and a chlorine atom. However, the lead (mono)chloride molecule does not have well defines absorption peaks in the visible or near ultraviolet (UV) wavelength. It has absorption bands at the UV regime However, these bands easily mix with absorption bands of other compounds, e.g. $HgCl_2$. Moreover, the absorption cross section at these bands is much smaller than the absorption cross section of lead atom at another wavelength. The ratio of these cross sections may be e.g. in the range $10^{-6}$ to $10^{-5}$. Therefore, the absorption of the gas mixture corresponding to the wavelength(s) of the light beam 170 cannot be significantly increased by dissociation $PbCl_2$ to PbCl and Cl.

Referring to Fig. 8a it was noticed that lead dichloride can be dissociated to a lead atom (i.e. to an excited lead atom) and two chlorine atoms. However, the dissociation is performed in two steps. In the first step, $PbCl_2$ is dissociated to PbCl and Cl. In the second step, PbCl is further dissociated to Pb and Cl. In an embodiment, two subsequent dissociative light pulses of different wavelengths are used. In another embodiment, a single pulse capable of performing both the steps is used. In the latter case, the light pulse may comprise photons arranged to dissociate the molecules in the first step, and further comprise photons arranged to dissociate the molecules in the second step. Moreover, the photons for the first and second step may have the same wavelength. However, the photons for the first and second step may have different wavelength. For example, a light pulse comprising photons having the wavelength 266 nm may dissociate $PbCl_2$ to PbCl and Cl, and further dissociate PbCl to Pb and Cl.

However, it is preferred to dissociate the gas compound molecule 510 in two controlled steps. This may be done using a second last light pulse 710b for the first dissociation (e.g. $PbCl_2$ to PbCl and Cl) and a last light pulse 710a for the second dissociation (e.g. PbCl to Pb and Cl). In this case, the photons for the first and second step preferably have different wavelengths. In this way the process is more controlled resulting in easier calibration. Moreover, the calculation of the content of the gas compound becomes simpler.

After the first and second dissociation, the dissociated lead atom is in an excited state. The lifetime of the excited state may be short; it may be only a few nanoseconds, or it may be some microseconds. The lifetime depends on the state of the dissociated led atoms. Thus, the measurements should be accurately timed. In particular, if the lifetime of the third part 530 to which the second last light pulse 710b dissociates the gas molecule 510 is short, timing of the last light pulse 710a must be carefully done.

In Fig. 8a, the lead dichloride molecule is first dissociated with a second last light pulse 710b. The second last light pulse 710b comprises photons 516 having the wavelength $\lambda_{p2}$. The second last light pulse 710b may further comprise photons having different wavelengths. Preferably the second last light pulse 710b is monochromatic. The wavelength $\lambda_{p2}$ is selected such that the gas molecule 510 (lead dichloride in Fig. 8a) is first excited to a molecule 512 in an dissociative state that further dissociates to the second part 525 (chlorine in Fig. 8a) and a third part 530 (lead monochloride in Fig. 8a). For lead dichloride, the wavelength $\lambda_{p2}$ = 355 nm can be used for the second last light pulse 710b. Here the wavelength is given with the accuracy of one nm.

Thereafter, the third part 530 is excited to a dissociative state 531 with a last light pulse 710a. The last light 710a pulse comprises the photons 515 having the wavelength $\lambda_{p1}$. The last light pulse 710a may further comprise photons having different wavelengths. Preferably the last light pulse 710a is monochromatic. The wavelength $\lambda_{p1}$ is selected such that the third part 530 is excited to a dissociative state 531 with the last light pulse 710a. In Fig. 8a, where lead monochloride is excited, the wavelength $\lambda_{p1}$ = 266 nm was used. Thereafter, the dissociative state 531 dissociates to a fourth part 532 (a chlorine atom) and to the first part 520 (an excited lead atom). The first part 520 is detected using absorption spectroscopy and a light beam 170, as discussed above. The light beam 170 is further attenuated to the attenuated light beam 175 due to absorption to the first part 520, which is an excited lead atom in Fig. 8a.

In the embodiment of Fig. 8a, the fourth part 532 (Cl) may be in an exited or in a relaxed state. This does not affect the measurements a lot. However, the first part 520 (Pb) is in an excited state. As the first part 520 is detected using absorption spectroscopy, the beam wavelength $\lambda_b$ should be selected so that the beam wavelength corresponds to the absorption profile of the excited first part 520, e.g. an excited lead atom. In another embodiment, the first part may be in a relaxed state, whereby the beam wavelength should correspond to the absorption profile of the relaxed first part 520. The light beam comprises photons having the beam wavelength $\lambda_b$. The light beam 170 may further comprise photons having different wavelengths. Preferably the light beam 170 is monochromatic. In the embodiment of Fig. 8a, a monochromatic light beam with the beam wavelength $\lambda_b$ = 406 nm was used.

It is evident that more generally, a gas compound 510 atom, molecule, ion, or radical can be transformed to at least the first part 520 in two subsequent steps. The first step comprises transforming (dissociation, ionizing, or exciting) the gas compound 510 atom, molecule, ion, or radical to at least the third part 530 (i.e. a transformed part) using the second last light pulse 710b. The second step comprises transforming (dissociation, ionizing, or exciting) the third part 530 to at least the first part 520.

Moreover, as discussed in connection with the one-step dissociation (Fig. 2b), also in this case the gas compound 510 atom, molecule, ion, or radical can be pre-excited to a pre-excited state 510b before further exciting it to the dissociative state 512. Further, the third part 530 (i.e. the transformed part) can be pre-excited to a pre-excited transformed part before further transforming the pre-excited transformed part to the first part. Thus, the gas compound 510 atom, molecule, ion, or radical may be transformed using at least one photon. Moreover, referring again to Fig. 2b, the third part 530 may be transformed using at least one photon. Thus, two photon excitation or multiple photon excitation may be used to pre-excite the gas compound 510 or the third part 530.

The method may comprise two of

- dissociating the gas compound 510 or the pre-excited gas compound 510b to the third part 530 and a second part 525,
- dissociating the third part 530 or the pre-excited third part to the first part 520 and a fourth part 532,
- ionizing the gas compound 510 or the pre-excited gas compound 510b to the third part 530 thereby releasing at least one electron,

- ionizing the third part 530 or the pre-excited third part to the first part 520 thereby releasing at least one electron,
- exciting the gas compound 510 or the pre-excited gas compound 510b to the third part 530, and
- exciting the third part 530 or the pre-excited third part to the first part 520.

In addition, the method may comprise at least one of

- pre-exiting the gas compound 510 to the pre-excited gas compound 510b using a light pulse, and
- pre-exiting the third part 530 to the pre-excited third part using a light pulse.

In case the third part is obtained by ionization of the first part, the third part is an ionized part. A "divided part" may refer to a dissociated part or an ionized part. A "transformed part" may refer to a dissociated part, an ionized part, or an excited part. The transformed part may be e.g. the third part 530 obtained by the transformation of the gas compound 510. The transformed part may be e.g. the fifth part 534 obtained by the transformation of the third part 530 (Fig. 10).

Fig. 8b shows the time scales for the measurements of lead dichloride, and the intensities of the light pulses and beam. At time $t=t_1$, the second last light pulse 710b having the wavelength $\lambda_{p2}$ is emitted. After a time $\Delta t_p$, the last light pulse 710a having the wavelength $\lambda_{p1}$ is emitted. These pulses are shown in Fig. 8b as the intensity peaks for the corresponding wavelengths. In addition, the intensity of the attenuated light beam 175 having the wavelength $\lambda_b$ is shown. The intensity of the attenuated light 175 beam decreases soon after the last light pulse 170a, because some excited lead atoms (first part 520) are present on the first optical path 160.

The lifetime of the excited state of the lead atom is very short. Therefore, the intensity of the attenuated light beam recovers rapidly after the last light pulse. Therefore, in this embodiment, the recovery period is to a large extent defined by the length of the last light pulse 710a. Excited lead atoms are present on the first optical path when the last light pulse dissociates the lead chlorine molecules, and only a few nanoseconds after the pulse.

For some other gases the second last light pulse 710b may transform the gas compound 510 to the second part 525 and the third part 530, wherein the third part is in an excited state. The wavelength of the last pulse 710a may be selected so as to transform the third part 530 from the excited state to the first part 520. Moreover, if the lifetime of the excited state of the third part 530 is short, the last pulse 710a has to be timed so that the last pulse 710a actually excites the excited third part atoms, molecules, ions, or radicals. Still further, if the third part 530 is in an excited state, it is possible to time the last pulse such that the third part 530 has enough time to relax from the excited state to a relaxed state or to another excited state before the third part 530 is dissociated. The time for this relaxation may typically be from 1 ns to 100 ns. In this case the wavelength of the last light pulse should be selected such that the last light pulse is capable of transforming the third part 530 in the relaxed state or the other excited state.

The method comprises

- generating a sequence of light pulses , wherein the sequence of light pulses comprises the last light pulse 710a and the second last light pulse 710b, and
- transforming, using the sequence of light pulses at least part of the gas compound 510 atoms, molecules, ions, or radicals, to at least a first part 520.

As discussed above, the sequence of light pulses may comprise a pre-exciting light pulse, arranged to pre-excite the gas compound 510 or the third part 530 before transformation (dissociation, ionization, or excitation). As will be discussed below, the sequence of light pulses may comprise also other light pulses. In the case, wherein the gas compound 510 is dissociated using only the last light pulse 710, the sequence of light pulses comprises only the last light pulse.

Gas compounds that can be measured using a two-step dissociation include metal halides of the form $M^2H^a_2$, wherein $M^2$ is a metal atom such as a Ni or heavy metal atom, e.g. Sn, Cu, Zn, Pb or Hg or an earth alkali metal atom from the group II, and the halogen $H^a$ can be selected from the group of F, Cl, Br, I, and At. For example the content of the dichlorides $NiCl_2$, $SnCl_2$, $CuCl_2$, $ZnCl_2$, and $PbCl_2$ are of interest in many thermal processes. Furthermore, some trihalides may be dissociated first to a monohalide. For example, some trihalides of Bi, Sb, and P may be dissociated to a corresponding monohalide using one pulse. The monohalide may be further dissociated to a halogen atom and another atom. These are to be regarded only as example gases for of the method.

When two subsequent pulses are used to dissociate the gas compound molecules 510 and the profile of the content of the gas compound is to be measured, at least part of at least one of

- the last light pulse 710a and
- the second last light pulse 710b

is arranged to travel in a second direction, wherein the second direction is reverse to the first direction, wherein at least part of the photons of the light beam 170 are arranged to travel in the first direction. Some examples of devices will be shown below.

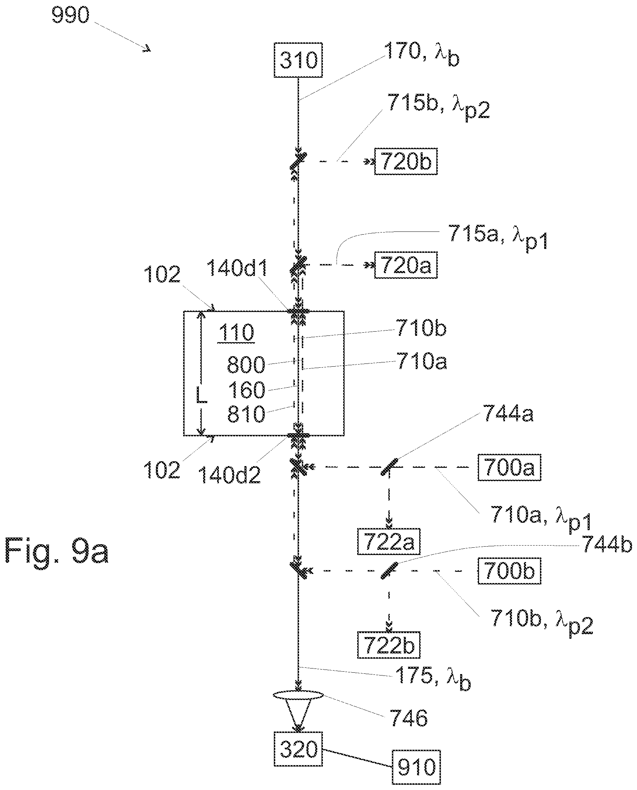

At least part of the second last light pulse 710b may be guided to a third optical path 810 (Fig. 9a). At least part of the last light pulse 710a may be guided to a second optical path 800 (Fig. 9a). At least part of the light beam 170 may be guided to a first optical path 160 (Fig. 9a). Preferably all the optical paths 160, 800, 810 are parallel and co-centric. Preferably the light beam 170, the last light pulse 710a, and the second last light pulse 710b are essentially monochromatic and essentially coherent.

The result of the measurement, particularly the first profile $I_k(t)$ indicative of the intensity of the attenuated light beam 175 as function of time depends on several factors:

- the direction of the last light pulse 710a with respect to the light beam (the reverse or the same direction),
- the direction of the second last light pulse 710b with respect to the light beam (the reverse or the same direction),
- the lifetime of the third part 530 atoms, molecules, ions, or radicals, and
- the lifetime of the first part 520 atoms, molecules, ions, or radicals.

The profile can be measured using at least one first profile $I_k(t)$ indicative of the intensity of the attenuated light beam 175 as function of time depends. However, how the profile is (profiles are) used depends on the case. Some possibilities include:

- determining the profile of the content of the gas compound from one profile, as discussed above for the case of single step dissociation and long lifetime.
- determining the profile of the content of the gas compound from several profiles, wherein each profile can be used to determine the content of the gas compound at a specific location on the optical path.

For example, in case of lead chloride, $PbCl_2$, the lifetime of the first part 520 is very short. In this case, and possibly in other cases wherein the lifetime of the first part 520 is very short, in a preferably embodiment of the method comprises

- generating a continuous light beam 170,
- guiding the light beam 170 to a first optical path 160 such that at least part of the photons of the light beam 170 travel the first optical path 160 in a first direction,
- generating a second last light pulse 710b, wherein the second last light pulse 710b comprises photons 516 having a second pulse wavelength $\lambda_{p2}$,
- generating a last light pulse 710a, wherein the last light pulse 710a comprises photons 515 having a first pulse wavelength $\lambda_{p1}$,
- guiding at least part of the second last light pulse 710b to the first optical path 160, such that the photons 516 of the second last light pulse 710b travel in the first direction, and
- guiding at least part of the last light pulse 710a to the first optical path 160, such that the photons 515 of the last light pulse 710a travel in a second direction, wherein
- the second direction is reverse to the first direction.

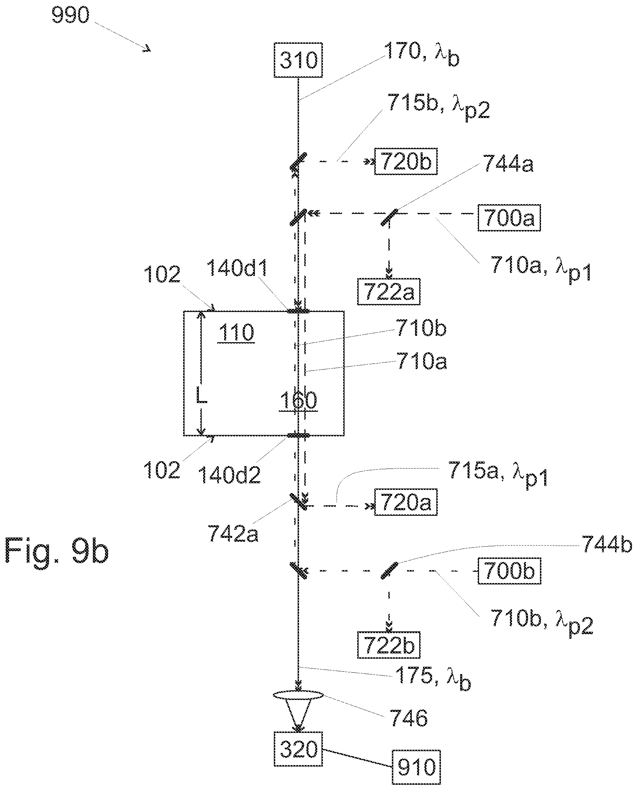

The corresponding device is shown in Fig. 9b. However, with the method as such, the content of the gas compound 510 becomes measured from a single point on the first optical path, wherein the point is the point where the second last light pulse 710b and the last light pulse 710a meet. The meeting point can be selected by varying the time difference $\Delta t_{p1}$ between the pulses (Fig. 8b). By selecting several meeting points, the profile of the content of the gas compound can be measured. Similar issues were discussed in connection with single step dissociation and short lifetime.

In an embodiment, the method for measuring the profile of the content of a gas compound from a gas mixture comprises detecting a first profile $I_k(t)$ indicative of the intensity of the attenuated light beam 175 as function of time. In this embodiment, the attenuated light beam 175 is further attenuated by the first part 520 atoms, molecules, ions, or radicals on the first optical path 160. Furthermore, in this embodiment, the first part 520 atoms molecules, ions, or radicals are induced by transformation of the third part 530 transformation products. Furthermore, in this case, the third part 530 transformation products are induced by transformation n of the gas molecules 510 (Fig. 8a). The profile $I_k(t)$ or the profiles $I_k(t)$ can be used as discussed above.

As discussed above for the single step dissociation, a single beam may be used to measure the profiles of the contents of two different gas compounds comprising the same atom. E.g. if the gas mixture comprises both lead chloride ($PbCl_2$) and lead bromide ($PbBr_2$), one common light beam may be used to detect both the chloride and the bromide. The lead chloride molecule would be dissociated to lead atom using two light pulses (the last and the second last).

Moreover, the lead bromide would be dissociated to lead atom using (i) one other light pulse, (ii) two other pulses, or (iii) one other pulse and one of the last pulse 710a and the second last pulse 710b. Thus, the decrement of the intensity of attenuated light beam after dissociating the lead chloride could be used to determine the lead chloride content and the profile of it. Moreover, the decrement of the intensity of attenuated light beam after dissociating the lead bromide could be used to determine the lead bromide content and the profile of it.

As discussed above for the single step dissociation,

- two beams, wherein the first beam comprises photons corresponding to a peak wavelength of a first gas compound and the second beam comprises photons corresponding to a peak wavelength of a second gas compound or
- one beam comprising photons corresponding to peak wavelengths of two gas compounds,

may be used to measure two different gas compounds comprising different atoms. E.g. if the gas mixture comprises both lead chloride ($PbCl_2$) and zinc chloride ($ZnCl_2$), two light beams or one light beam comprising photons corresponding to a peak wavelength of zinc and photons corresponding to a peak wavelength of lead, may be used to detect both the chlorides. Possibly the same light pulse source or sources may be used to dissociate both the chlorides. The decrement of the intensity of the attenuated light beam corresponding to the absorption peak of zinc could be used the determine the zinc chloride content and the profile of it. The decrement of the intensity of the attenuated light beam corresponding to the absorption peak of lead could be used the determine the lead chloride content and the profile of it. Thus, a single beam having peaks corresponding to two different atoms may be used to measure the content of two gas compounds and their profiles. In a similar manner two beams may be used to measure two gas compounds and their profiles.

*Measuring device, two-step dissociation, ionization, and/or excitation*

Figures 9a to 9e show embodiments of a device 990 for measuring the profile of the content of a gas compound 510 from a gas mixture. The device 990 is arranged to use the second last light pulse 710b and the last light pulse 710a to dissociate the gas molecule to the first part and to the other parts. The device 990 is arranged to use a light beam 170 to detect the content of the first part.

In Figs. 9a to 9e at least part of the photons of the light beam 170 propagate along a first optical path 160 in a first direction (i.e. downwards in the Figures 9a to 9e).

In Fig. 9a, a part of the photons 516 of the second last light pulse 710b (cf. Fig. 8a) are arranged to travel in a second direction, wherein the second direction is reverse to the first direction. Furthermore, in Fig. 9a, a part of the photons 515 of the last light pulse 710a (cf. Fig. 8a) are arranged to travel in the second direction.

In Fig. 9b, a part of the photons 516 of the second last light pulse 710b are arranged to travel in a second direction, wherein the second direction is reverse to the first direction. Furthermore, In Fig. 9b, a part of the photons 515 of the last light pulse 710a are arranged to travel in the first direction.

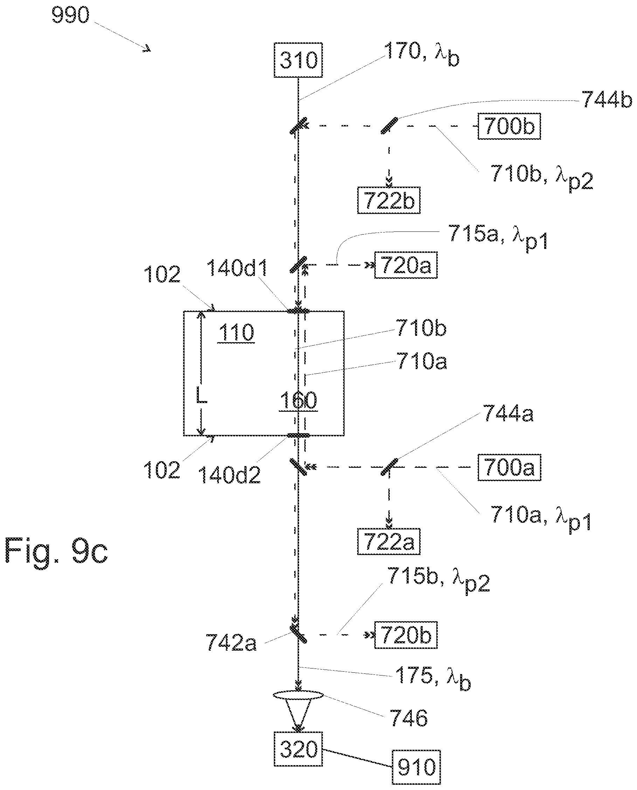

In Fig. 9c, a part of the photons 516 of the second last light pulse 710b are arranged to travel in the first direction. Furthermore, In Fig. 9b, a part of the photons 515 of the last light pulse 710a are arranged to travel in a second direction, wherein the second direction is reverse to the first direction.

In Figs. 9a to 9c only a part of the photons of the last pulse 710a is guided to the first optical path 160, as another part of the photons is guided to the photodetector 722a measuring the energy of the last pulse 710a. In addition, only a part of the photons of the second last pulse 710b is guided to the first optical path 160, as another part of the photons is guided to the photodetector 722b measuring the energy of the second last pulse 710b.

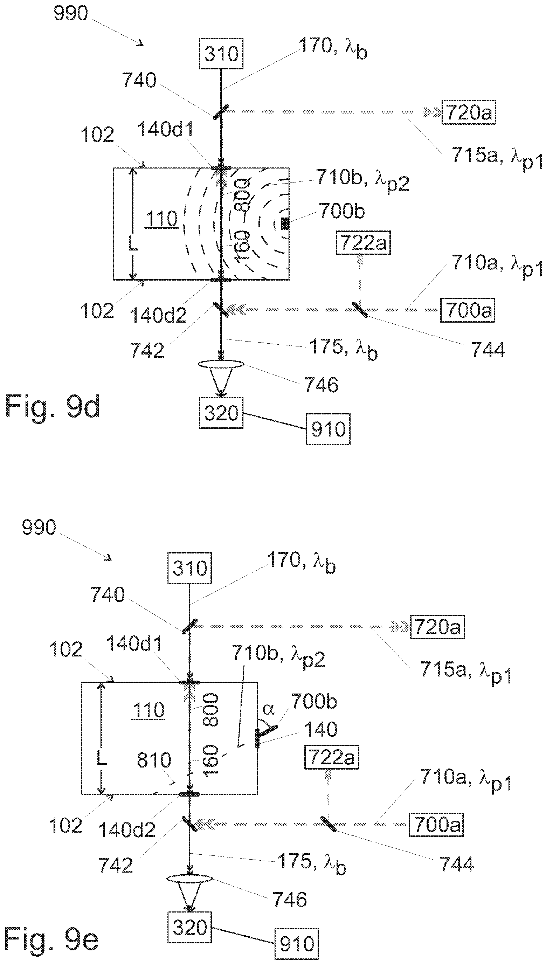

In Fig. 9d the second light pulse source 700b is arranged to generate a second last light pulse 710b, wherein the second last light pulse 710b is non-coherent and non-monochromatic. The second light pulse source 700b is a point source. Therefore, the second last light pulse 710b propagates as an expanding shell of a sphere. The second last light pulse 710b comprises photons having the wavelength $\lambda_{p2}$. When passing the first optical path 160, the second last light pulse 710b transforms gas compound 510 atom, molecules, ions, or radicals on the first optical path. The last light pulse 710a is arranged to propagate along the first optical path 160 after the second last transformation (cf. Figs. 8a and 8b). The photons of the last light pulse 710a are arranged to travel along the first optical path in a second direction, wherein the second direction is reverse to the first direction. The device may be applicable in cases, wherein the lifetime of the third part 530 and the first part 520 (Fig. 8a) are relatively long.

In Fig. 9e the second light pulse source 700b is arranged to generate a second last light pulse 710b, wherein the second last light pulse 710b is essentially coherent and essentially monochromatic. The second last light pulse 710 is guided to a third optical path 810. However, the third optical path 810 is neither parallel nor co-centric with neither the first optical path 160 nor the second optical path 800. The third optical path 810 is arranged to cross the first optical path at a point, wherein the point is defined by the angle $\alpha$ of second light pulse source 700b, wherein the angle $\alpha$ is also the angle between the first optical path 160 and the third optical path 810. The profile can be measured in at least two ways:

(1) By generating a second last light pulse 710b with constant angle $\alpha$, and subsequently generating the last light pulse 710a. In this way, the content of the gas compound becomes measured from the point, wherein the third optical path 810 and the first optical path 160 cross.

(2) By generating at least one (relatively long) second last light pulse(s) 710b, and simultaneously varying angle $\alpha$ such that at least part of the photons of the at least one second last light pulse 710b, in combination, cross a multiple of points of the first optical path 160. The number of the multiple of points may be e.g. at least five, at least ten, or at least fifty. The number may be essentially infinite by using a long second last 710b pulse and a continuously varying angle $\alpha$. After dissociation, in this way, gas compound molecules 510 on said multiple of points of the first optical path 160, the last light pulse 710a may be generated. In this way, the content of the gas compound becomes measured from the multiple of points of the first optical path 160.

Also the device of Fig. 9e may be applicable in cases, wherein the lifetime of the third part 530 and the first part 520 (Fig. 8a) are relatively long.

A single light pulse source may be arranged to emit both the last and the second last light pulse, particularly in the device of Fig. 9a.

The device 990 of Figs. 9a to 9e comprises:

- a light beam source 310, arranged to emit a light beam 170 having the beam wavelength $\lambda_b$,
- a first light pulse source 700a, arranged to emit a last light pulse 710a having the pulse wavelength $\lambda_{p1}$, wherein

  o the first light pulse source 700a is arranged to emit a second last light pulse 710b having the pulse wavelength $\lambda_{p2}$ (not shown), or
  o the device 990 comprises a second light pulse source 700b (Figs. 9a to 9c), arranged to emit a second last light pulse 710b having the pulse wavelength $\lambda_{p2}$,

- at least one optical element, wherein the optical element or the combination of the at least one optical elements is arranged to guide

  ◦ at least part of the light beam 170 to a first optical path 160 such that at least part of the photons of the light beam 170 travel in a first direction and
  ◦ at least part of at least one of (i) the last light pulse 710a and (ii) the second last light pulse 710b to the first optical path 160 such that at least part of at least one of (i) the last light pulse 710a and (ii) the second last light pulse 710b travel in a second direction, wherein
  ◦ the second direction is reverse to the first direction,

- a first photodetector 320, arranged to detect a first profile $I_k(t)$ indicative of the of the intensity of the attenuated light beam 175 having the wavelength $\lambda_b$, as function of time, and
- a data processing unit 910, wherein the data processing unit is arranged to determine, using the first profile $I_k(t)$ indicative of the of the intensity of the attenuated light beam 175 as function of time, the profile of the content of the gas compound in the gas mixture.

Wavelength for the light beam 170 may be selected as discussed above for the single pulse dissociation. The light beam source 310 may be tunable, i.e. the wavelength $\lambda_b$ it emits may be tuned to correspond to the absorption peak of the first part 520.

In Figs. 9a to 9c the light beam source 310 is arranged to emit a coherent and monochromatic light beam. In Figs. 9a to 9c the first light pulse source 700a is arranged to emit a coherent and monochromatic last light pulse 710a. In Figs. 9a to 9c the second light pulse source 700b is arranged to emit a coherent and monochromatic second last light pulse 710b.

The second light pulse source 700b is optional. The second last light pulse 710b may be integrated with the first light pulse source 700a. For example the first light pulse source 700a may emit two subsequent pulses. As another example, the first light pulse source 700a may emit a light pulse that is divided to two pulses. The first of these pulses may be used directly to transform the gas compound 510 atom, molecule, ion, or radical or the pre-excited gas compound (i.e. as the second last light pulse 710b), and the last of these pulses may be delayed and used to transform the third part 530 or the pre-excited third part (i.e. as the last light pulse 710a). Both the first light pulse source 700a, and the light pulse divider may be referred to as means for generating a second light pulse. The second light pulse comprises photons 516 having a second pulse wavelength $\lambda_{p2}$, at least part of the photons 516 transforming at least part of (i) the gas compound 510 atoms, molecules, ions, or radicals or (ii) pre-excited gas compound 510b atoms, molecules, ions, or radicals on the first optical path 160 to third part 530 atoms, molecules, ions, or radicals and optionally to another part 525. In another embodiment, the second last light pulse 710b may transform a (relaxed or pre-excited) third part 530 that is a result of a previous transformation process (Fig. 10).

The device 990 may further comprise, as shown in Figs. 9a to 9c:

- a lens 746, arranged to converge the attenuated light beam 175 to the first photodetector 320,
- a second photodetector 720a, arranged to detect the intensity of attenuated last light pulse 715a, the attenuated last light pulse having the wavelength $\lambda_{p1}$,
- a third photodetector 720b, arranged to detect the intensity of attenuated second last light pulse 715b, the attenuated second last light pulse having the wavelength $\lambda_{p2}$,
- a fourth photodetector 722a, arranged to detect the intensity of light having the wavelength $\lambda_{p1}$, and
- a fifth photodetector 722b, arranged to detect the intensity of light having the wavelength $\lambda_{p2}$.

The energies of the pulses before dissociations are preferably measured with the photodetectors 722a and 722b.

Preferably light pulses are not guided to the photodetector 320. This may be taken into account by the optical element 742a (Figs. 9b and 9c), which may be arranged to pass only photons having approximately the beam wavelength $\lambda_b$ and arranged to reflect or absorb photons 516, 515 of at least one of the light pulses 710b and 710a. Note that the embodiment of Fig. 9a does not have such an element, as both the last and the second last pulses travel towards the light beam source 310 on the optical path 160.

The sizes of the light pulses is preferably selected such that second last light pulse 710b has a greater cross section than the last light pulse 710a. Moreover, the second last and the last light pulse are preferably coherent and monochromatic and travel along the first optical path 160. Therefore, the volume of the second optical path 800 is preferably comprised in volume of a third optical path 810. I.e. the third optical path is greater in diameter than the second optical path. The third optical path 810 refers to the optical path that the second last light pulse 710b travels. Preferably the first 160 and the second 800 optical paths are essentially parallel and co-centric. In addition, preferably the second 800 and the third 810 optical paths are essentially parallel and co-centric. Even if the arrows in the Figs. 9a to 9c are slightly apart, the optical paths 160, 800, and 810 are preferably essentially parallel and co-centric.

Furthermore, the size of the last light pulse 710a and the light beam 170 is preferably selected such that last light pulse 710a has greater cross section than the light beam 170, as discussed for the case of only one dissociative pulse. Therefore, the volume of the first optical path 160 is preferably comprised in volume of the second optical path 800. I.e. the second optical path is greater in diameter than the first optical path.

Wavelength of the last light pulse 710a may be selected such that the third part 530 is transformed. However, to control the different steps of the transformation process, the wavelength may be selected also such that the gas compound molecule 510 is not transformed with the last light pulse 710a, or at least a significant part of the gas compound 510 atoms, molecules, ions, or radicals are not transformed with the last light pulse.

Wavelength of the second last light pulse 710b may be selected such that the pulse 710b transforms at least part of the gas compound 510 atoms, molecules, ions, or radicals. Wavelength of the second last light pulse 710b may be e.g. less than 430 nm. However, to control the different steps of the transformation process, the wavelength may be selected also such that the third part 530 is not transformed with the second last light pulse, or the second last light pulse 710b transforms significantly more gas compound 510 atoms, molecules, ions, or radicals than the third parts 530. The latter criterion is not critical, since the time between pulses, in particular the time between a last light pulse 710a and a subsequent second last pulse 710b, may be selected such that third parts 530 are not present on the optical path at the time of the subsequent second last pulse 710b.

From the profile $I_k(t)$ the calculation of the content of the gas compound and the profile of the content of the gas compound can be done following the principles laid down in the case for single step dissociation.

*Measurement principle, three-step dissociation, ionization and/or excitation*

It has further been noticed that the content of some gas compound molecules 510 in a gas mixture may be measured using three subsequent light pulses to dissociate the gas molecule. Referring to Fig. 10, a chromium chloride $CrCl_3$ molecule 510 may dissociated using three subsequent dissociative light pulses to an chromium atom (first part 520), which may or may not be in an excited state, and to other parts (525, 532, 536), wherein the other parts are chlorine atoms.

The chromium (tri)chloride molecule 510 (gas molecule) may be excited with a third last light pulse 710c to the gas molecule 512 in a dissociative state. The third last light pulse 710c comprises photons 517 having the third pulse wavelength $\lambda_{p3}$. The third last light pulse 710c may further comprise photons having another wavelength. Preferably the third last light pulse 710c is monochromatic. The third pulse wavelength $\lambda_{p3}$ is selected so as to excite the gas molecule 510 to the excited gas molecule 512 in a dissociative state. The gas molecule 512 dissociates to the second part 525 and to the third part 530. In Fig. 10 the second part 525 is a chlorine atom and the third part 530 is a chromium (di)chloride molecule.

The third part 530 (chromium (di)chloride molecule) may be excited with a second last light pulse 710b to an excited third part 531 in a dissociative state. The second last light pulse 710b comprises photons 516 having the second pulse wavelength $\lambda_{p2}$. The second last light pulse 710b may further comprise photons having another wavelength. Preferably the second last light pulse 710b is monochromatic. The second pulse wavelength $\lambda_{p2}$ is selected so as to excite the third part 530 to an excited third part 531 in a dissociative state. The excited third part 531 dissociates to a fourth part 532 and to a fifth part 534. In Fig. 10 the fourth part 532 is a chlorine atom and the fifth part 534 is a chromium (mono)chloride molecule.

The fifth part 534 (chromium (mono)chloride molecule) may be excited with the last light pulse 710a to an excited fifth part 535 in a dissociative state. The last light pulse 710a comprises photons 515 having the first pulse wavelength $\lambda_{p1}$. The last light pulse 710a may further comprise photons having another wavelength. Preferably the last light pulse 710a is monochromatic. The first pulse wavelength is selected so as to excite the fifth part 534 to an excited fifth part 535 in a dissociative state. The excited fifth part 535 dissociates to the first part 520 and to a sixth part 536. In Fig. 10 the first part 520 is a chromium atom and the sixth part 536 is a chlorine atom.

The first part 520 (i.e. the chromium atom) may be in a relaxed state or in an excited state. Also the other parts 525, 530, 532, 534, and 536 may be in a relaxed state or in an excited state. The wavelength of the second last light pulse 710b is selected so that the third part 530 is excited to a dissociative state, taking into account whether the third part 530 is in an excited state or in a relaxed state. The wavelength of the last light pulse 710a is selected so that the fifth part 534 is excited to a dissociative state, taking into account whether the fifth part 534 is in an excited state or in a relaxed state.

The first part 520 is probed with the light beam 170, which attenuates to the attenuated light beam 175. The attenuation may be at least partly due to absorption due to first part 520 atoms, molecules, ions, or radicals produced in the dissociation of gas molecules using the last light pulse 710a. Other absorption mechanisms were discussed above (e.g. near Eq. 1). Thereby the first profile $I_k(t)$ indicative of the intensity of the attenuated light beam (175) as function of time may be measured, as discussed above.

It is evident, that the gas compound 510 atoms, molecules ions, or radicals can be more generally transformed to the first parts 520 as discussed above. Thus, the method may comprise three of

- dissociating the gas compound 510 or the pre-excited gas compound 510b to the third part 530 and a second part 525,
- dissociating the third part 530 or the pre-excited third part to the fifth part 534 and a fourth part 532,
- dissociating the fifth part 534 or the pre-excited fifth part to the first part 520 and a sixth part 536,
- ionizing the gas compound 510 or the pre-excited gas compound 510b to the third part 530 thereby releasing at least one electron,
- ionizing the third part 530 or the pre-excited third part to the fifth part 534, thereby releasing at least one electron,
- ionizing the fifth part 534 or the pre-excited fifth part to the first part 520 thereby releasing at least one electron,
- exciting the gas compound 510 or the pre-excited gas compound 510b to the third part 530,
- exciting the third part 530 or the pre-excited third part to the fifth part 534, and
- exciting the fifth part (534) or the excited fifth part to the first part 520.

In addition, the method may comprise at least one of

- pre-exiting the gas compound 510 to the pre-excited gas compound 510b using a light pulse,
- pre-exiting the third part 530 to the pre-excited third part using a light pulse, and
- pre-exiting the fifth part 534 to the pre-exited fifth part using a light pulse.

The light beam 170 comprises photons having the beam wavelength $\lambda_b$. The light beam 170 may further comprise photons having another wavelength. Preferably the light beam 170 is monochromatic. The beam wavelength $\lambda_b$ is selected so that it corresponds to the absorption profile of the first part 520 (excited or relaxed). Thus, the transformation of the gas compound 510 atom, molecule, ion, or radical eventually to the first part 520 increases the absorption of the light beam to the gas mixture at the beam wavelength $\lambda_b$. The third part 530 may be in an excited state, wherein the lifetime of the excited state is short. Therefore, the timing of the second last light pulse 710b needs to be selected so as to excite the third part 530 to a dissociative state.

The fifth part 534 may be in an excited state, wherein the lifetime of the excited state is short. Therefore, the timing of the last light pulse 710a needs to be selected so as to excite the fifth part 534 to a dissociative state.

Two photon excitation or multiple photon excitation may be used to excite at least one of

- the gas molecule 510,
- the third part 530, and

- the fifth part 534,

to the corresponding dissociative state, as discussed above in the context of one step dissociation and two step dissociation.

The content of two gas compounds may be measured with at least one of

- using one light beam comprising photons having a first wavelength corresponding to the absorption peak of a first gas compound and photons having a second wavelength corresponding to the absorption peak of a second gas compound,
- using two light beams, wherein the first light beam comprises photons having a first wavelength corresponding to the absorption peak of a first gas compound and the second light beam comprises photons having a second wavelength corresponding to the absorption peak of a second gas compound,
- using a multiple of light pulses such that a first combination of pulses dissociates the first gas compound eventually to a first part atom molecule, ion or radical and a second combination of pulses dissociates the second gas compound eventually to the (same) first part atom molecule, ion or radical, and
- using a multiple of light pulses such that a first combination of pulses dissociates the first gas compound eventually to a first first part atom molecule, ion or radical and a second combination of pulses dissociates the second gas compound eventually to a (different) second first part atom molecule, ion or radical.

Gases that may be possible to measure with the three step dissociation include also some other metal trichlorides such as $FeCl_3$, $AlCl_3$, and $ThCl_3$.

In order to measure the profile of the content of a gas compound, the light beam 170 is guided a first optical path 160 such that at least part of the photons of the light beam 170 travel in a first direction. Furthermore, at least part of at least one of

- the last light pulse 710a,
- the second last light pulse 710b, and
- the last light pulse 710c,

is arranged to travel along the first optical path 160 in a second direction, wherein the second direction is reverse to the first direction.

*Measuring device, three-step dissociation*

A device for measuring the profile of the gas content of a gas mixture, wherein the device is arranged to use three step dissociation (Fig. 10), comprises

- A light beam source 310, arranged to emit a light beam 170 comprising photons having a beam wavelength ($\lambda_b$). And
- Means for generating a third last light pulse 710c. The third last light pulse 710c comprises photons 517 having a third pulse wavelength $\lambda_{p3}$. At least part of the photons 517 transform at least part of (i) gas compound 510 atoms, molecules, ions, or radicals or (ii) pre-excited gas compound 510b atoms, molecules, ions, or radicals on the first optical path 160 to third part 530 atoms, molecules, ions, or radicals and optionally to another part 525. And
- Means for generating a second last light pulse 710b. The second last light pulse 710b comprises photons 516 having a second pulse wavelength $\lambda_{p2}$. At least part of the photons 516 transform at least part of (i) the third part 530 atoms, molecules, ions, or radicals or (ii) pre-excited third part 530 atoms, molecules, ions, or radicals to fifth part 534 atoms, molecules, ions, or radicals and optionally to another part 532. And

- A first light pulse source 700a. The first light pulse source 700a is arranged to generate the last light pulse 710a comprising photons 515 having a first pulse wavelength $\lambda_{p1}$. At least part of the photons 515 transforms at least part of (i) the fifth part 534 atoms, molecules, ions, or radicals or (ii) pre-excited fifth part 534 atoms, molecules, ions, or radicals to first part 520 atoms, molecules, ions, or radicals, and optionally to another part 536. And
- Means for guiding at least part of the light beam 170 to the first optical path 160 such that at least part of the photons of the light beam 170 travel in a first direction. And
- Means for guiding at least part of the last light pulse 710, 710a or another light pulse 710b, 710c to the first optical path 160, such that the photons 515, 515b of the last light pulse 710, 710a or the photons 516, 517 of the another light pulse 710b, 710c travel in a second direction. And
- A photodetector 320 arranged to detect a first profile $I_k(t)$ indicative of the of the intensity of the attenuated light beam 175 as function of time.

As discussed above for the one-step transformation and two-step transformations, preferably the device comprises a light beam source having a tunable wavelength. In this way, the wavelength of the light beam can be accurately selected.

The means for guiding at least part of the last light pulse 710, 710a or another light pulse 710b, 710c to the first optical path 160, such that the photons 515, 515b of the last light pulse 710, 710a or the photons 516, 517 of the another light pulse 710b, 710c travel in a second direction may comprise an optical element or an arrangement of optical elements. These optical elements may comprise at least one of waveguides, reflectors (e.g. a dichroic mirror/filter), and deflectors.

The means for generating the second last light pulse 710b and/or the third last light pulse 710c may comprise one of

- a light pulse source and
- a light pulse divider and a light pulse delayer.

E.g. a light pulse source, as discussed in connection with the first light pulse source, may be used.

The light beam source is preferably arranged to generate an essentially monochromatic and essentially coherent light beam. The light pulse source is preferably arranged to generate an essentially monochromatic and essentially coherent last light pulse. The means for generating the second last light pulse is preferably arranged to generate an essentially monochromatic and essentially coherent second last light pulse. The means for generating the third last light pulse is preferably arranged to generate an essentially monochromatic and essentially coherent third last light pulse.

The sizes of the light pulses is preferably selected such that third last light pulse 710c has a greater cross section then the second last light pulse 710b. Moreover, a fourth optical path (of the third last light pulse) and the third optical path 810 (of the second last light pulse) are preferably essentially parallel and co-centric in the meaning discussed above. Therefore, the volume of the third optical path 810 is preferably comprised in volume of the fourth optical path. I.e. the fourth optical path is greater in diameter than the third optical path.

Furthermore, the size of the second last light pulse 710b is preferably selected such that second last light pulse 710b has a greater cross section then the last light pulse 710a. Moreover, the third optical path 810 (of the second last light pulse) and the second optical path 800 (of the last light pulse) are preferably essentially parallel and co-centric in the meaning discussed above. Therefore, the volume of the second optical path 800 is preferably comprised in volume of the third optical path 810. I.e. the third optical path is greater in diameter than the second optical path.

Still further, the size of the last light pulse 710a is preferably selected such that last light pulse 710a has greater cross section than the light beam 170. Moreover, the second optical path 800 (of the last light pulse) and the first optical path 160 (of the light beam) are preferably essentially parallel and co-centric in the meaning discussed above. Therefore, the volume of the first optical path 160 is preferably comprised in volume of the second optical path 800. I.e. the second optical path is greater in diameter than the first optical path.

The preferable size of the light beam 170 has been discussed above.

*Other features*

The device 990 may comprise an integrated light source. The integrated light source comprises at least two of: the light beam source 310, the third light pulse source 700c, the second light pulse source 700b, the first light pulse source 700a, and the light pulse source 700. The integrated light source may be arranged to emit light such that the optical paths are essentially parallel. At least none of the light beam and the light pulses may be guided using reflectors inside the integrated light source. In addition, at least none of the light beam and the light pulses may be guided using at least one optical fiber inside the integrated light source.

The device 990 may be integrated with a thermal device such as a boiler or a gasifier or a torrefaction reactor or a pyrolysis reactor. Thus the profile of the content of a gas compound emitted by the thermal device, e.g. the profile of the content of potassium chloride in the flue gases, may be measured. The measurement may be made *in situ*. It is evident that a device of any of the figures 5a, 7a, 7b, 7c, 7e, 9a, 9b, 9c, or a device arranged to use three light pulses to dissociate a gas molecule may be integrated with such a thermal device. Evidently, the light beam and the light pulse may travel from one wall on the thermal device to another wall as shown in the figures.

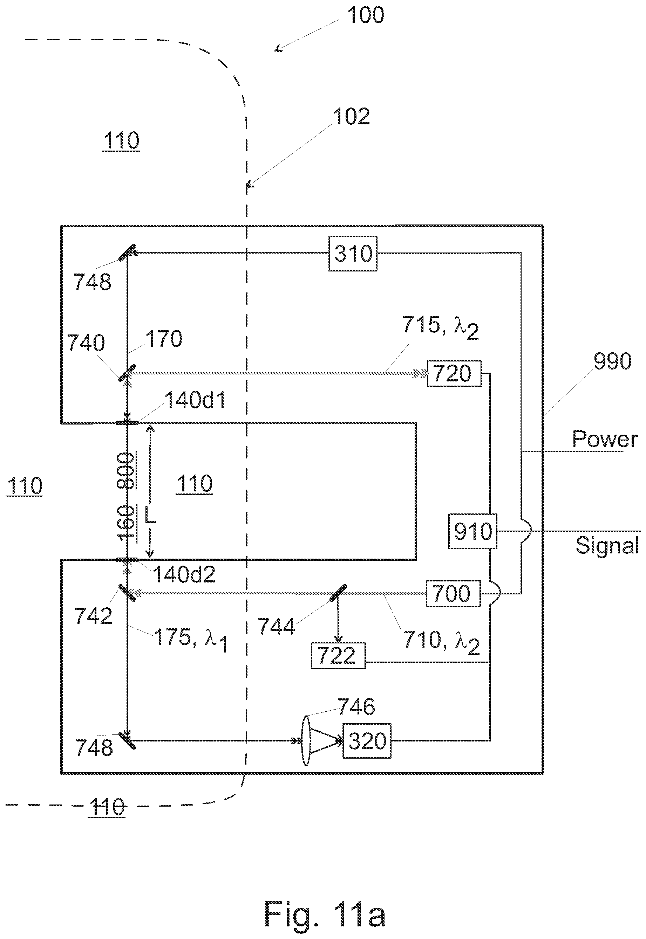

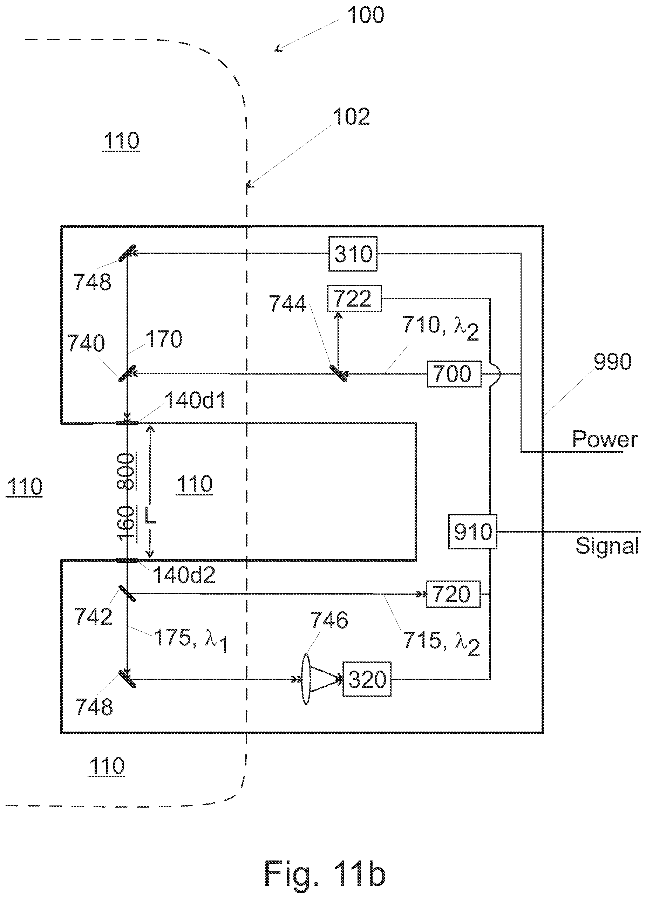

Moreover, the device 990 may be operated from a single wall of the thermal device, as shown in Figs. 11 a and 11b. In Fig. 11 a a device 990 for measuring the profile of the content of a gas compound is shown. A part of the device is located inside a thermal device 100. A wall 102 of the thermal device 100 is shown in the figure. The wall separates the interior of the thermal device from the exterior of the thermal device. The space 110, through which the optical paths 160, 800 run, is located in the interior of the device. It is noted that the profile of the content of the gas compound becomes measured from the optical path 160.

Fig. 11b shows a device 990 for measuring the oxygen content a gas mixture, wherein the gas mixture comprises a gas compound comprising potassium. Notice, that in this case the beam 170 and the pulse 710 propagate in the same direction. However, the oxygen content can be measured also with the device of Fig. 11a, as the method is not sensitive to the mutual orientation of the beam and the pulse. A part of the device is located inside a thermal device. A wall 102 of the device is shown in the figure. The wall separates the interior of the thermal device from the exterior of the thermal device. The space 110, through which the optical paths 160, 800 run, is located in the interior of the device. It is noted that the oxygen content becomes measured from the optical path 160.

Figure 12 shows, in a side view, an embodiment of a thermal device 100. The thermal device of Fig. 12 is a boiler. The device 990 for measuring the gas content may be integrated with the boiler. The device 990 may be integrated e.g. such that the boiler comprises at least one optical inlet 130. The boiler may comprise at least one optical outlet 135 (cf. Figs. 13a-13d).

The boiler of Fig. 12 comprises the walls 102. The walls 102 separate the interior of the boiler and the exterior of the boiler. Therefore, also the ceiling and the floor are considered walls 102. In the interior of the boiler the space 110 is formed. The space 110 may comprise e.g. a combustion space 120, a flue gas channel 122, and/or a chimney 124. The boiler comprises heat exchangers 150 located in the space 110. A heat exchanger 150 may be e.g. a superheater device, an economizer, an air pre-heater, or a feed-water pre-heater. The boiler comprises, in at least one wall 102, at least one optical inlet 130, such as a window 140 or a hole 132 (Figs. 13a to 13d), for the optical measurements. A window 140 is transparent so that light can propagate through the window. Preferably the light of the measuring light beam is not significantly attenuated while travelling through the window. The boiler may comprise at least one optical outlet 135, such as a window 140 or a hole 132. In case a hole 132 is used as an optical inlet, air or other gas may be blown through the hole 132 into the boiler in order to retain the flue gases in the boiler.

In a similar manner the device 990 may be integrated with a gasification reactor. The gasification reactor is arranged to gasify biomass to synthesis gas.

In a similar manner the device 990 may be integrated with a pyrolysis reactor. The pyrolysis reactor is arranged to thermochemically decompose organic material at elevated temperatures.

In a similar manner the device 990 may be integrated with a torrefaction reactor. The torrefaction reactor is arranged to thermochemically extract volatile components from organic material at elevated temperatures (lower temperatures than in the pyrolysis reactor).

Figures 13a to 13f show some possibilities for arranging the optical path into a channel or a vessel, e.g. into a flue gas channel. Referring to Figs. 13a to 13f, the gas mixture may be located in a space 110. The space 110 may be limited by the walls 102 (e.g. walls 102a1, 102a2, 102b1, 102b2, 102c, 102d1, 102d2). In the method, the space 110 is not necessarily limited by any walls. In this case, the content of the gas compound from ambient may be measured. Moreover, the device may be installed to the ambient and can be used as such. However, often the gas mixture is located in a channel or a vessel limited by at least one wall 102 (e.g. a wall of a tube).

The term "wall" is used only to describe an element separating the space 110 from the exterior. At least one wall 102 comprises at least one optical inlet 130, such as a window 140 or a hole 132, for optical measurements. In Fig. 13a, a window 140 is transparent so that light can propagate through the window. Preferably the light of the measuring light beam 170 (170a, 170b, 170c) is not significantly attenuated while travelling through the window. A wall 102 may comprise at least one optical outlet 135, such as a window 140 or a hole 132. In Fig. 1a, the window 140a1 is also marked with the reference number 130 for optical inlet. In Fig. 1a, the window 140a2 is also marked with the reference number 135 for optical outlet. In case a hole 132 (Fig. 13d; 132d1, 132d2) is used as an optical inlet, air or other gas may be blown through the hole 132 into the space 110 in order to retain the gas mixture in the space 110. In the method or with the device, a light beam 170 (170a, 170b, 170c, 170d) is generated and guided through the optical inlet to the space 110. The path the light beam travels forms the first optical path 160. An optical path may also be generated without any wall, in which case an optical inlet or an optical outlet is not needed.

Referring to Figs. 13a-13f, in between an optical inlet 130 and an optical outlet 135, in the space 110, a first optical path 160 is formed. When the light beam 170 enters the optical inlet 130, the light beam travels along the first optical path 160 to the optical outlet 135. In Figs. 13a-13c a window 140a1, 140b1 or 140c1 serves as the optical inlet 130 and another window 140a2, 140b2, 140c2 serves as the optical outlet 135. In Fig. 13d, the hole 132d1 serves as the optical inlet 130, and the hole 132d2 serves as the optical outlet 135.

A preferred embodiment for the first optical path 160a is shown in Fig. 13a, wherein a first wall 102a1 comprises a first window 140a1, a second wall 102a2 comprises a second window 140a2, the first wall 102a1 is essentially parallel to the second wall 102a2, and the optical path 160a is essentially perpendicular to the first window 140a1 and the second window 140a2. The windows may be essentially parallel to the wall. The wall 102 may be curved. In a preferred embodiment, the windows 140a1 and 140a2 are essentially planar. In this embodiment, and also in the embodiments of Fig. 13c and 13d, the optical path 160 runs from one wall 102a1 to an opposite wall 102a2. Therefore, the profile of the content of the gas compound becomes measured from the whole length (or width or height) of the channel limited by the walls 102. Two devices having mutually perpendicular optical paths may be used to measure the profile in two mutually perpendicular directions, as shown in Fig. 13e. Several devices having mutually parallel optical paths, wherein the optical paths are located in the same plane, may be used to measure a two-dimensional profile of the content of the gas compound, as shown in Fig. 13f.

Other embodiments are shown in Figs. 13b to 13d. In Fig. 13b, a light beam 170b enters and penetrates the first window 140b1, travels along a first optical path 160b to the second window 140b2, enters and penetrates the second window 140b2, and exits the second window as the attenuated light beam 175b. The first window 140b1 is arranged in an angle with respect to the second window 140b2. In the Fig. 13b, the angle is essentially a right angle. However, also other angles are possible.

In Fig. 13c, a light beam 170c enters and penetrates the first window 140c1, travels along a first part 160c1 of the first optical path to a reflector 145. A part of the wall 102 may act as the reflector 145. The reflector may reflect or scatter the light beam such that at least part of the light beam is guided to a second part 160c2 of the optical path. The reflected or scattered part of the light beam travels along a second part 160c2 of the first optical path to the second window 140c2, enters and penetrates the second window 140c2, and exits the second window as the attenuated light beam 175c. The first optical path comprises its parts 160c1 and 160c2. The first window 140c1 is arranged to a wall 102c, and the second window 140b2 is arranged to the same wall 102c. If a reflector 145 is used, a window 140 or a hole 132 may operate both as both the optical inlet 130 and the optical outlet 135 (cf. Fig. 7e). The same convention with the double and triple headed arrows in used in Fig. 13c as in the other figures, specifically in Fig. 7e.

In Fig. 13d, a light beam 170d penetrates a first hole 132d1 (the optical inlet 130), travels along the first optical path 160d to a second hole 132d2 (the optical outlet 135), and exits the second hole 132d2 as the attenuated light beam 175d. A hole 132 may be used instead of a window also in the embodiments shown in the Figs. 13a to 13c and 13e and 13f. The walls 102 in Fig. 13d are arranged as discussed in the context of Fig. 13a.

In Figs. 13a-13d, the first optical path 160 is located optically between the optical inlet 130 and the optical outlet 135. In case a reflector 145 is used, the optical path is not necessarily physically between the optical inlet and the optical outlet, as illustrated in Fig. 13c. The wording "optically between" means that light entering the optical inlet may travel along the first optical path to the optical outlet (or the optical inlet, if a hole or a window acts both as the optical inlet and as the optical outlet, Fig. 7e).

**Claims**

1. A method for measuring the spatial profile of the content of a gas compound from a gas mixture, the method comprising

    - generating a light beam (170), wherein the light beam (170) comprises photons having a beam wavelength ($\lambda_b$), and
    - guiding at least part of the light beam (170) to a first optical path (160) such that at least part of the photons of the light beam (170) travel the first optical path (160) in a first direction, wherein
    - the first optical path (160) runs through a space (110) containing the gas mixture comprising the gas compound, whereby the light beam (170) is attenuated to an attenuated light beam (175),

    **characterized by**

    - generating at least a last light pulse (710, 710a), wherein the last light pulse (710, 710a) comprises photons (515, 515b) having a first pulse wavelength ($\lambda_{p1}$),
    - dividing, using the last light pulse (710, 710a) or a sequence of light pulses (710, 710a, 710b, 710c), at least part of the gas compound (510) atoms, molecules, ions, or radicals, to a first part (520) and a second part (525), wherein the sequence of light pulses (710, 710a, 710b, 710c) comprises at least the last light pulse (710, 710a),
    - selecting the beam wavelength ($\lambda_b$) such that the beam wavelength ($\lambda_b$) corresponds to an absorption profile of the first part (520),
    - guiding at least part of the last light pulse (710, 710a) or at least part of a light pulse (710, 710a, 710b, 710c) of the sequence of light pulses to the first optical path (160), such that the photons (515, 515b) of the guided part of the light pulse travel in a second direction, wherein
    - the second direction is reverse to the first direction,
    - detecting a first profile ($I_k(t)$) indicative of the intensity of the attenuated light beam (175) as function of time, and
    - determining, using the first profile ($I_k(t)$) indicative of the intensity of the attenuated light beam (175) as function of time, the spatial profile ($\xi_G(x)$) of content of the gas compound on the first optical path (160).

2. The method of claim 1, **characterized by**

    - dividing at least part of (i) the gas compound (510) atoms, molecules, ions, or radicals or (ii) pre-excited gas compound (510b) atoms, molecules, ions, or radicals on the first optical path (160) to first part (520) atoms, molecules, ions, or radicals, and the second part (525) using the last light pulse (710).

3. The method of claim 1 or 2, **characterized in that**

  - the last light pulse (710, 710a) comprises photons having the first pulse wavelength ($\lambda_{p1}$), wherein
  - first pulse wavelength ($\lambda_{p1}$) is at most 430 nm.

4. The method of any of the claims 1 to 3, **characterized in that** at least one of

  - the last light pulse (710, 710a), and
  - another light pulse (710b, 710c)

  is essentially coherent and essentially monochromatic.

5. The method of any of the claims 1 to 4, **characterized in that**

  - the light beam (170) is monochromatic or essentially monochromatic.

6. The method of any of the claims 1 to 5, **characterized in that**

  - the gas compound is potassium chloride (KCl),
  - the first pulse wavelength ($\lambda_{p1}$) is less than or equal to 320 nm, preferably 266 nm, and
  - the beam wavelength ($\lambda_b$) corresponds to an absorption peak of potassium, e.g. 766.515 nm $\pm$ 0.01 nm, about 770 nm, or about 404 nm.

7. A device (990) for measuring the spatial profile of the content of a gas compound from a gas mixture, the device comprising

  - a light beam source (310), arranged to generate a light beam (170) comprising photons having a beam wavelength ($\lambda_b$) and
  - a photodetector (320), wherein
  - a first optical path (160) is arranged optically between the photodetector (320) and the light beam source (310),
  - a space (110), through which the first optical path (160) is arranged to run, is arranged to contain the gas mixture absorbing the light beam (170),
  - the light beam (170) is arranged to be attenuated to an attenuated light beam (175) by said absorption of the light beam (170), and the device comprises
  - means for guiding at least part of the light beam (170) to the first optical path (160) such that at least part of the photons of the light beam (170) travel in a first direction,

  **characterized in that** the device (990) comprises

  - at least a first light pulse source (700, 700a), wherein
  - the first light pulse source (700, 700a) is arranged to generate a last light pulse (710, 710a) comprising photons (515) having a first pulse wavelength ($\lambda_{p1}$), at least part of the photons (515) dividing at least part of (i) gas compound (510) atoms, molecules, ions, or radicals, (ii) pre-excited gas compound (510b) atoms, molecules, ions, or radicals, (iii) transformed parts (530, 534), or (iv) pre-excited transformed parts (530, 534) on the first optical path (160) to first part (520) atoms, molecules, ions, or radicals, and a second parts (525), whereby the light beam (170) is further attenuated to the attenuated light beam (175) by absorption to first part (520) atoms, molecules, ions, or radicals on the first optical path (160), wherein the transformed parts (530, 534) have optionally been produced from the gas compound (510) atoms, molecules, ions, or radicals by transformation using at least one another light pulse, wherein
  - the light beam source (310) is arranged to emit a light beam (170) comprising photons having a beam wavelength ($\lambda_b$) that corresponds to an absorption profile of the first part (520), and the device further comprises
  - means for guiding at least part of the last light pulse (710, 710a) or at least part of another light pulse (710b, 710c) to the first optical path (160), such that the photons (515, 515b) of the guided part of the last light pulse (710, 710a) or the photons (516,517) of the guided part of the another light pulse (710b, 710c) travel in a second direction, wherein

- the second direction is reverse to the first direction, and
- the photodetector (320) is arranged to detect a first profile ($I_k(t)$) indicative of the of the intensity of the attenuated light beam (175) as function of time, and
- the device (990) comprises a data processing unit (910) arranged to determine, using the first profile ($I_k(t)$) indicative of the of the intensity of the attenuated light beam (175) as function of time, the spatial profile of the gas compound content in the gas mixture on the first optical path (160).

8. The device of claim 7, **characterized in that**

- the first light pulse source (700, 700a), is arranged to generate the last light pulse (710, 710a) comprising photons (515) having a first pulse wavelength ($\lambda_{p1}$), at least part of the photons (515) dividing at least part of (i) gas compound (510) atoms, molecules, ions or radicals or (ii) pre-excited gas compound (510b) atoms, molecules, ions, or radicals on the first optical path (160) to the first part (520) atoms, molecules, ions, or radicals, and the second parts (525).

9. The device of claim 7 or 8, **characterized in that**

- the first light pulse source (700, 700a) is arranged to generate an essentially monochromatic and essentially coherent light pulse (710, 710a) or
- the device comprises means for generating an essentially monochromatic and essentially coherent light pulse (710b, 710c).

10. The device of the claim 9, **characterized in that**

- the wavelength ($\lambda_{p1}$, $\lambda_{p2}$, $\lambda_{p3}$) of the essentially monochromatic and essentially coherent light pulse (710, 710a, 710b, 710c) is at most 430 nm.

11. The device of any of the claims 7 to 10, **characterized in that**

- light beam source (310) is arranged to generate an essentially monochromatic and essentially coherent light beam (170).

12. The device of any of the claims 7 to 11, **characterized in that**

- the gas compound is potassium chloride (KCl),
- the first pulse wavelength ($\lambda_{p1}$) is less than or equal to 320 nm, preferably 266 nm, and
- the beam wavelength ($\lambda_b$) corresponds to an absorption peak of potassium, e.g. 766.515 nm $\pm$ 0.01 nm, about 770 nm, or about 404 nm.

13. A thermal device (100) comprising the device of any of the claims 7 to 12.

**Patentansprüche**

1. Verfahren zur Messung des räumlichen Profils des Gehalts einer Gasverbindung eines Gasgemischs, wobei das Verfahren Folgendes umfasst:

- Erzeugen eines Lichtstrahls (170), wobei der Lichtstrahl (170) Photonen mit einer Strahlwellenlänge ($\lambda_b$) umfasst, und
- Führen von zumindest einem Teil des Lichtstrahls (170) zu einem ersten Lichtweg (160) derart, dass zumindest ein Teil der Photonen des Lichtstrahls (170) sich auf dem ersten Lichtweg (160) in einer ersten Richtung bewegt, wobei
- der erste Lichtweg (160) durch einen Raum (110) verläuft, der das die Gasverbindung umfassende Gasgemisch enthält, wodurch der Lichtstrahl (170) zu einem abgeschwächten Lichtstrahl (175) abgeschwächt wird,

**gekennzeichnet durch**

- Erzeugen von zumindest einem letzten Lichtimpuls (710, 710a), wobei der letzte Lichtimpuls (710, 710a) Photonen (515, 515b) mit einer ersten Impulswellenlänge ($\lambda_{p1}$) umfasst,
- Aufteilen, unter Verwendung des letzten Lichtimpulses (710, 710a) oder einer Folge von Lichtimpulsen (710, 710a, 710b, 710c), von zumindest einem Teil der Atome, Moleküle, Ionen oder Reste der Gasverbindung (510) in einen ersten Teil (520) und einen zweiten Teil (525), wobei die Folge von Lichtimpulsen (710, 710a, 710b, 710c) zumindest den letzten Lichtimpuls (710, 710a) umfasst,
- Auswählen der Strahlwellenlänge ($\lambda_b$) derart, dass die Strahlwellenlänge ($\lambda_b$) einem Absorptionsprofil des ersten Teils (520) entspricht,
- Führen von zumindest einem Teil des letzten Lichtimpulses (710, 710a) oder von zumindest einem Teil eines Lichtimpulses (710, 710a, 710b, 710c) der Folge von Lichtimpulsen zum ersten Lichtweg (160) derart, dass die Photonen (515, 515b) des geführten Teils des Lichtimpulses sich in einer zweiten Richtung bewegen, wobei
- die zweite Richtung der ersten Richtung entgegengesetzt ist,
- Erfassen eines ersten Profils ($I_k(t)$), das die Intensität des abgeschwächten Lichtstrahls (175) als Funktion der Zeit angibt, und
- Ermitteln, unter Verwendung des ersten Profils ($I_k(t)$), das die Intensität des abgeschwächten Lichtstrahls (175) als Funktion der Zeit angibt, des räumlichen Profils ($\xi_G(x)$) des Gehalts der Gasverbindung im ersten Lichtweg (160).

2. Verfahren nach Anspruch 1, **gekennzeichnet durch**

- Aufteilen von zumindest einem Teil der (i) Atome, Moleküle, Ionen oder Reste der Gasverbindung (510) oder (ii) Atome, Moleküle, Ionen oder Reste der vorher angeregten Gasverbindung (510b) im ersten Lichtweg (160) in Atome, Moleküle, Ionen oder Reste des ersten Teils (520) und den zweiten Teil (525) unter Verwendung des letzten Lichtimpulses (710).

3. Verfahren nach Anspruch 1 oder 2, **dadurch gekennzeichnet, dass**

- der letzte Lichtimpuls (710, 710a) Photonen mit der ersten Impulswellenlänge ($\lambda_{p1}$) umfasst, wobei
- die erste Impulswellenlänge ($\lambda_{p1}$) höchstens 430 nm beträgt.

4. Verfahren nach irgendeinem der Ansprüche 1 bis 3, **dadurch gekennzeichnet, dass** mindestens einer von

- dem letzten Lichtimpuls (710, 710a) und
- einem anderen Lichtimpuls (710b, 710c)

im Wesentlichen kohärent und im Wesentlichen monochromatisch ist.

5. Verfahren nach irgendeinem der Ansprüche 1 bis 4, **dadurch gekennzeichnet, dass**

- der Lichtstrahl (170) monochromatisch oder im Wesentlichen monochromatisch ist.

6. Verfahren nach irgendeinem der Ansprüche 1 bis 5, **dadurch gekennzeichnet, dass**

- die Gasverbindung Kaliumchlorid (KCl) ist,
- die erste Impulswellenlänge ($\lambda_{p1}$) kleiner als oder gleich 320 nm, vorzugsweise 266 nm, ist und
- die Strahlwellenlänge ($\lambda_b$) einem Absorptionsmaximum von Kalium, zum Beispiel 766,515 nm $\pm$ 0,01 nm, ungefähr 770 nm oder ungefähr 404 nm entspricht.

7. Vorrichtung (990) zur Messung des räumlichen Profils des Gehalts einer Gasverbindung eines Gasgemischs, wobei die Vorrichtung Folgendes umfasst:

- eine Lichtstrahlquelle (310), die derart angeordnet ist, dass sie einen Lichtstrahl (170) erzeugt, der Photonen mit einer Strahlwellenlänge ($\lambda_b$) umfasst, und
- einen Photodetektor (320), wobei
- ein erster Lichtweg (160) optisch zwischen dem Photodetektor (320) und der Lichtstrahlquelle (310) angeordnet ist,
- ein Raum (110), durch welchen der erste Lichtweg (160) verlaufen gelassen wird, derart angeordnet ist, dass er das Gasgemisch enthält, das den Lichtstrahl (170) absorbiert,
- der Lichtstrahl (170) derart angeordnet ist, dass er durch die Absorption des Lichtstrahls (170) zu einem abgeschwächten Lichtstrahl (175) abgeschwächt wird, und die Vorrichtung Folgendes umfasst:
- Mittel zum Führen von zumindest einem Teil des Lichtstrahls (170) zum ersten Lichtweg (160) derart, dass zumindest ein Teil der Photonen des Lichtstrahls (170) sich in einer ersten Richtung bewegt,

**dadurch gekennzeichnet, dass** die Vorrichtung (990) Folgendes umfasst:

- zumindest eine erste Lichtimpulsquelle (700, 700a), wobei
- die erste Lichtimpulsquelle (700, 700a) derart angeordnet ist, dass sie einen letzten Lichtimpuls (710, 710a) erzeugt, der Photonen (515) mit einer ersten Impulswellenlänge ($\lambda_{p1}$) umfasst, wobei zumindest ein Teil der Photonen (515) zumindest einen Teil der (i) Atome, Moleküle, Ionen oder Reste der Gasverbindung (510), (ii) Atome, Moleküle, Ionen oder Reste der vorher angeregten Gasverbindung (510b), (iii) umgewandelten Teile (530, 534) oder (iv) vorher angeregten umgewandelten Teile (530, 534) im ersten Lichtweg (160) in Atome, Moleküle, Ionen oder Reste eines ersten Teils (520) und zweite Teile (525) aufteilt, wodurch der Lichtstrahl (170) durch Absorption an Atomen, Molekülen, Ionen oder Resten des ersten Teils (520) im ersten Lichtweg (160) weiter zum abgeschwächten Lichtstrahl (175) abgeschwächt wird, wobei die umgewandelten Teile (530, 534) gegebenenfalls durch eine Umwandlung unter Verwendung mindestens eines anderen Lichtimpulses aus den Atomen, Molekülen, Ionen oder Resten der Gasverbindung (510) gebildet wurden, wobei
- die Lichtstrahlquelle (310) derart angeordnet ist, dass sie einen Lichtstrahl (170) emittiert, der Photonen mit einer Strahlwellenlänge ($\lambda_b$) umfasst, die einem Absorptionsprofil des ersten Teils (520) entspricht, und die Vorrichtung ferner Folgendes umfasst:
- Mittel zum Führen von zumindest einem Teil des letzten Lichtimpulses (710, 710a) oder von zumindest einem Teil eines anderen Lichtimpulses (710b, 710c) zum ersten Lichtweg (160) derart, dass die Photonen (515, 515b) des geführten Teils des letzten Lichtimpulses (710, 710a) oder die Photonen (516, 517) des geführten Teils des anderen Lichtimpulses (710b, 710c) sich in einer zweiten Richtung bewegen, wobei
- die zweite Richtung der ersten Richtung entgegengesetzt ist und
- der Photodetektor (320) derart angeordnet ist, dass er ein erstes Profil ($I_k(t)$) erfasst, das die Intensität des abgeschwächten Lichtstrahls (175) als Funktion der Zeit angibt, und
- die Vorrichtung (990) eine Datenverarbeitungseinheit (910) umfasst, die derart angeordnet ist, dass sie unter Verwendung des ersten Profils ($I_k(t)$), das die Intensität des abgeschwächten Lichtstrahls (175) als Funktion der Zeit angibt, das räumliche Profil des Gasverbindungsgehalts in dem Gasgemisch im ersten Lichtweg (160) ermittelt.

8. Vorrichtung nach Anspruch 7, **dadurch gekennzeichnet, dass**

- die erste Lichtimpulsquelle (700, 700a) derart angeordnet ist, dass sie den letzten Lichtimpuls (710, 710a) erzeugt, der Photonen (515) mit einer ersten Impulswellenlänge ($\lambda_{p1}$) umfasst, wobei zumindest ein Teil der Photonen (515) zumindest einen Teil der (i) Atome, Moleküle, Ionen oder Reste der Gasverbindung (510) oder (ii) Atome, Moleküle, Ionen oder Reste der vorher angeregten Gasverbindung (510b) im ersten Lichtweg (160) in Atome, Moleküle, Ionen oder Reste des ersten Teils (520) und die zweiten Teile (525) aufteilt.

9. Vorrichtung nach Anspruch 7 oder 8, **dadurch gekennzeichnet, dass**

- die erste Lichtimpulsquelle (700, 700a) derart angeordnet ist, dass sie einen im Wesentlichen monochromatischen und im Wesentlichen kohärenten Lichtimpuls (710, 710a) erzeugt, oder
- die Vorrichtung Mittel zur Erzeugung eines im Wesentlichen monochromatischen und im Wesentlichen kohärenten Lichtimpulses (710b, 710c) umfasst.

10. Vorrichtung nach Anspruch 9, **dadurch gekennzeichnet, dass**

- die Wellenlänge ($\lambda_{p1}$, $\lambda_{p2}$, $\lambda_{p3}$) des im Wesentlichen monochromatischen und im Wesentlichen kohärenten Lichtimpulses (710, 710a, 710b, 710c) höchstens 430 nm beträgt.

11. Vorrichtung nach irgendeinem der Ansprüche 7 bis 10, **dadurch gekennzeichnet, dass**

- die Lichtstrahlquelle (310) derart angeordnet ist, dass sie einen im Wesentlichen monochromatischen und im Wesentlichen kohärenten Lichtstrahl (170) erzeugt.

12. Vorrichtung nach irgendeinem der Ansprüche 7 bis 11, **dadurch gekennzeichnet, dass**

- die Gasverbindung Kaliumchlorid (KCl) ist,
- die erste Impulswellenlänge ($\lambda_{p1}$) kleiner als oder gleich 320 nm, vorzugsweise 266 nm, ist und
- die Strahlwellenlänge ($\lambda_b$) einem Absorptionsmaximum von Kalium, zum Beispiel 766,515 nm $\pm$ 0,01 nm, ungefähr 770 nm oder ungefähr 404 nm entspricht.

13. Thermische Vorrichtung (100) umfassend die Vorrichtung nach irgendeinem der Ansprüche 7 bis 12.

**Revendications**

1. Méthode pour mesurer le profil spatial de la teneur d'un composé gazeux à partir d'un mélange gazeux, la méthode comprenant

    - la génération d'un faisceau lumineux (170), le faisceau lumineux (170) comprenant des photons ayant une longueur d'onde de faisceau ($\lambda_b$), et
    - le fait de guider au moins une partie du faisceau lumineux (170) jusqu'à un premier trajet optique (160) de telle sorte qu'au moins une partie des photons du faisceau lumineux (170) parcourent le premier trajet optique (160) dans une première direction, dans laquelle
    - le premier trajet optique (160) traverse un espace (110) contenant le mélange gazeux comprenant le composé gazeux, par quel moyen le faisceau lumineux (170) est atténué en un faisceau lumineux atténué (175),

    **caractérisée par**

    - la génération d'au moins une dernière impulsion lumineuse (710, 710a), la dernière impulsion lumineuse (710, 710a) comprenant des photons (515, 515b) ayant une première longueur d'onde d'impulsion ($\lambda_{p1}$),
    - le fait de diviser, à l'aide de la dernière impulsion lumineuse (710, 710a) ou d'une séquence d'impulsions lumineuses (710, 710a, 710b, 710c), au moins une partie des atomes, molécules, ions, ou radicaux du composé gazeux (510) en une première partie (520) et une deuxième partie (525), la séquence d'impulsions lumineuses (710, 710a, 710b, 710c) comprenant au moins la dernière impulsion lumineuse (710, 710a),
    - le fait de sélectionner la longueur d'onde de faisceau ($\lambda_b$) de telle sorte que la longueur d'onde de faisceau ($\lambda_b$) corresponde à un profil d'absorption de la première partie (520),
    - le fait de guider au moins une partie de la dernière impulsion lumineuse (710, 710a) ou au moins une partie d'une impulsion lumineuse (710, 710a, 710b, 710c) de la séquence d'impulsions lumineuses jusqu'au premier trajet optique (160), de telle sorte que les photons (515, 515b) de la partie guidée de l'impulsion lumineuse se déplacent dans une deuxième direction, dans laquelle
    - la deuxième direction est inversée par rapport à la première direction,
    - le fait de détecter un premier profil ($I_k(t)$) reflétant l'intensité du faisceau lumineux atténué (175) en fonction du temps, et
    - le fait de déterminer, à l'aide du premier profil ($I_k(t)$) reflétant l'intensité du faisceau lumineux atténué (175) en fonction du temps, le profil spatial ($\xi_G(x)$) de la teneur du composé gazeux sur le premier trajet optique (160).

2. Méthode selon la revendication 1, **caractérisée par**

    - le fait de diviser au moins une partie (i) des atomes, molécules, ions, ou radicaux du composé gazeux (510) ou (ii) des atomes, molécules, ions, ou radicaux du composé gazeux préexcité (510b) sur le premier trajet optique (160) en atomes, molécules, ions, ou radicaux de la première partie (520), et la deuxième partie (525) à l'aide de la dernière impulsion lumineuse (710).

3. Méthode selon la revendication 1 ou la revendication 2, **caractérisée en ce que**

    - la dernière impulsion lumineuse (710, 710a) comprend des photons ayant la première longueur d'onde d'impulsion ($\lambda_{p1}$), dans laquelle
    - la première longueur d'onde d'impulsion ($\lambda_{p1}$) est au plus de 430 nm.

4. Méthode selon l'une quelconque des revendications 1 à 3, **caractérisée en ce qu'**au moins une impulsion lumineuse parmi

    - la dernière impulsion lumineuse (710, 710a), et

- une autre impulsion lumineuse (710b, 710c)

est essentiellement cohérente et essentiellement monochromatique.

5. Méthode selon l'une quelconque des revendications 1 à 4, **caractérisée en ce que**

- le faisceau lumineux (170) est monochromatique ou essentiellement monochromatique.

6. Méthode selon l'une quelconque des revendications 1 à 5, **caractérisée en ce que**

- le composé gazeux est le chlorure de potassium (KCl),
- la première longueur d'onde d'impulsion ($\lambda_{p1}$) est inférieure ou égale à 320 nm, de préférence 266 nm, et
- la longueur d'onde de faisceau ($\lambda_b$) correspond à un pic d'absorption du potassium, par exemple 766,515 nm $\pm$ 0,01 nm, environ 770 nm, ou environ 404 nm.

7. Dispositif (990) pour mesurer le profil spatial de la teneur d'un composé gazeux à partir d'un mélange gazeux, le dispositif comprenant

- une source de faisceau lumineux (310), agencée pour générer un faisceau lumineux (170) comprenant des photons ayant une longueur d'onde de faisceau ($\lambda_b$) et
- un photodétecteur (320), dans lequel
- un premier trajet optique (160) est agencé optiquement entre le photodétecteur (320) et la source de faisceau lumineux (310),
- un espace (110), que le premier trajet optique (160) est agencé pour traverser, est agencé pour contenir le mélange gazeux absorbant le faisceau lumineux (170),
- le faisceau lumineux (170) est agencé pour être atténué en un faisceau lumineux atténué (175) par ladite absorption du faisceau lumineux (170), et le dispositif comprenant
- des moyens pour guider au moins une partie du faisceau lumineux (170) jusqu'au premier trajet optique (160) de telle sorte qu'au moins une partie des photons du faisceau lumineux (170) se déplacent dans une première direction,

**caractérisé en ce que** le dispositif (990) comprend

- au moins une première source d'impulsion lumineuse (700, 700a), dans lequel
- la première source d'impulsion lumineuse (700, 700a) est agencée pour générer une dernière impulsion lumineuse (710, 710a) comprenant des photons (515) ayant une première longueur d'onde d'impulsion ($\lambda_{p1}$), au moins une partie des photons (515) divisant au moins une partie (i) des atomes, molécules, ions, ou radicaux du composé gazeux (510), (ii) des atomes, molécules, ions, ou radicaux du composé gazeux préexcité (510b), (iii) des parties transformées (530, 534), ou (iv) des parties transformées préexcitées (530, 534) sur le premier trajet optique (160) en atomes, molécules, ions, ou radicaux de la première partie (520), et une deuxième partie (525), par quel moyen le faisceau lumineux (170) est atténué plus avant en le faisceau lumineux atténué (175) par absorption par rapport aux atomes, molécules, ions, ou radicaux de la première partie (520) sur le premier trajet optique (160), les parties transformées (530, 534) ayant facultativement été produites à partir des atomes, molécules, ions, ou radicaux du composé gazeux (510) par transformation à l'aide d'au moins une autre impulsion lumineuse, dans lequel
- la source de faisceau lumineux (310) est agencée pour émettre un faisceau lumineux (170) comprenant des photons ayant une longueur d'onde de faisceau ($\lambda_b$) qui correspond à un profil d'absorption de la première partie (520), et le dispositif comprenant en outre
- des moyens pour guider au moins une partie de la dernière impulsion lumineuse (710, 710a) ou au moins une partie d'une autre impulsion lumineuse (710b, 710c) jusqu'au premier trajet optique (160), de telle sorte que les photons (515, 515b) de la partie guidée de la dernière impulsion lumineuse (710, 710a) ou les photons (516, 517) de la partie guidée de l'autre impulsion lumineuse (710b, 710c) se déplacent dans une deuxième direction, dans lequel
- la deuxième direction est inversée par rapport à la première direction, et
- le photodétecteur (320) est agencé pour détecter un premier profil ($I_k(t)$) reflétant l'intensité du faisceau lumineux atténué (175) en fonction du temps, et
- le dispositif (990) comprenant une unité de traitement de données (910) agencée pour déterminer, à l'aide du premier profil ($I_k(t)$) reflétant l'intensité du faisceau lumineux atténué (175) en fonction du temps, le profil spatial de la teneur du composé gazeux dans le mélange gazeux sur le premier trajet optique (160).

8. Dispositif selon la revendication 7, **caractérisé en ce que**

   - la première source d'impulsion lumineuse (700, 700a) est agencée pour générer la dernière impulsion lumineuse (710, 710a) comprenant des photons (515) ayant une première longueur d'onde d'impulsion ($\lambda_{p1}$), au moins une partie des photons (515) divisant au moins une partie (i) des atomes, molécules, ions ou radicaux du composé gazeux (510) ou (ii) des atomes, molécules, ions, ou radicaux du composé gazeux préexcité (510b) sur le premier trajet optique (160) en atomes, molécules, ions, ou radicaux de la première partie (520), et la deuxième partie (525).

9. Dispositif selon la revendication 7 ou la revendication 8, **caractérisé en ce que**

   - la première source d'impulsion lumineuse (700, 700a) est agencée pour générer une impulsion lumineuse essentiellement monochromatique et essentiellement cohérente (710, 710a) ou
   - le dispositif comprend des moyens pour générer une impulsion lumineuse essentiellement monochromatique et essentiellement cohérente (710b, 710c).

10. Dispositif selon la revendication 9, **caractérisé en ce que**

    - la longueur d'onde ($\lambda_{p1}$, $\lambda_{p2}$, $\lambda_{p3}$) de l'impulsion lumineuse essentiellement monochromatique et essentiellement cohérente (710, 710a, 710b, 710c) est au plus de 430 nm.

11. Dispositif selon l'une quelconque des revendications 7 à 10, **caractérisé en ce que**

    - la source de faisceau lumineux (310) est agencée pour engendrer un faisceau lumineux essentiellement monochromatique et essentiellement cohérent (170).

12. Dispositif selon l'une quelconque des revendications 7 à 11, **caractérisé en ce que**

    - le composé gazeux est le chlorure de potassium (KCl),
    - la première longueur d'onde d'impulsion ($\lambda_{p1}$) est inférieure ou égale à 320 nm, de préférence 266 nm, et
    - la longueur d'onde de faisceau ($\lambda_b$) correspond à un pic d'absorption du potassium, par exemple 766,515 nm $\pm$ 0,01 nm, environ 770 nm, ou environ 404 nm.

13. Dispositif thermique (100) comprenant le dispositif selon l'une quelconque des revendications 7 à 12.

520

110

310    170                              175    320

160

## Fig. 1a

710    110    525

310    170                              175    320

510    520

160

## Fig. 1b

110

310    170                              175    320

160

## Fig. 1c

Fig. 2a

Fig. 2b

Fig. 2c

Fig. 2d

Fig. 3a

Fig. 3b

Fig. 4

Fig. 6

Fig. 5a

Fig. 5b

Fig. 5c

$dI_K(t)/dt \propto \xi_{KCl}(x)$

990

310    170, $\lambda_b$

740

102    140d1    720

110    800    715, $\lambda_{p1}$

160

L    722

722    710, $\lambda_{p1}$

102    700

140d2

742    175, $\lambda_b$    744

Fig. 7a    746

320    910

990

310    170, $\lambda_b$    744

740    700

102    140d1    710, $\lambda_{p1}$

110    800

160    722

L

102    715, $\lambda_{p1}$

140d2    720

742    175, $\lambda_b$

Fig. 7b    746

320    910

990

310

170, $\lambda_b$

102   140d1

110   160   710, $\lambda_{p1}$

L

102   140d2   700

175, $\lambda_b$

746

320   910

Fig. 7c

990

740   720

715, $\lambda_{p1}$

102   140d1   700

110   160, 800   710, $\lambda_{p1}$

L

722   710, $\lambda_{p1}$

715   700

102   140d2   746   744

320   910

Fig. 7d

744  700

710, $\lambda_{p1}$

722

740

720

715, $\lambda_{p1}$

310

102b

102a  110

170, $\lambda_b$

132  800a  800b  145

320

160a  160b

742  130,  102a

Fig. 7e

135

175, $\lambda_b$

Fig. 8a

Fig. 8b

Fig. 9a

990

310

170, $\lambda_b$

715b, $\lambda_{p2}$

720b

744a

700a

710a, $\lambda_{p1}$

722a

102

140d1

110

710b

710a

$L$

160

102

140d2

715a, $\lambda_{p1}$

720a

742a

744b

700b

710b, $\lambda_{p2}$

722b

175, $\lambda_b$

746

320

910

Fig. 9b

Fig. 9c

Fig. 9d

Fig. 9e

Fig. 10

Fig. 11a

Fig. 11b

Fig. 12

Fig. 13e

Fig. 13f

Fig. 13a

Fig. 13b

Fig. 13c

Fig. 13d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6384903 B

**Non-patent literature cited in the description**

- *Chem. Phys. Lett.,* vol. 215 (1-3), 228